(19) Europäisches Patentamt / European Patent Office / Office européen des brevets

(11) **EP 4 770 243 A1**

(12) **EUROPEAN PATENT APPLICATION**
published in accordance with Art. 153(4) EPC

(43) Date of publication:
01.07.2026 Bulletin 2026/27

(21) Application number: 24868712.1

(22) Date of filing: 20.09.2024

(51) International Patent Classification (IPC):
H04W 72/23 (2023.01)     H04W 72/56 (2023.01)
H04W 8/24 (2009.01)       H04L 1/08 (2006.01)
H04L 5/00 (2006.01)       H04W 24/08 (2009.01)
H04B 7/06 (2006.01)

(52) Cooperative Patent Classification (CPC):
H04B 7/06; H04L 1/08; H04L 5/00; H04W 8/24;
H04W 24/08; H04W 72/23; H04W 72/56

(86) International application number:
PCT/KR2024/014184

(87) International publication number:
WO 2025/063735 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.09.2023  KR 20230126462
02.11.2023  KR 20230150304
03.01.2024  KR 20240000654

(71) Applicant: Samsung Electronics Co., Ltd.
Suwon-si, Gyeonggi-do 16677 (KR)

(72) Inventors:
• JUNG, Euichang
Suwon-si, Gyeonggi-do 16677 (KR)
• JANG, Youngrok
Suwon-si, Gyeonggi-do 16677 (KR)
• MYUNG, Seho
Suwon-si, Gyeonggi-do 16677 (KR)

(74) Representative: Nederlandsch Octrooibureau
P.O. Box 29720
2502 LS The Hague (NL)

(54) **METHOD AND APPARATUS FOR DETERMINING PRIORITY FOR RECEPTION OF DOWNLINK CONTROL INFORMATION IN WIRELESS COMMUNICATION SYSTEM**

(57) The present disclosure relates to a communication technique for merging IoT technology with a 5G communication system for supporting a data transmission rate higher than that of a 4G system, and a system therefor. The present disclosure can be applied to intelligent services (for example, smart homes, smart buildings, smart cities, smart cars or connected cars, healthcare, digital education, retail businesses, security- and safety-related services, and the like) on the basis of 5G communication technology and IoT-related technology. The present disclosure may provide a method and an apparatus for determining a priority for reception of downlink control information in a wireless communication system.

FIG. 22

**Description**

[Technical Field]

The disclosure relates to operations of a terminal and a base station in a wireless communication system. Specifically, the disclosure relates to a method and an apparatus for determining priority of downlink control information reception.

[Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system is considered to be implemented in ultrahigh frequency (mmWave) bands (e.g., 60GHz (80GHz) bands) so as to accomplish higher data rates. To decrease propagation loss of the radio waves and increase the transmission distance of radio waves in the ultrahigh frequency bands, beamforming, massive multiple-input multiple-output (massive MIMO), full dimensional MIMO (FD-MIMO), array antenna, analog beam forming, large scale antenna techniques are under discuss ion in the 5G communication systems. In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like. In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems (5th generation communication system or new radio (NR)) to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

With the advance of wireless communication systems as described above, various services can be provided, and accordingly there is a need for ways to smoothly provide these services.

[Disclosure of Invention]

[Technical Problem]

The disclosure is to provide an apparatus and a method capable of effectively providing services in a mobile communication system.

The technical subjects pursued in the disclosure may not be limited to the above-mentioned technical subjects, and other technical subjects which are not mentioned herein may be clearly understood from the following description by those skilled in the art to which the disclosure pertains.

[**Solution to Problem**]

According to an embodiment, a method performed by a terminal in a communication system may be provided.

According to an embodiment, the method may include receiving, through higher layer signaling, (i) a configuration for physical downlink control channel (PDCCH) repetition and (ii) a configuration for a plurality of control resource sets (CORESETs).

According to an embodiment, the method may include, in case that a CORESET pool index corresponding to some of the plurality of CORESETs is configured as 1, identifying, based on QCL type-D configurations corresponding to the plurality of CORESETs and a predefined QCL priority, one or more CORESETs for PDCCH monitoring from among the plurality of CORESETs such that the number of quasi co-location (QCL) type-D configurations for PDCCH monitoring is equal to or less than a maximum number of QCL type-D configurations supported by the terminal, and receiving the PDCCH repetition, based on PDCCH monitoring with respect to the one or more CORESETs.

According to an embodiment, a CORESET pool index corresponding to the remaining CORESETs excluding some CORESETs among the plurality of CORESETs may not be configured or may be configured as 0.

According to an embodiment, in case that the maximum number is defined for each CORESET pool index, the identifying of the one or more CORESETs such that the number of QCL type-D configurations is equal to or less than the maximum number may be applied to the some CORESETs and the remaining CORESETs.

According to an embodiment, in case that the maximum number is defined with respect to all CORESET pool indices, the identifying of the one or more CORESETs such that the number of QCL type-D configurations is equal to or less than the maximum number may be applied to the plurality of CORESETs.

According to an embodiment, the plurality of CORESETs may overlap in a time domain.

According to an embodiment, the plurality of CORESETs may include multiple search spaces (SSs).

According to an embodiment, in identifying the QCL priority, the CORESET pool indices may be considered in ascending order, then indices of the plurality of CORESETs may be considered in ascending order, and then indices of the multiple SSs may be considered in ascending order.

According to an embodiment, the multiple SSs may include two SSs having the same linking identifier, and in case that a CORESET including a first SS of the two SSs is identified as being for PDCCH monitoring, a CORESET including a second SS of the two SSs may be identified as being for PDCCH monitoring.

According to an embodiment, in case that a first CORESET corresponding to a first CORESET pool index among the CORESET pool indices is identified as being for PDCCH monitoring, a second CORESET corresponding to a second CORESET pool index among the CORESET pool indices and having the same QCL type-D configuration as the QCL type-D configuration of the first CORESET may be identified as being for PDCCH monitoring.

According to an embodiment, in identifying the QCL priority, an SS having the lowest index among SSs included in a CORESET having the lowest index among CORESETs corresponding to the lowest CORESET pool index among the CORESET pool indices may be considered with highest priority.

According to an embodiment, in case that information for configuring a high priority for a specific CORESET pool index is received, in identifying the QCL priority, the specific CORESET pool index configured with the high priority may be preferentially considered instead of considering the CORESET pool indices in ascending order.

According to an embodiment, in case that information for configuring a high priority for a specific linking identifier is received, in identifying the QCL priority, two SSs having the specific linking identifier may be preferentially considered.

According to an embodiment, the method may further include transmitting a terminal capability report including information on the maximum number.

According to an embodiment, the terminal capability report may further include information corresponding to at least one feature group (FG) identified according to a predefined rule among a plurality of predefined FGs with regard to whether the terminal supports the identifying of the one or more CORESETs for PDCCH monitoring based on the QCL priority.

According to an embodiment, a terminal of a communication system may be provided.

According to an embodiment, the terminal may include a transceiver, and a processor connected to the transceiver.

According to an embodiment, the processor may be configured to receive, through higher layer signaling, (i) a configuration for physical downlink control channel (PDCCH) repetition and (ii) a configuration for multiple control resource sets (CORESETs).

According to an embodiment, in case that a CORESET pool index corresponding to some of the plurality of CORESETs is configured as 1, the processor may be configured to identify one or more CORESETs for PDCCH monitoring from among the plurality of CORESETs such that a number of quasi co-location (QCL) type-D configurations for PDCCH monitoring is equal to or less than a maximum number of QCL type-D configurations supported by the terminal, based on QCL type-D configurations corresponding to the plurality of CORESETs and a predefined QCL priority, and to receive the PDCCH repetition, based on PDCCH monitoring with respect to the one or more CORESETs.

According to an embodiment, a CORESET pool index corresponding to the remaining CORESETs excluding some CORESETs among the plurality of CORESETs may not be configured or may be configured as 0.

According to an embodiment, in case that the maximum number is defined for each CORESET pool index, the identification of the one or more CORESETs such that the number of QCL type-D configurations is equal to or less than the maximum number may be applied to the some CORESETs and the remaining CORESETs.

According to an embodiment, in case that the maximum number is defined with respect to all CORESET pool indices, the identification of the one or more CORESETs such that the number of QCL type-D configurations is equal to or less than the maximum number may be applied to the plurality of CORESETs.

According to an embodiment, the plurality of CORESETs may overlap in a time domain.

According to an embodiment, the plurality of CORESETs may include multiple search spaces (SSs).

According to an embodiment, in identifying the QCL priority, the CORESET pool index may be considered in ascending order, then indices of the plurality of CORESETs may be considered in ascending order, and then indices of the multiple SSs may be considered in ascending order.

According to an embodiment, the multiple SSs may include two SSs having the same linking identifier, and in case that a CORESET including a first SS among the two SSs is identified as being for PDCCH monitoring, a CORESET including a second SS among the two SSs may be identified as being for PDCCH monitoring.

According to an embodiment, in case that a first CORESET corresponding to a first CORESET pool index among the CORESET pool indices is identified as being for PDCCH monitoring, a second CORESET corresponding to a second CORESET pool index among the CORESET pool indices and having the same QCL type-D configuration as the QCL type-D configuration of the first CORESET may be identified as being for PDCCH monitoring.

According to an embodiment, in identifying the QCL priority, an SS having a lowest index among SSs included in a CORESET having a lowest index among CORESETs corresponding to a lowest CORESET pool index among the CORESET pool indices may be considered with highest priority.

According to an embodiment, in case that information for configuring a high priority for a specific CORESET pool index is received, in identifying the QCL priority, the specific CORESET pool index configured with the high priority may be preferentially considered instead of considering the CORESET pool indices in ascending order.

According to an embodiment, in case that information for configuring a high priority for a specific linking identifier is received, in identifying the QCL priority, two SSs having the specific linking identifier may be preferentially considered.

According to an embodiment, the processor may be further configured to transmit a terminal capability report including information on the maximum number.

According to an embodiment, the terminal capability report may further include information corresponding to at least one feature group (FG) identified according to a predefined rule among a plurality of predefined FGs with regard to whether the terminal supports the identification of the one or more CORESETs for PDCCH monitoring based on the QCL priority.

According to an embodiment, a method performed by a base station in a communication system may be provided.

According to an embodiment, the method may include transmitting, to a terminal through higher layer signaling, (i) a configuration for physical downlink control channel (PDCCH) repetition and (ii) a configuration for multiple control resource sets (CORESETs).

According to an embodiment, the method may include transmitting the PDCCH repetition to the terminal, based on one or more CORESETs among the plurality of CORESETs.

According to an embodiment, in case that a CORESET pool index corresponding to some of the plurality of CORESETs is 1, the one or more CORESETs may be based on quasi co-location (QCL) type-D configurations corresponding to the plurality of CORESETs and a predefined QCL priority.

According to an embodiment, a number of QCL type-D configurations corresponding to the one or more CORESETs may be equal to or less than a maximum number of QCL type-D configurations supported by the terminal.

According to an embodiment, the plurality of CORESETs may overlap in a time domain.

According to an embodiment, the plurality of CORESETs may include multiple search spaces (SSs).

According to an embodiment, the QCL priority may be defined such that the CORESET pool index is considered in ascending order, then indices of the plurality of CORESETs are considered in ascending order, and then indices of the multiple SSs are considered in ascending order.

According to an embodiment, a base station of a communication system may be provided.

According to an embodiment, the base station may include a transceiver, and a processor connected to the transceiver.

According to an embodiment, the processor may be configured to transmit, to a terminal through higher layer signaling, (i) a configuration for physical downlink control channel (PDCCH) repetition and (ii) a configuration for multiple control resource sets (CORESETs).

According to an embodiment, the processor may be configured to transmit the PDCCH repetition to the terminal, based on one or more CORESETs among the plurality of CORESETs.

According to an embodiment, in case that a CORESET pool index corresponding to some of the plurality of CORESETs is 1, the one or more CORESETs may be based on quasi co-location (QCL) type-D configurations corresponding to the plurality of CORESETs and a predefined QCL priority.

According to an embodiment, a number of QCL type-D configurations corresponding to the one or more CORESETs may be equal to or less than a maximum number of QCL type-D configurations supported by the terminal.

According to an embodiment, the plurality of CORESETs may overlap in a time domain.

According to an embodiment, the plurality of CORESETs may include multiple search spaces (SSs).

According to an embodiment, the QCL priority may be defined such that the CORESET pool index is considered in ascending order, then indices of the plurality of CORESETs are considered in ascending order, and then indices of the multiple SSs are considered in ascending order.

[**Advantageous Effects of Invention**]

According to an embodiment of the disclosure, an apparatus and a method capable of effectively providing services in a wireless communication system can be provided.

Advantageous effects obtainable from the disclosure may not be limited to the above-mentioned effects, and other effects which are not mentioned herein may be clearly understood from the following description by those skilled in the art to which the disclosure pertains.

[**Brief Description of Drawings**]

FIG. 1 illustrates a basic structure of a time-frequency domain in a wireless communication system according to an embodiment of the disclosure.

FIG. 2 illustrates a structure of a frame, a subframe, and a slot in a wireless communication system according to an embodiment of the disclosure.

FIG. 3 illustrates an example of a bandwidth part configuration in a wireless communication system according to an embodiment of the disclosure.

FIG. 4 illustrates an example of a control resource set configuration of a downlink control channel in a wireless communication system according to an embodiment of the disclosure.

FIG. 5A illustrates a structure of a downlink control channel in a wireless communication system according to an embodiment of the disclosure.

FIG. 5B illustrates, in terms of spans, a case in which a UE may have multiple PDCCH monitoring occasions within a slot in a wireless communication system according to an embodiment of the disclosure;

FIG. 6 illustrates an example of a DRX operation in a wireless communication system according to an embodiment of the disclosure.

FIG. 7 illustrates an example of base station beam allocation according to a TCI state configuration in a wireless communication system according to an embodiment of the disclosure;

FIG. 8 illustrates an example of a method for allocating a TCI state to a PDCCH in a wireless communication system according to an embodiment of the disclosure.

FIG. 9 illustrates a TCI indication MAC CE signaling structure for a PDCCH DMRS in a wireless communication system according to an embodiment of the disclosure.

FIG. 10 illustrates an example of beam configuration with regard to a CORESET and a search space in a wireless communication system according to an embodiment of the disclosure.

FIG. 11 illustrates a method in which a base station and a UE transmit/receive data in consideration of a downlink data channel and a rate matching resource in a wireless communication system according to an embodiment of the disclosure.

FIG. 12 illustrates a method in which, upon receiving a downlink control channel, a UE selects a receivable CORESET in consideration of priority in a wireless communication system according to an embodiment of the disclosure.

FIG. 13 illustrates radio protocol structures of a base station and a UE in single cell, carrier aggregation, and dual connectivity situations in a wireless communication system according to an embodiment of the disclosure.

FIG. 14 illustrates an example of an antenna port configuration and resource allocation for cooperative communication in a wireless communication system according to an embodiment of the disclosure.

FIG. 15 illustrates an example of a downlink control information (DCI) configuration for cooperative communication in a wireless communication system according to an embodiment of the disclosure.

FIG. 16 illustrates a method for determining a priority upon reception of PDCCH repetition transmission according to an embodiment of the disclosure.

FIG. 17 illustrates a method for determining a priority upon reception of PDCCH repetition transmission according to an embodiment of the disclosure.

FIG. 18 illustrates a method for determining a priority upon reception of PDCCH repetition transmission according to an embodiment of the disclosure.

FIG. 19 illustrates a method for determining a priority upon reception of PDCCH repetition transmission according to an embodiment of the disclosure.

FIG. 20 illustrates a method for determining a priority upon reception of PDCCH repetition transmission according to an embodiment of the disclosure.

FIG. 21 illustrates a method for determining a priority upon reception of PDCCH repetition transmission according to an embodiment of the disclosure.

FIG. 22 is a flowchart illustrating an operation of a UE for reception of a repeatedly transmitted PDCCH according to an embodiment of the disclosure.

FIG. 23 illustrates an example of an operation of a UE according to an embodiment of the disclosure.

FIG. 24 illustrates an example of an operation of a base station according to an embodiment of the disclosure.

FIG. 25 illustrates a structure of a UE in a wireless communication system according to an embodiment of the disclosure.

FIG. 26 illustrates a structure of a base station in a wireless communication system according to an embodiment of the disclosure.

[**Mode for the Invention**]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements. In addition, a detailed description of known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink(DL)" may refer to a radio link via which a base station transmits a signal to a terminal, and an "uplink(UL)" may refer to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20Gbps in the downlink and a peak data rate of 10Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR time-frequency resources]

Hereinafter, a frame structure of a 5G system will be described in more detail with reference to the accompanying drawings.

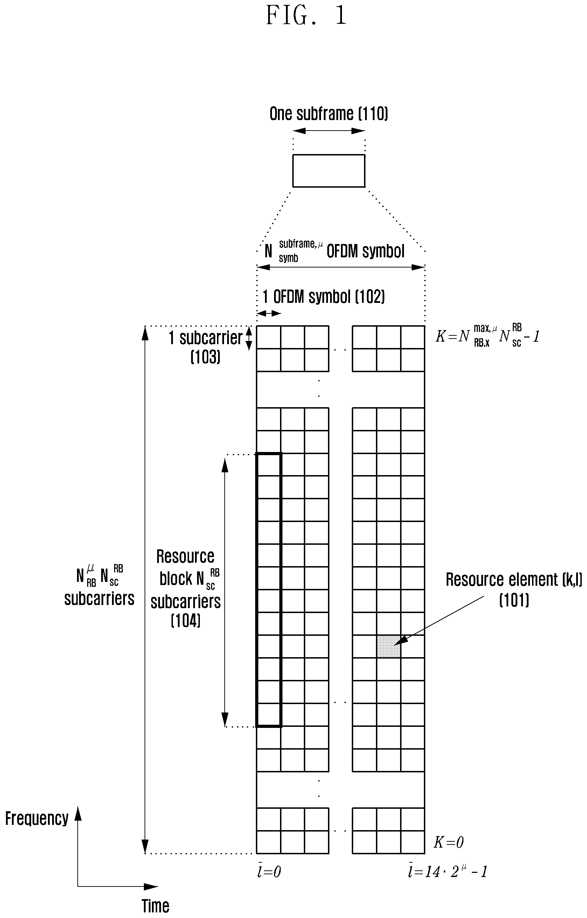

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104. In the time domain, one subframe 110 may include multiple OFDM symbols 102. For example, the length of one subframe may be 1ms.

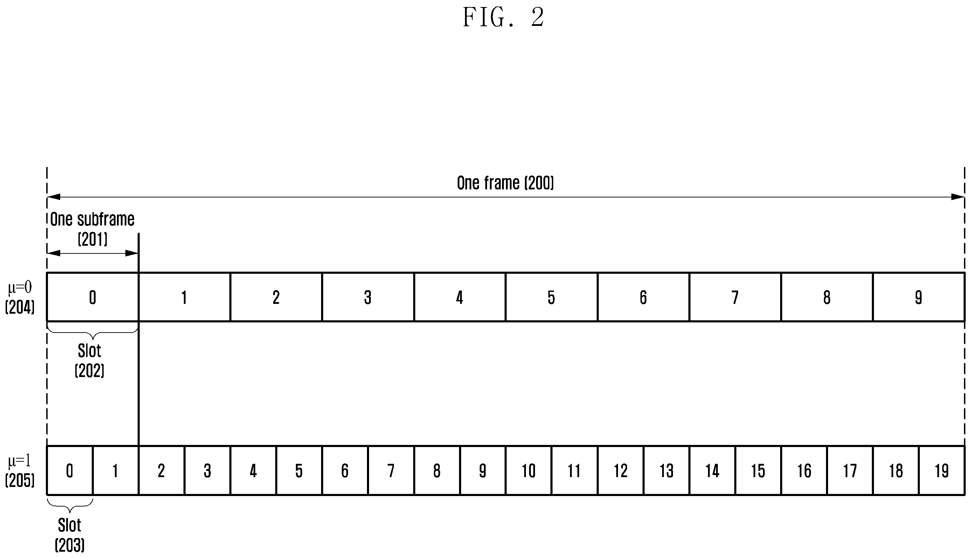

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values μ for the subcarrier spacing 204 or 205. The example in FIG. 2 illustrates a case in which the subcarrier spacing configuration value is μ=0 (204), and a case in which μ=1 (205). In the case of μ=0 (204), one subframe 201 may include one slot 202, and in the case of μ=1 (205), one subframe 201 may include two slots 203. That is, the number of slots per one subframe $N_{slot}^{subframe,\mu}$ may differ depending on the subcarrier spacing configuration value μ, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration μ as in Table 1 below.

[Table 1]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, a bandwidth part (BWP) configuration in a 5G communication system will be described in detail with reference to the accompanying drawings.

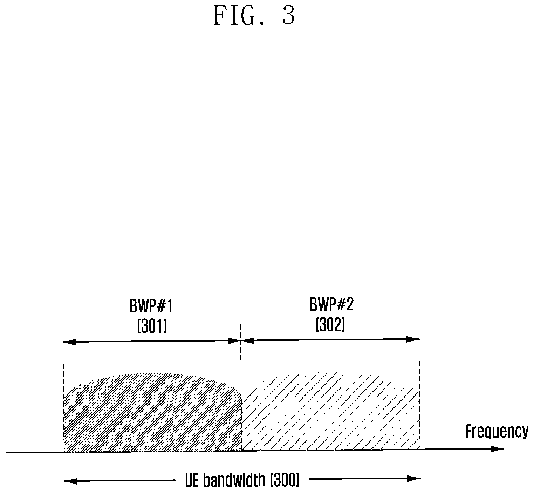

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

| | | |
|---|---|---|
| BWP ::= | | SEQUENCE { |
| bwp-Id | | BWP-Id, |
| (bandwidth part identifier) | | |
| locationAndBandwidth | | INTEGER (1..65536), |
| (bandwidth part location) | | |
| subcarrierSpacing | | ENUMERATED {n0, |
| n1, n2, n3, n4, n5}, | | |
| (subcarrier spacing) | | |
| cyclicPrefix | | ENUMERATED { |
| extended } | | |
| (cyclic prefix) | | |
| } | | |

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource set #0 through the MIB. In addition, the base station may notify the UE of configuration information regarding the monitoring periodicity and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (i.e., CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

[Bandwidth part (BWP) change]

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined as given in FIG. 3 below, for example.

[Table 3]

| $\mu$ | NR Slot length (ms) | BWP switch delay $T_{BWP}$ (slots) | |
| --- | --- | --- | --- |
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot $n+T_{BWP}$, and may transmit/receive a data channel scheduled by the corresponding DCI in the newly changed bandwidth part. According to an embodiment, if the base station wants to schedule a data channel by using the new bandwidth part, the base station may determine time domain resource allocation regarding the data channel, based on the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[SS/PBCH block]

Next, synchronization signal (SS)/PBCH blocks in 5G will be described.

An SS/PBCH block may refer to a physical layer channel block including a primary synchronization signal (PSS), a secondary synchronization signal (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5ms, and each transmitted SS/PBCH block may be distinguished by an index.

The UE may detect the PSS and SSS in the initial access step, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

[PDCCH: regarding DCI]

Next, downlink control information (DCI) in a 5G system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 4 below, for example.

[Table 4]

| |
|---|
| - Identifier for DCI formats - [1] bit |
| - Frequency domain resource assignment - |
| $$\left\lceil \log_2 (N_{RB}^{UL,BWP} (N_{RB}^{UL,BWP} + 1)/2) \right\rceil$$ |
| bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |
| - Uplink/ supplementary uplink (UL/SUL) indicator - 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

[Table 5]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
| * For resource allocation type 0, $\left\lceil N_{RB}^{UL,BWP} / P \right\rceil$ bits |
| * For resource allocation type 1, $\left\lceil \log_2 (N_{RB}^{UL,BWP} (N_{RB}^{UL,BWP} + 1)/2) \right\rceil$ bits |
| - Time domain resource assignment -1, 2, 3, or 4 bits |
| - Virtual resource block (VRB)-to-physical resource block (PRB) mapping - 0 or 1 bit, only for resource allocation type 1. |
| * 0 bit if only resource allocation type 0 is configured; |
| * 1 bit otherwise. |
| - Frequency hopping flag - 0 or 1 bit, only for resource allocation type 1. |
| * 0 bit if only resource allocation type 0 is configured; |
| * 1 bit otherwise. |
| - Modulation and coding scheme - 5 bits |
| - New data indicator - 1 bit |
| - Redundancy version - 2 bits |

(continued)

- HARQ process number - 4 bits
- 1st downlink assignment index- 1 or 2 bits
* 1 bit for semi-static HARQ-ACK codebook;
* 2 bits for dynamic HARQ-ACK codebook with single HARQ-ACK codebook.
- 2nd downlink assignment index - 0 or 2 bits
* 2 bits for dynamic HARQ-ACK codebook with two HARQ-ACK sub-codebooks;
* 0 bit otherwise.
- TPC command for scheduled PUSCH - 2 bits

- SRS resource indicator - $\left\lceil \log_2 \left( \sum_{k=1}^{L_{max}} \binom{N_{SRS}}{k} \right) \right\rceil$ or $\lceil \log_2 (N_{SRS}) \rceil$ bits

* $\left\lceil \log_2 \left( \sum_{k=1}^{L_{max}} \binom{N_{SRS}}{k} \right) \right\rceil$ bits for non-codebook based PUSCH transmission;

* $\lceil \log_2 (N_{SRS}) \rceil$ bits for codebook based PUSCH transmission.
- Precoding information and number of layers - up to 6 bits
- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DMRS) association - 0 or 2 bits.
- beta_offset indicator - 0 or 2 bits
- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

[Table 6]

- Identifier for DCI formats - [1] bit
- Frequency domain resource assignment - $\left\lceil \log_2 (N_{RB}^{DL,\,BWP} (N_{RB}^{DL,\,BWP} + 1)/2) \right\rceil$ bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

[Table 7]

- Carrier indicator - 0 or 3 bits
- Identifier for DCI formats - [1] bits
- Bandwidth part indicator - 0, 1 or 2 bits

(continued)

- Frequency domain resource assignment

* For resource allocation type 0, $\left\lceil N_{RB}^{DL,\,BWP} / P \right\rceil$ bits

* For resource allocation type 1, $\left\lceil \log_2 ( N_{RB}^{DL,\,BWP} ( N_{RB}^{DL,\,BWP} + 1 ) / 2 ) \right\rceil$ bits

- Time domain resource assignment -1, 2, 3, or 4 bits
- VRB-to-PRB mapping - 0 or 1 bit, only for resource allocation type 1.
* 0 bit if only resource allocation type 0 is configured;
* 1 bit otherwise.
- Physical resource block (PRB) bundling size indicator - 0 or 1 bit
- Rate matching indicator - 0, 1, or 2 bits
- Zero power (ZP) channel state information (CSI)-reference signal (RS) trigger - 0, 1, or 2 bits
For transport block 1:
- Modulation and coding scheme - 5 bits
- New data indicator - 1 bit
- Redundancy version - 2 bits
For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits
- CBG transmission information - 0, 2, 4, 6, or 8 bits
- CBG flushing out information - 0 or 1 bit
- DMRS sequence initialization - 1 bit

[PDCCH: CORESET, REG, CCE, and Search Space]

Hereinafter, a downlink control channel in a 5G communication system will be described in more detail with reference to the accompanying drawings.

Hereinafter, a downlink control channel in a 5G communication system will be described in more detail with reference to the accompanying drawings.

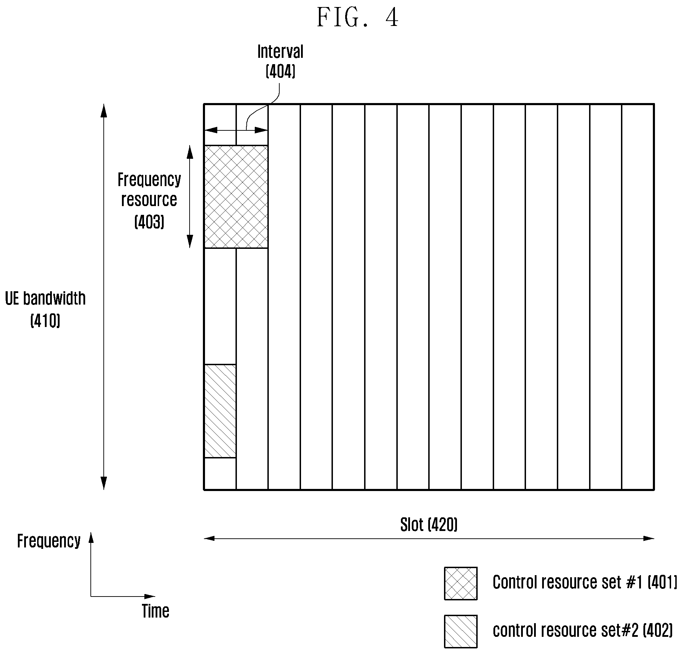

FIG. 4 illustrates an example of a control resource set (CORESET) used to transmit a downlink control channel in a 5G wireless communication system. FIG. 4 illustrates an example in which a UE bandwidth part 410 is configured along the frequency axis, and two control resource sets (control resource set #1 420 and control resource set #2 401) are configured within one slot 402 along the time axis. The control resource sets 401 and 402 may be configured in a specific frequency resource 410 within the entire UE bandwidth part 403 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through upper layer signaling (for example, system information, master information block (MIB), radio resource control (RRC) signaling). The description that a control resource set is configured for a UE means that information such as a control resource set identity, the control resource set's frequency location, and the control resource set's symbol duration is provided. For example, the following pieces of information as given in Table 8 below may be included.

[Table 8]

```
ControlResourceSet ::=                          SEQUENCE {
       -- Corresponds to L1 parameter 'CORESET-ID'


       controlResourceSetId            ControlResourceSetId,
(control resource set identity))
       frequencyDomainResources        BIT STRING (SIZE (45)),
(frequency domain resource assignment information)
       duration                        INTEGER
(1..maxCoReSetDuration),
       (time domain resource assignment information )
       cce-REG-MappingType             CHOICE {
(CCE-to-REG mapping scheme)
```

```
        interleaved                     SEQUENCE {

        reg-BundleSize                  ENUMERATED {n2, n3, n6},
        (REG bundle size)

        precoderGranularity             ENUMERATED    {sameAsREG-
bundle, allContiguousRBs},

        interleaverSize                 ENUMERATED {n2, n3, n6}
        (interleaver size)

        shiftIndex          INTEGER(0..maxNrofPhysicalResourceBlocks-1)
                    OPTIONAL
        (interleaver shift)
        },
        nonInterleaved                  NULL
        },
        tci-StatesPDCCH                 SEQUENCE(SIZE
(1..maxNrofTCI-StatesPDCCH)) OF TCI-StateId
        OPTIONAL,
    (QCL configuration information)
        tci-PresentInDCI                ENUMERATED {enabled}
                        OPTIONAL,    -- Need S
        }
```

In Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (QCLed) with a DMRS transmitted in a corresponding control resource set.

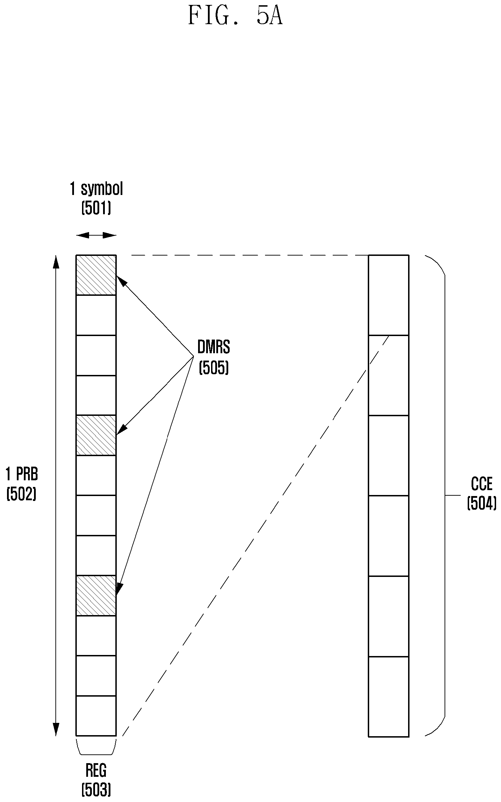

FIG. 5A illustrates an example of a basic unit of time and frequency resources constituting a downlink control channel available in 5G. According to FIG. 5A, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element (CCE) 504 as illustrated in FIG. 5A, one CCE 504 may include multiple REGs 503. To describe the REG 503 illustrated in FIG. 5A, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5A, that is, the REG 503, may include both REs to which DCI is mapped, and an area to which a reference signal (DMRS 505) for decoding the same is mapped. As in FIG. 5A, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through upper layer signaling (for example SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the following pieces of information as given in Table 9 below may be included.

[Table 9]

```
SearchSpace ::=                              SEQUENCE {
        -- Identity of the search space. SearchSpaceId = 0 identifies the
SearchSpace configured via PBCH (MIB) or ServingCellConfigCommon.
        searchSpaceId              SearchSpaceId,
    (search space identity)
        controlResourceSetId       ControlResourceSetId,
    (control resource set identity)
        monitoringSlotPeriodicityAndOffset          CHOICE {
    (monitoring slot level periodicity)
            sl1            NULL,
            sl2            INTEGER (0..1),
            sl4            INTEGER (0..3),
            sl5            INTEGER (0..4),
            sl8            INTEGER (0..7),
            sl10           INTEGER (0..9),
            sl16           INTEGER (0..15),
            sl20           INTEGER (0..19)
        }

                        OPTIONAL,
    duration(monitoring duration)            INTEGER (2..2559)
        monitoringSymbolsWithinSlot          BIT STRING (SIZE (14))
                        OPTIONAL,
    (monitoring symbols within slot)
```

```
        nrofCandidates                SEQUENCE {
  (number of PDCCH candidates for each aggregation level)
        aggregationLevel1             ENUMERATED  {n0, n1, n2, n3,
n4, n5, n6, n8},
        aggregationLevel2             ENUMERATED  {n0, n1, n2, n3,
n4, n5, n6, n8},
        aggregationLevel4             ENUMERATED  {n0, n1, n2, n3,
n4, n5, n6, n8},
        aggregationLevel8             ENUMERATED  {n0, n1, n2, n3,
n4, n5, n6, n8},
        aggregationLevel16            ENUMERATED  {n0, n1, n2, n3,
n4, n5, n6, n8}
        },


        searchSpaceType               CHOICE {
        (search space type)
        -- Configures this search space as common search space (CSS) and
DCI formats to monitor.
        common                        SEQUENCE {
        (common search space)
        }
        ue-Specific                   SEQUENCE {
        (UE-specific search space)
        -- Indicates whether the UE monitors in this USS for DCI formats
0-0 and 1-0 or for formats 0-1 and 1-1.
        formats                       ENUMERATED     {formats0-0-
And-1-0, formats0-1-And-1-1},
        ...
        }
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

- Cell RNTI (C-RNTI): used to schedule a UE-specific PDSCH
- Temporary cell RNTI (TC-RNTI): used to schedule a UE-specific PDSCH
- Configured scheduling RNTI (CS-RNTI): used to schedule a semi-statically configured UE-specific PDSCH
- Random access RNTI(RA-RNTI): used to schedule a PDSCH in a random access step
- Paging RNTI (P-RNTI): used to schedule a PDSCH in which paging is transmitted
- System information RNTI (SI-RNTI): used to schedule a PDSCH in which system information is transmitted
- Interruption RNTI(INT-RNTI): used to indicate whether a PDSCH is punctured
- Transmit power control for PUSCH RNTI (TPC-PUSCH-RNTI): used to indicate a power control command regarding a PUSCH
- Transmit power control for PUCCH RNTI (TPC-PUCCH-RNTI): used to indicate a power control command regarding a PUCCH
- Transmit power control for SRS RNTI (TPC-SRS-RNTI): used to indicate a power control command regarding an SRS

The DCI formats enumerated above may follow the definitions given in Table 10 below, for example.

[Table 10]

| DCI format | Usage |
| --- | --- |
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- L: aggregation level
- $n_{CI}$: carrier index
- $N_{CCE,p}$: total number of CCEs existing in control resource set $p$
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} -1$ : PDCCH candidate index at aggregation level L
- $i = 0, \ldots, L$ -1
- $Y_{p,n_{s,f}^{\mu}} = \left( A_p \cdot Y_{p,n_{s,f}^{\mu}-1} \right) \bmod D$   $Y_{p,-1} = n_{RNTI} \neq 0, A_p = 39827$ *for p*mod3 = 0 , $A_p = 39829$ *for p*mod3 = 1 , $A_p$ = 39839 *for p*mod3 = 2, $D$ = 65537
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

[PDCCH: span]

The UE may perform UE capability reporting at each subcarrier spacing with regard to a case in which the same has multiple PDCCH monitoring occasions inside a slot, and the concept "span" may be used in this regard. A span refers to consecutive symbols configured such that the UE can monitor the PDCCH inside the slot, and each PDCCH monitoring occasion is inside one span. A span may be expressed by (X,Y) wherein X refers to the minimum number of symbols by which the first symbols of two consecutive spans are spaced apart from each other, and Y refers to the number of consecutive symbols in which a PDCCH can be monitored within one span. Here, a UE may monitor a PDCCH in a range of Y symbols from the first symbol of the span within the span.

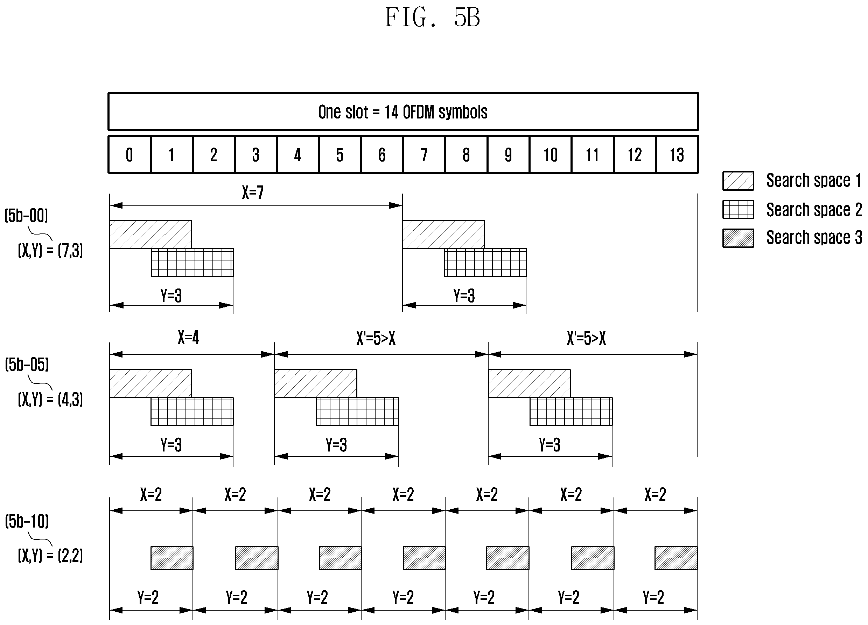

FIG. 5B illustrates, in terms of spans, a case in which a UE may have multiple PDCCH monitoring occasions within a slot in a wireless communication system. Possible spans are (X,Y) = (7,3), (4,3), (2,2), and the three cases may be indicated by "5b-00", "5b-05", and "5b-10" in FIG. 5B, respectively. As an example, "5b-00" may describe a case in which there are two spans described by (7,4) inside a slot. The spacing between the first symbols of two spans is described as X=7, a PDCCH monitoring occasion may exist inside a total of Y=3 symbols from the first symbol of each span, and search spaces 1 and 2 may exist inside Y=3 symbols, respectively. As another example, "5b-05" may describe a case in which there are a total of three spans described by (4,3) inside a slot, and the second and third spans are spaced apart by X'=5 symbols which are larger than X=4.

[PDCCH: UE capability report]

The slot location at which the above-described common search space and the UE-specific search space are positioned is indicated by parameter "monitoringSymbolsWitninSlot" in Table 9, and the symbol location inside the slot is indicated as a bitmap through parameter "monitoringSymbolsWithinSlot" in Table 9. Meanwhile, the symbol location inside a slot at which the UE can monitor search spaces may be reported to the base station through the following UE capabilities.
- UE capability 1 (hereinafter referred to as FG 3-1). This UE capability may have the following meaning: if there is one monitoring occasion (MO) regarding type 1 and type 3 common search spaces or UE-specific search spaces inside a slot, as in Table 11 below, the UE can monitor the corresponding MO when the corresponding MO is located inside the first three symbols within the slot. This UE capability is a mandatory capability which is to be supported by all UEs that support NR, and whether or not this UE capability is supported is not explicitly reported to the base station.

[Table 11]

| Index | Feature group | Components | Field name in TS 38.331 [2] |
|---|---|---|---|
| 3-1 | Basic DL control channel | 1) One configured CORESET per BWP per cell in addition to CORESET0<br>- CORESET resource allocation of 6RB bit-map and duration of 1 - 3 OFDM symbols for FR1<br><br>- For type 1 CSS without dedicated RRC configuration and for type 0, 0A, and 2 CSSs, CORESET resource allocation of 6RB bit-map and duration 1-3 OFDM symbols for FR2<br>- For type 1 CSS with dedicated RRC configuration and for type 3 CSS, UE specific SS, CORESET resource allocation of 6RB bit-map and duration 1-2 OFDM symbols for FR2<br>- REG-bundle sizes of 2/3 RBs or 6 RBs<br>- Interleaved and non-interleaved CCE-to-REG mapping<br>- Precoder-granularity of REG-bundle size<br>- PDCCH DMRS scrambling determination<br>- TCI state(s) for a CORESET configuration<br>2) CSS and UE-SS configurations for unicast PDCCH transmission per BWP per cell<br>- PDCCH aggregation levels 1, 2, 4, 8, 16<br>- UP to 3 search space sets in a slot for a scheduled SCell per BWP<br>This search space limit is before applying all dropping rules.<br>- For type 1 CSS with dedicated RRC configuration, type 3 CSS, and UE-SS, the monitoring occasion is within the first 3 OFDM symbols of a slot<br>- For type 1 CSS without dedicated RRC configuration and for type 0, 0A, and 2 CSS, the monitoring occasion can be any OFDM symbol(s) of a slot, with the monitoring occasions for any of Type 1-CSS without dedicated RRC configuration, or Types 0, 0A, or 2 CSS configurations within a single span of three consecutive OFDM symbols within a slot<br>3) Monitoring DCI formats 0_0, 1_0, 0_1, 1_1<br>4) Number of PDCCH blind decodes per slot with a given SCS follows Case 1-1 table<br>5) Processing one unicast DCI scheduling DL and one unicast DCI scheduling UL per slot per scheduled CC for FDD<br>6) Processing one unicast DCI scheduling DL and 2 unicast DCI scheduling UL per slot per scheduled CC for TDD | n/a |

- UE capability 2(hereinafter referred to as FG 3-2). This UE capability has the following meaning: if there is one monitoring occasion (MO) regarding a common search space or a UE-specific search space inside a slot, as in Table 12 below, the UE can monitor the corresponding MO no matter what of the startsymbol location of the corresponding MO may be. This UE capability is optionally supported by the UE,and whether or not this UE capability is supported is explicitly reported to the base station.

[Table 12]

| Index | Feature group | Components | Field name in TS 38.331 [2] |
|---|---|---|---|
| 3-2 | PDCCH monitoring on any span of up to 3 consecutive OFDM symbols of a slot | For a given UE, all search space configurations are within the same span of 3 consecutive OFDM symbols in the slot | *pdcchMonitoringSingleOccasion* |

- UE capability 3(hereinafter, referred to as FG 3-5, 3-5a, or 3-5b). This UE capability has the following meaning: if there are multiple monitoring occasions (MO) regarding a common search space or a UE-specific search space inside a slot, as in Table 13 below, the pattern of the MO which the UE can monitor is indicated. The above-mentioned pattern includes the spacing X between start symbols of different MOs, and the maximum symbol length Y regarding one MO. The combination of (X,Y) supported by the UE may be one or multiple among {(2,2), (4,3), (7,3)}. This UE capability is optionally supported by the UE, and whether or not this UE capability is supported and the above-mentioned combination of (X,Y) are explicitly reported to the base station.

[Table 13]

| Index | Feature group | Components | Field name in TS 38.331 [2] |
|---|---|---|---|
| 3-5 | For type 1 CSS with dedicated RRC configuration, type 3 CSS, and UE-SS, monitoring occasion can be any OFDM symbol(s) of a slot for Case 2 | For type 1 CSS with dedicated RRC configuration, type 3 CSS, and UE-SS, monitoring occasion can be any OFDM symbol(s) of a slot for Case 2 | *pdcch-MonitoringAnyOccasions* { 3-5. *withoutDCI-Gap* 3-5a. *withDCI-Gap* } |
| 3-5a | For type 1 CSS with dedicated RRC configuration, type 3 CSS, and UE-SS, monitoring occasion can be any OFDM symbol(s) of a slot for Case 2 with a DCI gap | For type 1 CSS with dedicated RRC configuration, type 3 CSS and UE-SS, monitoring occasion can be any OFDM symbol(s) of a slot for Case 2, with minimum time separation (including the cross-slot boundary case) between two DL unicast DCIs, between two UL unicast DCIs, or between a DL and an UL unicast DCI in different monitoring occasions where at least one of them is not the monitoring occasions of FG-3-1, for a same UE as<br><br>- 2 OFDM symbols for 15kHz<br>- 4 OFDM symbols for 30kHz<br>- 7 OFDM symbols for 60kHz with NCP<br>- 11 OFDM symbols for 120kHz<br>Up to one unicast DL DCI and up to one unicast UL DCI in a monitoring occasion except for the monitoring occasions of FG 3-1.<br><br>In addition for TDD the minimum separation between the first two UL unicast DCIs within the first 3 OFDM symbols of a slot can be zero OFDM symbols. | |

24

EP 4 770 243 A1

(continued)

| Index | Feature group | Components | Field name in TS 38.331 [2] |
|---|---|---|---|
| 3-5b | All PDCCH monitoring occasion can be any OFDM symbol(s) of a slot for Case 2 with a span gap | PDCCH monitoring occasions of FG-3-1, plus additional PDCCH monitoring occasion(s) can be any OFDM symbol(s) of a slot for Case 2, and for any two PDCCH monitoring occasions belonging to different spans, where at least one of them is not the monitoring occasions of FG-3-1, in same or different search spaces, there is a minimum time separation of X OFDM symbols (including the cross-slot boundary case) between the start of two spans, where each span is of length up to Y consecutive OFDM symbols of a slot. Spans do not overlap. Every span is contained in a single slot. The same span pattern repeats in every slot. The separation between consecutive spans within and across slots may be unequal but the same (X, Y) limit must be satisfied by all spans. Every monitoring occasion is fully contained in one span. In order to determine a suitable span pattern, first a bitmap b(I), 0<=I<=13 is generated, where b(I)=1 if symbol I of any slot is part of a monitoring occasion, b(I)=0 otherwise. The first span in the span pattern begins at the smallest I for which b(I)=1. The next span in the span pattern begins at the smallest I not included in the previous span(s) for which b(I)=1. | |
| | | The span duration is max{maximum value of all CORESET durations, minimum value of Y in the UE reported candidate value} except possibly the last span in a slot which can be of shorter duration. A particular PDCCH monitoring configuration meets the UE capability limitation if the span arrangement satisfies the gap separation for at least one (X, Y) in the UE reported candidate value set in every slot, including cross slot boundary. For the set of monitoring occasions which are within the same span: • Processing one unicast DCI scheduling DL and one unicast DCI scheduling UL per scheduled CC across this set of monitoring occasions for FDD | |
| | | • Processing one unicast DCI scheduling DL and two unicast DCI scheduling UL per scheduled CC across this set of monitoring occasions for TDD • Processing two unicast DCI scheduling DL and one unicast DCI scheduling UL per scheduled CC across this set of monitoring occasions for TDD The number of different start symbol indices of spans for all PDCCH monitoring occasions per slot, including PDCCH monitoring occasions of FG-3-1, is no more than floor(14/X) (X is minimum among values reported by UE). The number of different start symbol indices of PDCCH monitoring occasions per slot including PDCCH monitoring occasions of FG-3-1, is no more than 7. The number of different start symbol indices of PDCCH monitoring occasions per half-slot including PDCCH monitoring occasions of FG-3-1 is no more than 4 in SCell. | |

The UE may report whether the above-described capability 2 and/or capability 3 are supported and relevant parameters to the base station. The base station may allocate time-domain resources to the common search space and the UE-specific search space, based on the UE capability report. During the resource allocation, the base station may ensure that the MO is not positioned not at a location at which the UE cannot monitor the same.

[DRX]

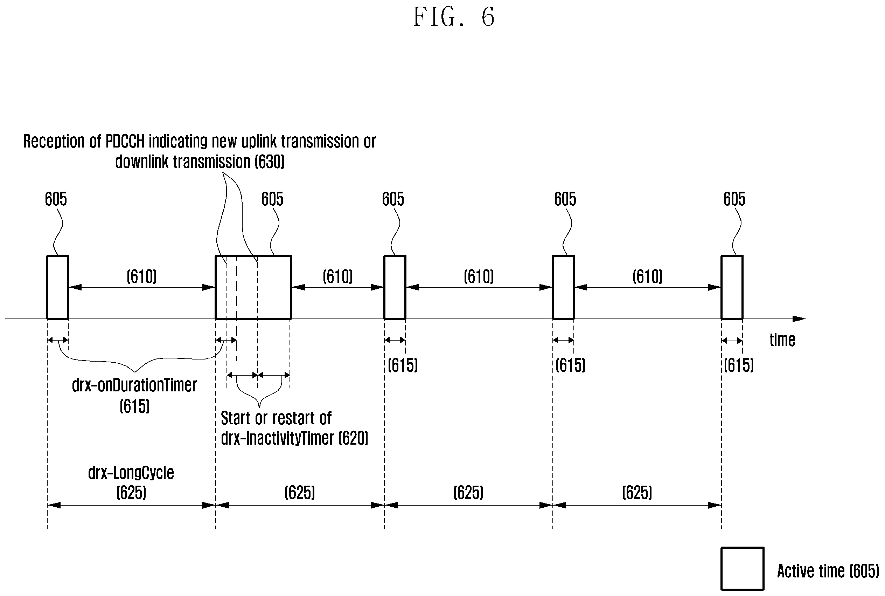

FIG. 6 illustrates discontinuous reception (DRX).

DRX refers to an operation in which a UE currently using a service discontinuously receives data in an RRC-connected state in which a radio link is configured between the base station and the UE. If the DRX is applied, the UE may turn on a receiver at a specific time point so as to monitor a control channel, and may turn off the receiver if there is no data received for a predetermined period of time, thereby reducing power consumed by the UE. The DRX operation may be controlled by a MAC layer device, based on various parameters and timers.

Referring to FIG. 6, the active time 605 refers to a time during which the UE wakes up at each DRX cycle and monitors the PDCCH. The active timer 605 may be defined as follows.

- drx-onDurationTimer or drx-InactivityTimer or drx-RetransmissionTimerDL or drx-RetransmissionTimerUL or ra-ContentionResolutionTimer is running; or
- a Scheduling Request is sent on PUCCH and is pending; or
- a PDCCH indicating a new transmission addressed to the C-RNTI of the MAC entity has not been received after successful reception of a Random Access Response for the Random Access Preamble not selected by the MAC entity among the contention-based Random Access Preamble

drx-onDurationTimer, drx-InactivityTimer,drx-RetransmissionTimerDL, drx-RetransmissionTimerUL,ra-ContentionResolutionTimer, and the like are timers having values configured by the base station, and have functions which cause the UE to monitor the PDCCH in a situation in which a predetermined condition is satisfied.

drx-onDurationTimer 615 is a parameter for configuring the minimum time during which the UE is awake at the DRX cycle. drx-InactivityTimer 620 is a parameter for configuring a time during which the UE is additionally awake upon receiving (630) a PDCCH indicating new uplink transmission or downlink transmission. drx-RetransmissionTimerDL is a parameter for configuring the maximum time during which the UE is awake in order to receive downlink retransmission in a downlink HARQ procedure. drx-RetransmissionTimerUL is a parameter for configuring the maximum time during which the UE is awake in order to receive an uplink retransmission grant in an uplink HARQ procedure. drx-onDurationTimer, drx-InactivityTimer, drx-RetransmissionTimerDL, and drx-RetransmissionTimerUL may be configured as, for example, time, the number of subframes, the number of slots, and the like. ra-ContentionResolutionTimer is a parameter for monitoring the PDCCH in a random access procedure.

inActive time 610 refers to a time configured such that the PDCCH is not monitored during the DRX operation or a time configured such that the PDCCH is not received, and the inActive time 610 may be obtained by subtracting the active time 605 from the entire time during which the DRX operation is performed. If the UE does not monitor the PDCCH during the active time 605, the UE may enter a sleep or inActive state, thereby reducing power consumption.

The DRX cycle refers to the cycle at which the UE wakes up and monitors the PDCCH. That is, the DRX cycle refers to the time interval between when the UE monitors a PDCCH and when the next PDCCH is monitored, or the cycle at which on-duration occurs. There are two kinds of DRX cycles: a short DRX cycle and a long DRX cycle. The short DRX cycle may be optionally applied.

The long DRX cycle 625 is the longer cycle between two DRX cycles configured for the UE. While operating with long DRX, the UE restarts the drx-onDurationTimer 615 at a time point at which the long DRX cycle 625 has elapsed from the start point (for example, start symbol) of the drx-onDurationTimer 615. If operating at the long DRX cycle 625, the UE may start the drx-onDurationTimer 615 in a slot after drx-SlotOffset in a subframe satisfying Equation 2 below. Here, drx-SlotOffset refers to a delay before the drx-onDurationTimer 615 is started. The drx-SlotOffset may be configured, for example, as time, the number of slots, or the like.

$$[(\text{SFN X } 10) + \text{subframe number}]\,\text{modulo}(\text{drx-LongCycle}) = \text{drx-StartOffset} \qquad \text{[Equation 2]}$$

where, drx-LongCycleStartOffset may be used to define the long DRX cycle 625, and drx-StartOffset may be used to define a subframe to start the long DRX cycle 625. drx-LongCycleStartOffset may be configured as, for example, time, the number of subframes, the number of slots, or the like.

[PDCCH: BD/CCE limit]

If there are multiple search space sets configured for a UE, the following conditions may be considered in connection with a method for determining a search space set to be monitored by the UE.

If the value of "monitoringCapabilityConfig-r16" (upper layer signaling) has been configured to be "r15monitoringcapability" for the UE, the UE defines maximum values regarding the number of PDCCH candidates that can be monitored and the number of CCEs constituting the entire search space (as used herein, the entire search space refers to the entire CCE set corresponding to a union domain of multiple search space sets) with regard to each slot. If the value of "monitoringCapabilityConfig-r16" has been configured to be "r16monitoringcapability", the UE defines maximum values regarding the number of PDCCH candidates that can be monitored and the number of CCEs constituting the entire search space (as used herein, the entire search space refers to the entire CCE set corresponding to a union domain of multiple search space sets) with regard to each span.

[Condition 1: maximum number of PDCCH candidates limited]

According to the above-mentioned upper layer signaling configuration value, the maximum number $M^\mu$ of PDCCH candidates that the UE can monitor may follow Table 14 given below if the same is defined with reference to a slot in a cell configured to have a subcarrier spacing of $15 \cdot 2^\mu$ kHz, and may follow Table 15 given below if the same is defined with reference to a span.

[Table 14]

| $\mu$ | Maximum number of PDCCH candidates per slot and per serving cell ($M^\mu$) |
|---|---|
| 0 | 44 |
| 1 | 36 |
| 2 | 22 |
| 3 | 20 |

[Table 15]

| | Maximum number $M^\mu$ of monitored PDCCH candidates per span for combination (X,Y) and per serving cell | | |
|---|---|---|---|
| $\mu$ | (2,2) | (4,3) | (7,3) |
| 0 | 14 | 28 | 44 |
| 1 | 12 | 24 | 36 |

[Condition 2: maximum number of CCEs limited]

According to the above-mentioned upper layer signaling configuration value, the maximum number $C_\mu$ of CCEs constituting the entire search space (as used herein, the entire search space refers to the entire CCE set corresponding to a union domain of multiple search space sets) may follow Table 16 given below if the same is defined with reference to a slot in a cell configured to have a subcarrier spacing of $15 \cdot 2^\mu$ kHz, and may follow Table 17 given below if the same is defined with reference to a span.

[Table 16]

| $\mu$ | Maximum number of non-overlapped CCEs per slot and per serving cell ($C^\mu$) |
|---|---|
| 0 | 56 |
| 1 | 56 |
| 2 | 48 |
| 3 | 32 |

[Table 17]

| | Maximum number $C^\mu$ of non-overlapped CCEs per span for combination (X,Y) and per serving cell | | |
|---|---|---|---|
| $\mu$ | (2,2) | (4,3) | (7,3) |
| 0 | 18 | 36 | 56 |
| 1 | 18 | 36 | 56 |

For the sake of descriptive convenience, a situation satisfying both conditions 1 and 2 above at a specific time point may be defined as "condition A". Therefore, the description that condition A is not satisfied may mean that at least one of conditions 1 and 2 above is not satisfied.

[PDCCH: Overbooking]

According to the configuration of search space sets of the base station, a case in which condition A is not satisfied may occur at a specific time point. If condition A is not satisfied at a specific time point, the UE may select and monitor only some of search space sets configured to satisfy condition A at the corresponding time point, and the base station may transmit a PDCCH to the selected search space set.

A method for selecting some search spaces from all configured search space sets may follow methods given below.

If condition A regarding a PDCCH fails to be satisfied at a specific time point (slot), the UE (or the base station) may preferentially select a search space set having a search space type configured as a common search space, among search space sets existing at the corresponding time point, over a search space set configured as a UE-specific search space.

If all search space sets configured as common search spaces have been selected (that is, if condition A is satisfied even after all search spaces configured as common search spaces have been selected), the UE (or the base station) may select search space sets configured as UE-specific search spaces. If there are multiple search space sets configured as UE-specific search spaces, a search space set having a lower search space set index may have a higher priority. UE-specific search space sets may be selected as long as condition A is satisfied, in consideration of the priority.

[QCL, TCI state]

In a wireless communication system, one or more different antenna ports (which may be replaced with one or more channels, signals, and combinations thereof, but in the following description of the disclosure, will be referred to as different antenna ports, as a whole, for the sake of convenience) may be associated with each other by a quasi-co-location (QCL) configuration as in Table 18 below. A TCI state is for announcing the QCL relation between a PDCCH (or a PDCCH DRMS) and another RS or channel, and the description that a reference antenna port A (reference RS #A) and another target antenna port B (target RS #B) are QCLed with each other means that the UE is allowed to apply some or all of large-scale channel parameters estimated in the antenna port A to channel measurement form the antenna port B. The QCL needs to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relations are supported in NR as in Table 18 below.

[Table 18]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

The QCL relations may be configured for the UE through RRC parameter TCI-state and QCL-info as in Table 19 below. Referring to Table 19, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) included in each TCI state includes the serving cell index and the BWP index of the reference RS indicated by the corresponding QCL information, the type and ID of the reference RS, and a QCL type as in Table 18 above.

[Table 19]

| TCI-State ::= | SEQUENCE { |
|---|---|
| tci-StateId | TCI-StateId, |
| (ID of corresponding TCI state) | |
| qcl-Type1 | QCL-Info, |
| (QCL information of first refernece RS of RS (target RS) referring to corresponding TCI state ID) | |

```
        qcl-Type2                    QCL-Info
            OPTIONAL,    -- Need R
        (QCL information of second refernece RS of RS (target RS)
referring to corresponding TCI state ID)
            ...
    }


QCL-Info ::=                        SEQUENCE {
        cell                        ServCellIndex
        OPTIONAL,    -- Need R
        (serving cell index of reference RS indicated by corresponding QCL
information)
        bwp-Id                      BWP-Id
                OPTIONAL, -- Cond CSI-RS-Indicated
        (BWP index of reference RS indicated by corresponding QCL
information)
        referenceSignal             CHOICE {
            csi-rs                       NZP-CSI-RS-ResourceId,
            ssb                          SSB-Index
            (one of CSI-RS ID or SSB ID indicated by corresponding
QCL information)
        },
        qcl-Type                    ENUMERATED {typeA, typeB,
typeC, typeD},
            ...
    }
```

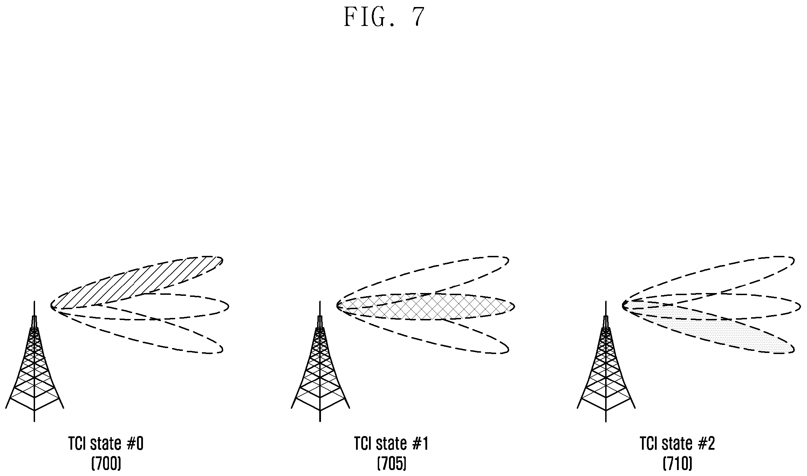

FIG. 7 illustrates an example of base station beam allocation according to a TCI state configuration. Referring to FIG. 7, the base station may transfer information regarding N different beams to the UE through N different TCI states. For example, in the case of N=3 as in FIG. 7, the base station may configure qcl-Type2 parameters included in three TCI states 700, 705, and 710 in QCL type D while being associated with CSI-RSs or SSBs corresponding to different beams, thereby notifying that antenna ports referring to the different TCI states 700, 705, and 710 are associated with different spatial Rx parameters, that is, different beams.

Tables 20 to 24 below enumerate valid TCI state configurations according to the target antenna port type.

Table 20 enumerates valid TCI state configurations when the target antenna port is a CSI-RS for tracking (TRS). The TRS refers to an NZP CSI-RS which has no repetition parameter configured therefor, and trs-Info of which is configured as "true", among CRI-RSs. In Table 20, configuration no. 3 may be used for an aperiodic TRS.

[Table 20] Valid TCI state configurations when the target antenna port is a CSI-RS for tracking (TRS)

| Valid TCI state Configuration | DL RS 1 | qcl-Type1 | DL RS 2 (If configured) | qcl-Type2 (If configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 21 enumerates valid TCI state configurations when the target antenna port is a CSI-RS for CSI. The CSI-RS for CSI refers to an NZP CSI-RS which has no parameter indicating repetition (for example, repetition parameter) configured therefor, and trs-Info of which is not configured as "true", among CRI-RSs.

[Table 21] Valid TCI state configurations when the target antenna port is a CSI-RS for CSI

| Valid TCI state Configuration | DL RS 1 | qcl-Type1 | DL RS 2 (If configured) | qcl-Type2 (If configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 22 enumerates valid TCI state configurations when the target antenna port is a CSI-RS for beam management (BM) (which has the same meaning as CSI-RS for L1 RSRP reporting). The CSI-RS for BM refers to an NZP CSI-RS which has are petition parameter configured to have a value of "on" or "off", and trs-Info of which is not configured as "true", among CRI-RSs.

[Table 22] Valid TCI state configurations when the target antenna port is a CSI-RS for BM (for L1 RSRP reporting)

| Valid TCI state Configuration | DL RS 1 | qcl-Type1 | DL RS 2 (If configured) | qcl-Type2 (If configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 23 enumerates valid TCI state configurations when the target antenna port is a PDSCH DMRS.

[Table 23] Valid TCI state configurations when the target antenna port is a PDCCH DMRS

| Valid TCI state Configuration | DL RS 1 | qcl-Type1 | DL RS 2 (If configured) | qcl-Type2 (If configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 24 enumerates valid TCI state configurations when the target antenna port is a PDSCH DMRS.

[Table 24] Valid TCI state configurations when the target antenna port is a PDSCH DMRS

| Valid TCI state Configuration | DL RS 1 | qcl-Type1 | DL RS 2 (If configured) | qcl-Type2 (If configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

According to a representative QCL configuration method based on Tables 20 to 24 above, the target antenna port and reference antenna port for each step are configured and operated such as "SSB" -> "TRS" -> "CSI-RS for CSI, or CSI-RS for BM, or PDCCH DMRS, or PDSCH DMRS". Accordingly, it is possible to help the UE's receiving operation by associating statistical characteristics that can be measured from the SSB and TRS with respective antenna ports.

[PDCCH: regarding TCI state]

Specific TCI state combinations applicable to a PDCCH DMRS antenna port may be given in Table 25 below. The fourth row in Table 25 corresponds to a combination assumed by the UE before RRC configuration, and no configuration is possible after the RRC.

[Table 25]

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

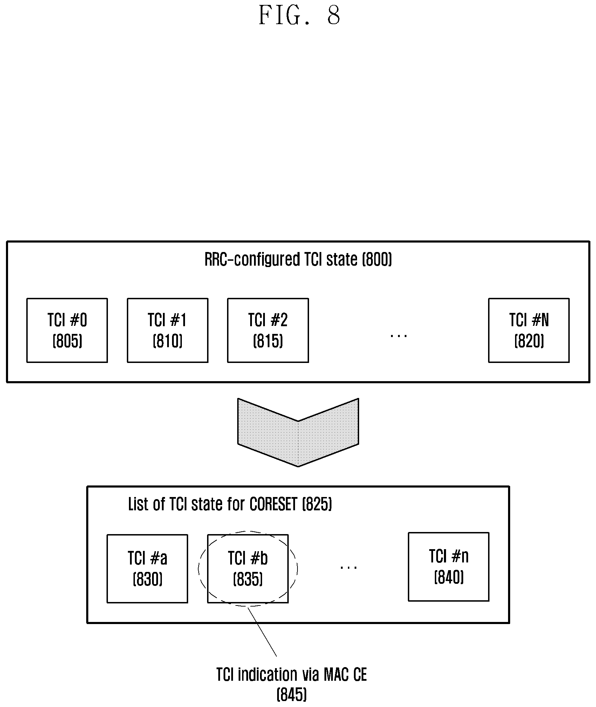

In NR, a hierarchical signaling method as illustrated in FIG. 8 is supported for dynamic allocation regarding a PDCCH beam. Referring to FIG. 8, the base station may configure N TCI states 805, 810, ..., 820 for the UE through RRC signaling 800, and may configure some thereof as TCI states for a CORESET (825). The base station may then indicate one of the TCI states 830, 835, and 840 for the CORESET to the UE through MAC CE signaling (845). The UE may then receive a PDCCH, based on beam information included in the TCI state indicated by the MAC CE signaling.

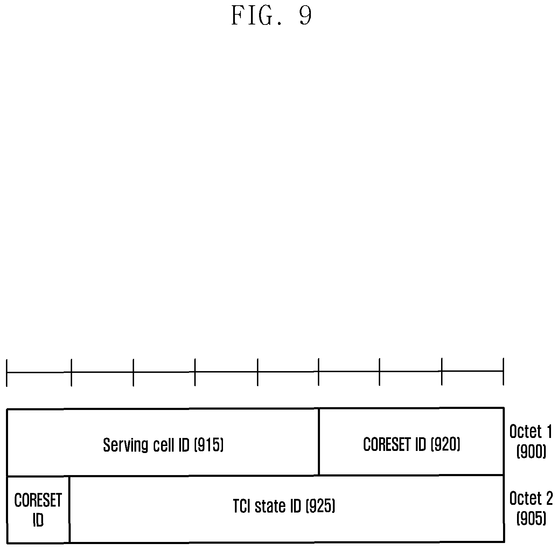

FIG. 9 illustrates a TCI indication MAC CE signaling structure for the PDCCH DMRS.
Referring to FIG. 9, the TCI indication MAC CE signaling for the PDCCH DMRS may be configured by 2 bytes (16bits), and include a 5-bit serving cell ID 915, a 4-bit CORESET ID 920, and a 7-bit TCI state ID 925.

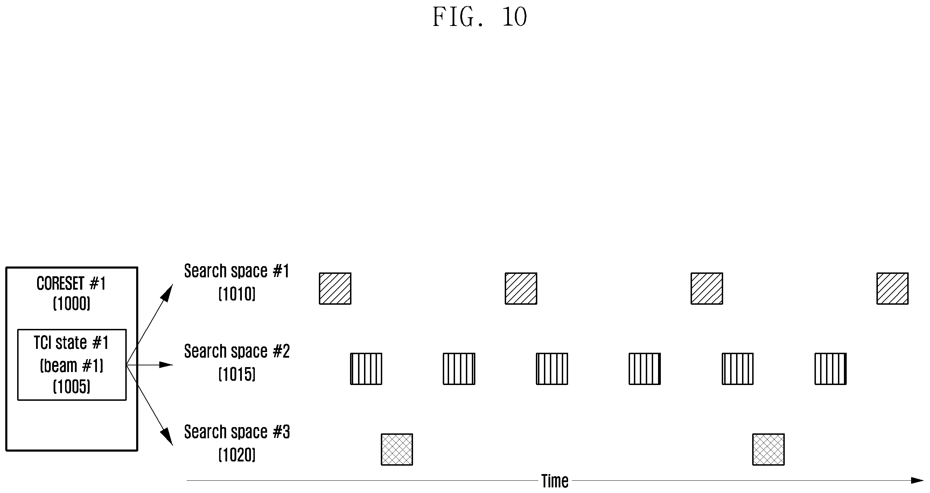

FIG. 10 illustrates an example of a beam configuration with regard to a control resource set (CORESET) and a search space according to the above description.
Referring to FIG. 10, the base station may indicate one of TCI state lists included in CORESET 1000 configuration through MAC CE signaling (1005). Until a different TCI state is indicated for the corresponding CORESET through different MAC CE signaling, the UE may consider that identical QCL information (beam #1) 1005 is all applied to one or more search spaces 1010, 1015, and 1020 connected to the CORESET. The above-described PDCCH beam allocation method may have a problem in that it is difficult to indicate a beam change faster than MAC CE signaling delay, and the same beam is unilaterally applied to each CORESET regardless of search space characteristics, thereby making flexible PDCCH beam operation difficult.
Following embodiments of the disclosure provide more flexible PDCCH beam configuration and operation methods. Although multiple distinctive examples will be provided for convenience of description of embodiments of the disclosure, they are not mutually exclusive, and can be combined and applied appropriately for each situation.
The base station may configure one or multiple TCI states for the UE with regard to a specific control resource set, and may activate one of the configured TCI states through a MAC CE activation command. For example, if {TCI state#0, TCI state#1, TCI state#2} are configured as TCI states for control resource set #1, the base station may transmit an activation command to the UE through a MAC CE such that TCI state#0 is assumed as the TCI state regarding control resource set #1. Based on the activation command regarding the TCI state received through the MAC CE, the UE may correctly receive the DMRS of the corresponding CORESET, based on QCL information in the activated TCI state.
With regard to a control resource set having a configured index of 0 (control resource set #0), if the UE has failed to receive a MAC CE activation command regarding the TCI state of control resource set #0, the UE may assume that the DMRS transmitted in CORESET #0has been QCL-ed with a SS/PBCH block identified in the initial access process, or in a non-contention-based random access process not triggered by a PDCCH command.

With regard to a control resource set having a configured index value other than 0 (CORESET #X), if the UE has no TCI state configured regarding CORESET #X, or if the UE has one or more TCI states configured therefor but has failed to receive a MAC CE activation command for activating one thereof, the UE may assume that the DMRS transmitted in CORESET #X has been QCL-ed with a SS/PBCH block identified in the initial access process.

[PDCCH: regarding QCL prioritization rule]

Hereinafter, operations for determining QCL priority regarding a PDCCH will be described in detail.

If multiple CORESETs which operate according to carrier aggregation inside a single cell or band and which exist inside a single or multiple in-cell activated bandwidth parts overlap temporally while having identical or different QCL-TypeD characteristics in a specific PDCCH monitoring occasion, the UE may select a specific CORESET according to a QCL priority determining operation and may monitor CORESETs having the same QCL-TypeD characteristics as the corresponding CORESET. That is, if multiple CORESETs overlap temporally, only one QCL-TypeD characteristic can be received. The QCL priority may be determined by the following criteria.

- Criterion 1: A CORESET connected to a common search space having the lowest index inside a cell corresponding to the lowest index among cells including a common search space
- Criterion 2: A CORESET connected to a UE-specific search space having the lowest index inside a cell corresponding to the lowest index among cells including a UE-specific search space

As described above, if one criterion among the criteria is not satisfied, the next criterion may be applied. For example, if control resource sets overlap temporally in a specific PDCCH monitoring occasion, and if all CORESETs are not connected to a common search space but connected to a UE-specific search space (for example, if criterion 1 is not satisfied), the UE may omit application of criterion 1 and apply criterion 2.

When selecting a CORESET according to the above-mentioned criteria, the UE may additionally consider the two aspects with regard to QCL information configured for the CORESET. Firstly, if CORESET 1 has CSI-RS 1 as a reference signal having a relation of QCL-TypeD, if this CSI-RS 1 has a relation of QCL-TypeD with reference signal SSB 1, and if another CORESET 2 has a relation of QCL-TypeD with reference signal SSB 1, the UE may consider that the two CORESETs 1 and 2 have different QCL-TypeD characteristics. Secondly, if CORESET 1 has CSI-RS 1 configured for cell 1 as a reference signal having a relation of QCL-TypeD, if this CSI-RS 1 has a relation of QCL-TypeD with reference signal SSB 1, if CORESET 2 has a relation of QCL-TypeD with reference signal CSI-RS 2 configured for cell 2, and if this CSI-RS 2 has a relation of QCL-TypeD with the same reference signal SSB 1, the UE may consider that the two CORESETs have the same QCL-TypeD characteristics.

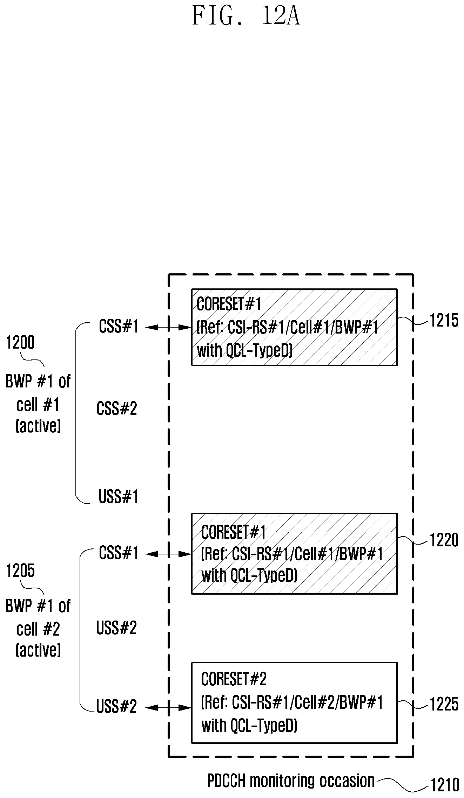

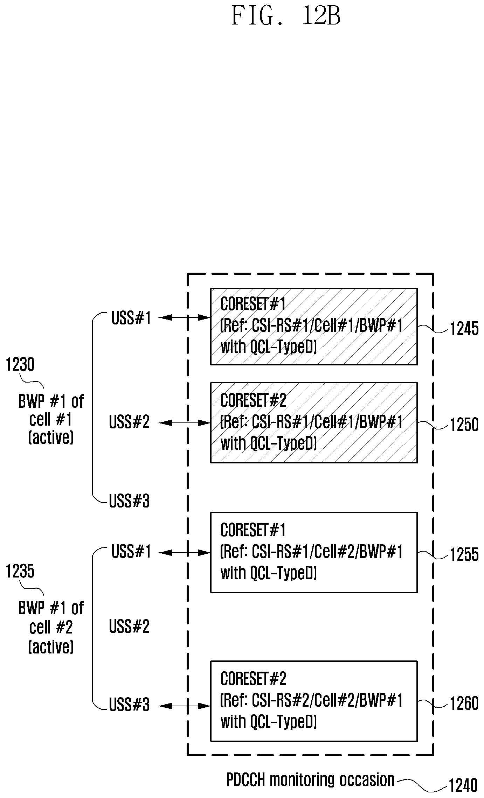

FIG. 12A and FIG. 12B illustrate a method in which, upon receiving a downlink control channel, a UE selects a receivable CORESET in consideration of priority in a wireless communication system according to an embodiment of the disclosure.

As an example, the UE may be configured to receive multiple CORESETs overlapping temporally in a specific PDCCH monitoring occasion 1210, and such multiple CORESETs may be connected to a common search space (CSS) or a UE-specific search space (USS) with regard to multiple cells.

In the corresponding PDCCH monitoring occasion 1210, CORESET #1 1215 connected to common search space #1 may exist in bandwidth part #1 1200 of cell #1 (or componewnt carrier (CC), CC #1), and CORESET #1 1220 connected to common search space #1 and CORESET #2 1225 connected to UE-specific search space #2 may exist in bandwidth part #1 1205 of cell #2 (or CC #2).

The CORESETs 1215 and 1220 may have a relation of QCL-TypeD with CSI-RS resource #1 configured in bandwidth part #1 of cell #1, and the CORESET 1225 may have a relation of QCL-TypeD with CSI-RS resource #1 configured in bandwidth part #1 of cell #2. If criterion 1 is applied to the corresponding PDCCH monitoring occasion 1210, all other CORESETs having the same reference signal of QCL-TypeD as CORESET #1 1215 may be received. Therefore, the UE may receive the CORESETs 1215 and 1220 in the corresponding PDCCH monitoring occasion 1210.

As another example, the UE may be configured to receive multiple CORESETs overlapping temporally in a specific PDCCH monitoring occasion 1240, and such multiple CORESETs may be connected to a common search space or a UE-specific search space with regard to multiple cells.

In the corresponding PDCCH monitoring occasion 1240, CORESET #1 1245 connected to UE-specific search space #1 and CORESET #2 1250 connected to UE-specific search space #2 may exist in bandwidth part #1 1230 of cell #1 (or CC #1), and CORESET #1 1255 connected to UE-specific search space #1 and CORESET.#2 1260 connected to UE-specific search space #3 may exist in bandwidth part #1 1235 of cell #2 (or CC #2).

The CORESETs 1245 and 1250 may have a relation of QCL-TypeD with CSI-RS resource #1 configured in bandwidth part #1 of cell #1, the CORESET 1255 may have a relation of QCL-TypeD with CSI-RS resource #1 configured in bandwidth part #1 of cell #2, and the CORESET 1260 may have a relation of QCL-TypeD with CSI-RS resource #2 configured in bandwidth part #1 of cell #2. If criterion 1 is applied to the corresponding PDCCH monitoring occasion 1240, there is no common search space, and the next criterion, that is, criterion 2, may thus be applied. If criterion 2 is applied to the corresponding PDCCH monitoring occasion 1240, all other CORESETs having the same reference signal of QCL-TypeD as CORESET #1 1245 may be received. Therefore, the UE may receive the CORESETs 1245 and 1250 in the corresponding PDCCH monitoring occasion 1240.

[Regarding rate matching/puncturing]

Hereinafter, a rate matching operation and a puncturing operation will be described in detail.
If time and frequency resource A to transmit symbol sequence A overlaps time and frequency resource B, a rate matching or puncturing operation may be considered as an operation of transmitting/receiving channel A in consideration of resource C (region in which resource A and resource B overlap). Specific operations may follow the following description.

## Rate matching operation

The base station may transmit channel A after mapping the same only to remaining resource domains other than resource C (area overlapping resource B) among the entire resource A which is to be used to transmit symbol sequence A to the UE. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the base station may transmit symbol sequence {symbol#1, symbol#2, symbol#3} after mapping the same to {resource#1, resource#2, resource#4}, respectively.
The UE may determine the resource A and resource B from scheduling information for the symbol sequence A from the base station, and thereby determine the resource C, which is an overlapping area of the resource A and resource B. The UE may receive symbol sequence A, based on an assumption that symbol sequence A has been mapped and transmitted in the remaining area other than resource C among the entire resource A. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3}(corresponding to resource C) among resource A. Consequently, the UE may perform a series of following receiving operations based on an assumption that symbol sequence {symbol#1, symbol#2, symbol#3} has been transmitted after being mapped to {resource#1, resource#2, resource#4}, respectively.

## Puncturing operation

If there is resource C (region overlapping resource B) among the entire resource A which is to be used to transmit symbol sequence A to the UE, the base station may map symbol sequence A to the entire resource A, but may not perform transmission in the resource area corresponding to resource C, and may perform transmission with regard to only the remaining resource area other than resource C among resource A. For example, if symbol sequence A is configured as {symbol#1, symbol#2, symbol#3, symbol#4}, if resource A is {resource#1, resource#2, resource#3, resource#4}, and if resource B is {resource#3, resource#5}, the base station may map symbol sequence A {symbol#1, symbol#2, symbol#3, symbol#4} to resource A {resource#1, resource#2, resource#3, resource#4}, respectively, may transmit only symbol sequence {symbol#1, symbol#2, symbol#4} corresponding to remaining resources {resource#1, resource#2, resource#4} other than {resource#3} corresponding to resource C among resource A, and may not transmit {symbol#3} mapped to {resource#3} corresponding to resource C. Consequently, the base station may transmit symbol sequence {symbol#1, symbol#2, symbol#4} after mapping the same to {resource#1, resource#2, resource#4}, respectively.
The UE may determine the resource A and resource B from scheduling information for the symbol sequence A from the base station, and thereby determine the resource C, which is an overlapping area of the resource A and resource B. The UE may receive symbol sequence A, based on an assumption that symbol sequence A has been mapped to the entire resource A but transmitted only in the remaining region other than resource C among the resource region A. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may assume that symbol sequence A {symbol#1, symbol#2, symbol#3, symbol#4} is mapped to resource A {resource#1, resource#2, resource#3, resource#4}, respectively, but {symbol#3} mapped to {resource#3} (corresponding to resource C) is not transmitted, and based on the assumption that symbol sequence {symbol#1, symbol#2, symbol#4} corresponding to remaining resources {resource#1, resource#2, resource#4} other than {resource#3} (corresponding to resource C) among resource A has been mapped and transmitted, the UE may receive the same. Consequently, the UE may perform a series of following receiving operations based on an assumption that symbol sequence {symbol#1, symbol#2, symbol#4} has been transmitted after being mapped to {resource#1, resource#2, resource#4}, respectively.

Hereinafter, a method for configuring a rate matching resource for the purpose of rate matching in a 5G communication system will be described. Rate matching refers to adjusting the size of a signal in consideration of the amount of resources that can be used to transmit the signal. For example, data channel rate matching may mean that a data channel is not mapped and transmitted with regard to specific time and frequency resource domains, and the size of data is adjusted accordingly.

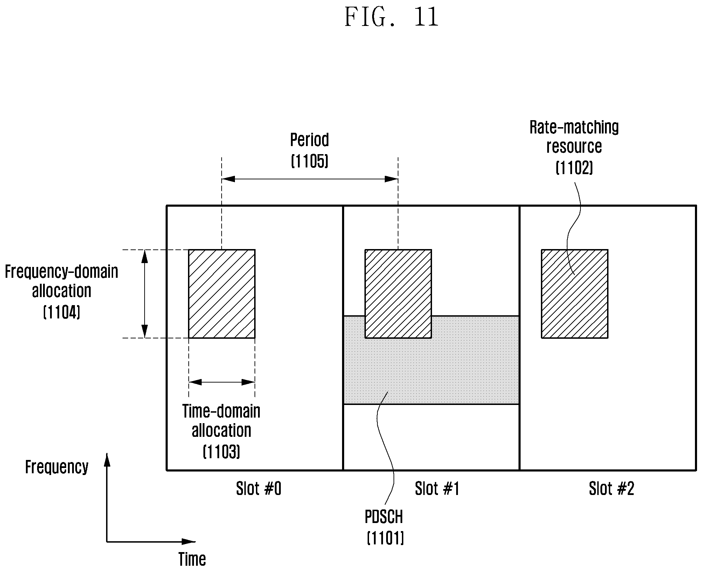

FIG. 11 illustrates a method in which a base station and a UE transmit/receive data in consideration of a downlink data channel and a rate matching resource.

FIG. 11 illustrates a downlink data channel (PDSCH) 1101 and a rate matching resource 1102. The base station may configure one or multiple rate matching resources 1102 for the UE through upper layer signaling (for example, RRC signaling). Rate matching resource 1102 configuration information may include time-domain resource allocation information 1103, frequency-domain resource allocation information 1104, and periodicity information 1105. A bitmap corresponding to the frequency-domain resource allocation information 1104 will hereinafter be referred to as "first bitmap", a bitmap corresponding to the time-domain resource allocation information 1103 will be referred to as "second bitmap", and a bitmap corresponding to the periodicity information 1105 will be referred to as "third bitmap". If all or some of time and frequency resources of the scheduled PDSCH 1101 overlap a configured rate matching resource 1102, the base station may rate-match and transmit the PDSCH 1101 in a rate matching resource 1102 part, and the UE may perform reception and decoding after assuming that the PDSCH 1101 has been rate-matched in a rate matching resource 1102 part.

The base station may dynamically notify the UE, through DCI, of whether the PDSCH will be rate-matched in the configured rate matching resource part through an additional configuration (for example, corresponding to "rate matching indicator" inside DCI format described above). Specifically, the base station may select some from the configured rate matching resources and group them into a rate matching resource group, and may indicate, to the UE, whether the PDSCH is rate-matched with regard to each rate matching resource group through DCI by using a bitmap type. For example, if four rate matching resources RMR#1, RMR#2, RMR#3, and RMR#4 are configured, the base station may configure a rate matching groups RMG#1={RMR#1, RMR#2}, RMG#2={RMR#3, RMR#4}, and may indicate, to the UE, whether rate matching occurs in RMG#1 and RMG#2, respectively, through a bitmap by using two bits inside the DCI field. For example, in a case where rate matching is to be conducted, the base station may indicate this case by "1", and in a case where rate matching is not to be conducted, the base station may indicate this case by "0".

5G supports granularity of "RB symbol level" and "RE level" as a method for configuring the above-described rate matching resources for a UE. More specifically, the following configuration method may be followed.

### <u>RB symbol level</u>

The UE may have a maximum of four RateMatchPatterns configured per each bandwidth part through higher layer signaling, and one RateMatchPattern may include the following contents.

- may include, in connection with a reserved resource inside a bandwidth part, a resource having time and frequency resource domains of the corresponding reserved resource configured as a combination of an RB-level bitmap and a symbol-level bitmap in the frequency domain. The reserved resource may span one or two slots. A time domain pattern (periodicityAndPattern) may be additionally configured wherein time and frequency domains including respective RB-level and symbol-level bitmap pairs are repeated.
- may include a resource area corresponding to a time domain pattern configured by time and frequency domain resource areas configured by a CORESET inside a bandwidth part and a search space configuration in which corresponding resource areas are repeated.

### <u>RE level</u>

The UE may have the following contents configured through upper layer signaling.

- configuration information (lte-CRS-ToMatchAround) regarding a RE corresponding to a LTE CRS (Cell-specific Reference Signal or common reference signal) pattern, which may include LTE CRS's port number (nrofCRS-Ports) and LTE-CRS-vshift(s) value (v-shift), location information (carrierFreqDL) of a center subcarrier of a LTE carrier from a reference frequency point (for example, reference point A), the LTE carrier's bandwidth size (carrierBandwidthDL) information, subframe configuration information (mbsfn-SubframConfigList) corresponding to a multicast-broadcast single-frequency network (MBSFN), and the like. The UE may determine the position of the CRS inside the NR slot corresponding to the LTE subframe, based on the above-mentioned pieces of information.

- may include configuration information regarding a resource set corresponding to one or multiple zero power (ZP) CSI-RSs inside a bandwidth part.

[Regarding UE capability report]

In LTE and NR, a UE may perform a procedure in which, while being connected to a serving base station, the UE may report capability supported by the UE to the corresponding base station. In the following description, the above-described procedure will be referred to as a UE capability report.

The base station may transfer a UE capability enquiry message to a UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE may configure UE capability according to band information and RAT type requested by the base station. The method in which the UE configures UE capability in an NR system is summarized below.

1. If the UE receives a list regarding LTE and/or NR bands from the base station at a UE capability request, the UE constructs band combinations (BCs) regarding EN-DC and NR standalone(SA). That is, the UE may configure a candidate list of BCs regarding EN-DC and NR SA, based on bands received from the base station at a request through FreqBandList. In addition, bands may have priority in the order described in FreqBandList.

2. If the base station sets "eutra-nr-only" flag or "eutra" flag and requests a UE capability report, the UE removes everything related to NR SA BCs from the configured BC candidate list. Such an operation may occur only if an LTE base station (eNB) requests "eutra" capability.

3. The UE may then remove fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step may be applied in MR-DC as well, that is, LTE bands may also be applied. BCs remaining after the above step constitute the final "candidate BC list".

4. The UE may select BCs appropriate for the requested RAT type from the final "candidate BC list" and select BCs to report. In this step, the UE configures supportedBandCombinationList in a determined order. That is, the UE configures BCs and UE capability to report according to a preconfigured rat-Type order. (nr -> eutra-nr -> eutra). In addition, the UE configures featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of containers of UE-NR-Capabilities and UE-MRDC-Capabilities.

5. If the requested RAT type is eutra-nr and has an influence, featureSetCombinations is included on both containers of UE-MRDC-Capabilities and UE-NR-Capabilities. However, the feature set of NR may be included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

[Regarding CA/DC]

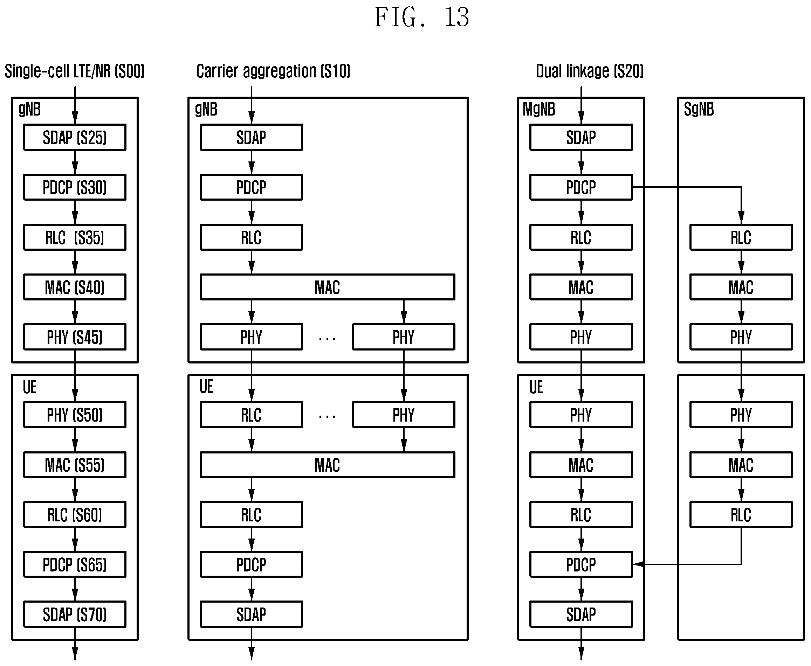

FIG. 13 illustrates radio protocol structures of a base station and a UE in single cell, carrier aggregation, and dual connectivity situations according to an embodiment of the disclosure.

Referring to FIG. 13, a radio protocol of a next-generation mobile communication system includes an NR service data adaptation protocol (SDAP) S25 or S70, an NR packet data convergence protocol (PDCP) S30 or S65, an NR radio link control (RLC) S35 or S60, and an NR medium access controls (MAC) S40 or S55, on each of UE and NR base station sides.

The main functions of the NR SDAP S25 or S70 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating QoS. The QoS information may be used as data processing priority, scheduling information, etc. for smoothly supporting services.

The main functions of the NR PDCP S30 or S65 may include some of functions below.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above-mentioned functions, the reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC S35 or S60 may include some of functions below.

- Transfer of upper layer PDUs
- In-sequence delivery of upper layer PDUs
- Out-of-sequence delivery of upper layer PDUs
- Error Correction through ARQ
- Concatenation, segmentation, and reassembly of RLC SDUs
- Re-segmentation of RLC data PDUs
- Reordering of RLC data PDUs
- Duplicate detection
- Protocol error detection
- RLC SDU discard
- RLC re-establishment

In the above-mentioned functions, the in-sequence delivery of the NR RLC device refers to a function of delivering RLC SDUs, received from the lower layer, to the upper layer in sequence. The in-sequence delivery of the NR RLC device may include a function of reassembling and delivering multiple RLC SDUs received, into which one original RLC SDU has been segmented, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs. The in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all RLC SDUs received until now to the higher layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC S40 or S55 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer S45 or S50 may perform operations of channel coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as S00. On the other hand, in case that the base station transmits data to the UE, based on carrier aggregation(CA) which uses multiple carriers in a single TRP, the base station and the UE may use a protocol structure which has a single structure up to the RLC, but multiplexes the PHY layer through a MAC layer, such as S10. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as S20.

[Regarding NC-JT

According to an embodiment of the disclosure, in order to receive a PDSCH from a plurality of TRPs, the UE may use non-coherent joint transmission (NC-JT).

Unlike the conventional system, the 5G wireless communication system may support not only a service requiring a high transmission rate, but also a service having a very short transmission delay and a service requiring a high connection density. In a wireless communication network including multiple cells, transmission and reception points (TRPs), or beams, cooperative communication (coordinated transmission) between the respective cells, TRPs, or/and beams may satisfy various service requirements by enhancing the strength of a signal received by a UE or efficiently performing interference control between the respective cells, TRPs, or/and beams.

Joint transmission (JT) is a representative transmission technology for the coordinated communication and may increase the strength of a signal received by the UE or throughput by transmitting signals to one UE through different cells, TRPs, and/or beams. Here, a channel between respective cells, TRPs, and/or beam and the UE may have different characteristics, and particularly, non-coherent joint transmission (NC-JT) supporting non-coherent precoding between respective cells, TRPs, and/or beams may need individual precoding, MCS, resource allocation, and TCI indication according to the channel characteristics for each link between respective cells, TRPs, and/or beam and the UE.

The aforementioned NC-JT transmission may be applied to at least one channel among a downlink data channel (physical downlink shared channel (PDSCH)), a downlink control channel (physical downlink control channel (PDCCH)), an uplink data channel (physical uplink shared channel (PUSCH)), and an uplink control channel (physical uplink control channel (PUCCH)). During PDSCH transmission, transmission information such as precoding, MCS, resource allocation, and TCI may be indicated through DL DCI, and should be independently indicated for each cell, TRP, and/or beam for the NC-JT. This is a significant factor that increases payload required for DL DCI transmission, which may have a bad influence on reception performance of a PDCCH for transmitting the DCI. Accordingly, in order to support JT of the PDSCH, carefully designing a tradeoff between an amount of DCI information and reception performance of control information is required.

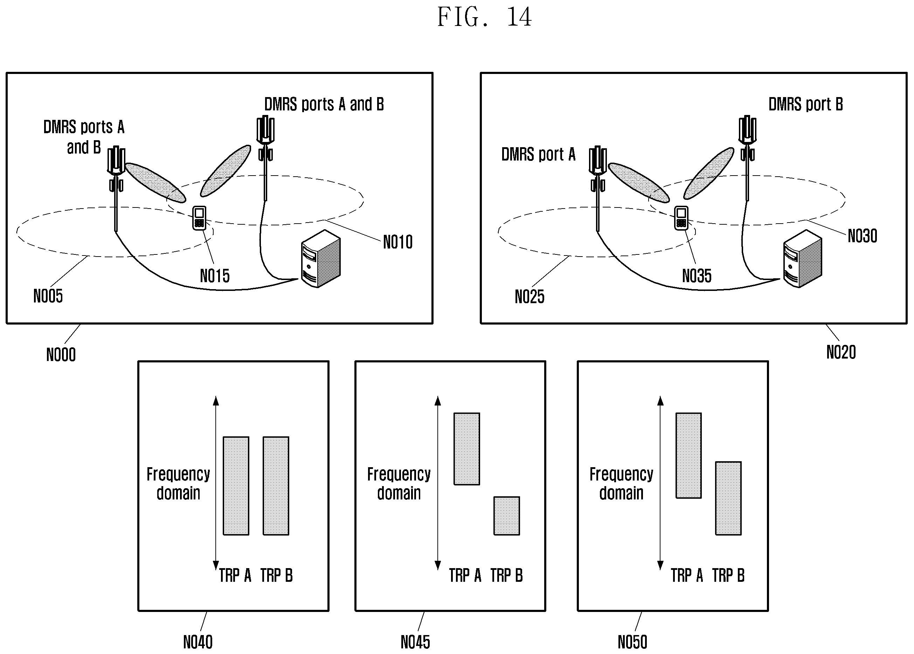

FIG. 14 illustrates an example of an antenna port configuration and resource allocation for PDSCH transmission using cooperative communication in the wireless communication system according to an embodiment of the disclosure.

Referring to FIG. 14, an example for PDSCH transmission is described for each joint transmission (JT) scheme, and examples for radio resource allocation for each TRP are illustrated.

Referring to FIG. 14, an example 1400 of coherent joint transmission (C-JT) supporting coherent precoding between respective cells, TRPs, and/or beams is illustrated.

In the case of C-JT, a TRP A 1405 and a TRP B 1410 transmit single data (PDSCH) to a UE 1415, and multiple TRPs may perform joint precoding. This may signify that the TRP A 1405 and a TRP B 1410 transmit DMRSs through the same DMRS ports in order to transmit the same PDSCH. For example, the TRP A 1405 and a TRP B 1410 may transmit DMRSs to the UE through a DMRS port A and a DMRS port B, respectively. In this case, the UE may receive one piece of DCI information for receiving one PDSCH demodulated based on the DMRSs transmitted through the DMRS port A and the DMRS port B.

FIG. 14 illustrates an example 1420 of non-coherent joint transmission (NC-JT) supporting non-coherent precoding between respective cells, TRPs, and/or beams for PDSCH transmission.

In the case of NC-JT, the PDSCH is transmitted to a UE 1435 on a pe- cell, per-TPR, and/or per-beam basis, and individual precoding may be applied to each PDSCH. Respective cells, TRPs, and/or beams may transmit different PDSCHs or different PDSCH layers to the UE, thereby improving throughput compared to single cell, TRP, and/or beam transmission. Further, respective cells, TRPs, and/or beams may repeatedly transmit the same PDSCH to the UE, thereby improving reliability compared to single cell, TRP, and/or beam transmission. For the sake of descriptive convenience, a cell, a TRP, and/or a beam may be collectively referred to as a TRP.

In this case, various radio resource allocations may be considered, such as a case 1440 where frequency and time resources used in multiple TRPs for PDSCH transmission are all identical, a case 1445 where frequency and time resources used in multiple TRPs do not overlap at all, and a case 1450 where some of frequency and time resources used in multiple TRPs overlap.

In order to support NC-JT, DCI of various types, structures, and relations may be considered to assign multiple PDSCHs simultaneously to a single UE.

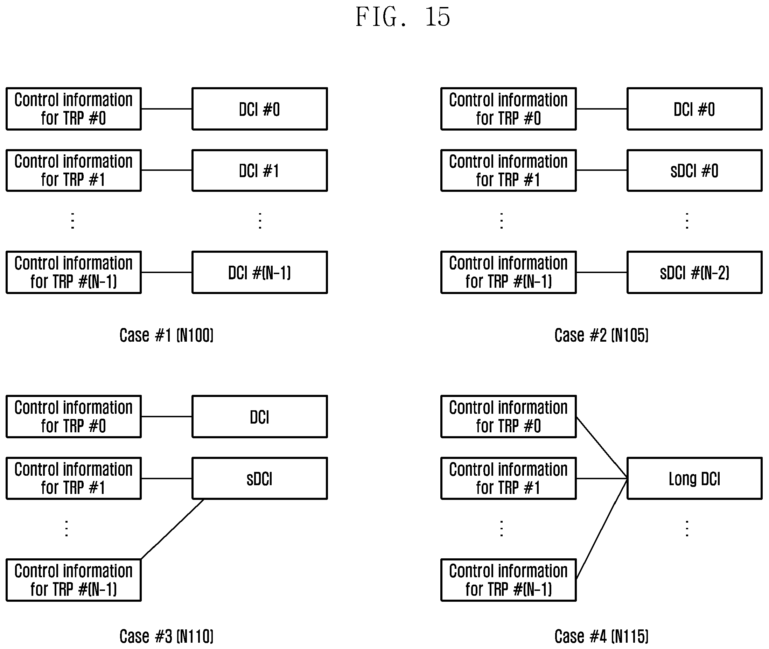

FIG. 15 illustrates examples of a configuration of downlink control information (DCI) for NC-JT in which respective TRPs transmit different PDSCHs or different PDSCH layers to a UE in the wireless communication system according to an embodiment of the disclosure.

Referring to FIG. 15, case #1 1500 is an example in which, in a situation where different N-1 PDSCHs are transmitted from N-1 additional TRPs (TRP#1 to TRP#(N-1)) in addition to a serving TRP (TRP#0) used during single PDSCH transmission, control information for PDSCHs transmitted in the additional N-1 TRPs is transmitted independently of control information for a PDSCH transmitted in the serving TRP. That is, the UE may acquire control information for PDSCHs transmitted from different TRPs (TRP#0 to TRP#N-1) via independent pieces of DCI (DCI#0 to DCI#(N-1)). Formats between the independent pieces of DCI may be the same or different from each other, and payloads between the pieces of DCI may also be the same or different from each other. In case #1 described above, a degree of freedom of PDSCH control or allocation may be completely guaranteed, but when respective pieces of the DCI are transmitted by different TRPs, a difference between DCI coverages may be generated and reception performance may deteriorate.

Case #2 1505 is an example in which pieces of control information (DCI) for PDSCHs of (N-1) additional TRPs are transmitted and each piece of the DCI is dependent on control information for the PDSCH transmitted from the serving TRP in a situation in which (N-1) different PDSCHs are transmitted from (N-1) additional TRPs (TRP#1 to TRP#(N-1)) other than the serving TRP (TRP#0) used for single PDSCH transmission.

For example, DCI#0 that is control information for a PDSCH transmitted from the serving TRP (TRP#0) may include all information elements of DCI format 1_0, DCI format 1_1, and DCI format 1_2, but shortened DCIs (hereinafter, referred to as sDCIs) (sDCI#0 to sDCI#(N-2)) that are control information for PDSCHs transmitted from the cooperative TRPs (TRP#1 to TRP#(N-1)) may include only some of the information elements of DCI format 1_0, DCI format 1_1, and DCI format 1_2. Accordingly, in the case of sDCI for transmission of the control information for the PDSCHs transmitted from the cooperative TRPs, a payload is small compared to normal DCI (nDCI) for transmission of the control information related to the PDSCH transmitted from the serving TRP, so that reserved bits may be included in comparison with nDCI.

In case #2 described above, a degree of freedom of each PDSCH control or allocation may be limited according to content of information elements included in the sDCI, but reception capability of the sDCI is better than the nDCI, and thus a probability of the generation of difference between DCI coverages may become lower.

Case #3 1510 is an example in which one piece of control information for PDSCHs of (N-1) additional TRPs is transmitted and the DCI is dependent on control information for the PDSCH transmitted from the serving TRP in a situation in which (N-1) different PDSCHs are transmitted from (N-1) additional TRPs (TRP#1 to TRP#(N-1)) other than the serving TRP (TRP #0) used for single PDSCH transmission.

For example, in the case of DCI#0 that is control information for the PDSCH transmitted from the serving TRP (TRP#0), all information elements of DCI format 1_0, DCI format 1_1, and DCI format 1_2 may be included, and in the case of control information for PDSCHs transmitted from cooperative TRPs (TRP#1 to TRP#(N-1)), only some of the information elements of DCI format 1_0, DCI format 1_1, and DCI format 1_2 may be gathered in one "secondary" DCI (sDCI) and transmitted. For example, the sDCI may include at least one piece of HARQ-related information, such as frequency domain resource assignment, time domain resource assignment, and MCS of cooperative TRPs. In addition, information that is not included in the sDCI, such as a bandwidth part (BWP) indicator or a carrier indicator, may follow the DCI (DCI #0, normal DCI, or nDCI) of the serving TRP.

In case #3 1510, a degree of freedom of PDSCH control or allocation may be limited according to content of the information elements included in the sDCI but reception performance of the sDCI can be controlled, and case #3 1510 may have smaller complexity of DCI blind decoding of the UE compared to case #1 1500 or case #2 1505.

Case #4 1515 is an example in which control information for PDSCHs transmitted from (N-1) additional TRPs is transmitted in the DCI (long DCI) that is the same as that of control information for the PDSCH transmitted from the serving TRP in a situation in which different (N-1) PDSCHs are transmitted from the (N-1) additional TRPs (TRP#1 to TRP#(N-1)) other than the serving TRP (TRP#0) used for single PDSCH transmission. That is, the UE may acquire control information for PDSCHs transmitted from different TRPs (TRP#0 to TRP#(N-1)) through single DCI. In case #4 1515, complexity of DCI blind decoding of the UE may not be increased, but a degree of freedom of PDSCH control or allocation may be low since the number of cooperative TRPs is limited according to long DCI payload restriction.

In the following description and embodiments, sDCI may refer to various pieces of supplementary DCI such as shortened DCI, secondary DCI, or normal DCI (DCI formats 1_0 and 1_1 described above) including PDSCH control information transmitted in the cooperative TRP, and unless specific restriction is mentioned, the corresponding description may be similarly applied to the various pieces of supplementary DCI.

In the following description and embodiments, case #1 1500, case #2 1505, and case #3 1510 in which one or more pieces of DCI (or PDCCHs) are used to support NC-JT may be classified as multiple PDCCH-based NC-JT, and case #4 1515 in which single DCI (or PDCCH) is used to support NC-JT may be classified as single PDCCH-based NC-JT. In multiple-PDCCH-based PDSCH transmission, a CORESET in which DCI of the serving TRP (TRP#0) is scheduled and a CORESET in which DCI of the cooperative TRPs (TRP#1 to TRP#N-1) are scheduled may be distinguished. A method of distinguishing between the CORESETs may include a distinguishing method through a higher-layer indicator for each CORESET and a distinguishing method through a beam configuration for each CORESET. Furthermore, in single PDCCH-based NC-JT, single DCI schedules a single PDSCH having a plurality of layers instead of scheduling a plurality of PDSCHs, and the plurality of layers may be transmitted from a plurality of TRPs. In this case, association between a layer and a TRP transmitting the corresponding layer may be indicated through a transmission configuration indicator (TCI) indication for the layer.

In embodiments of the disclosure, "cooperative TRP" may be replaced with various terms, such as "cooperative panel" or "cooperative beam" when actually applied.

According to embodiments of the disclosure, "the case in which NC-JT is applied" may be variously interpreted as "the case in which the UE simultaneously receives one or more PDSCHs in one BWP", "the case in which the UE simultaneously receives PDSCHs based on two or more transmission configuration indicator (TCI) indications in one BWP", and "the case in which the PDSCHs received by the UE are associated with one or more DMRS port groups" according to circumstances, but is used by one expression for convenience of description.

As used herein, a radio protocol structure for NC-JT may be used in various ways according to a TRP deployment scenario. For example, if there is a small backhaul delay or no backhaul delay between cooperative TRPs, a method (CA-like method) using a structure based on MAC layer multiplexing is possible in a similar manner to reference numeral S10 of FIG. 13. On the other hand, if a backhaul delay between cooperative TRPs is so large that the backhaul delay cannot be ignored (e.g., when a time of 2ms or longer is required for exchange of information, such as CSI, scheduling, and HARQ-ACK, between the cooperative TRPs), a method (DC-like method) of securing characteristics robust to a delay by using an independent structure for each TRP starting from the RLC layer is possible in a similar manner to reference numeral S20 of FIG. 13.

The UE supporting C-JT/NC-JT may receive a C-JT/NC-JT-related parameter, a setting value, or the like from a higher-layer configuration, and based thereon, set an RRC parameter of the UE. For the higher-layer configuration, the UE may use a UE capability parameter, for example, tci-StatePDSCH. The UE capability parameter, for example, tci-StatePDSCH may define TCI states for the purpose of PDSCH transmission, the number of the TCI states may be configured to be 4, 8, 16, 32, 64, and 128 in FR1 and configured to be 64 and 128 in FR2, and among the configured numbers, up to 8 states that may be indicated by 3 bits of a TCI field in the DCI may be configured via a MAC CE message. A maximum value 128 refers to a value indicated by maxNumberConfiguredTCI statesPerCC within the parameter tci-StatePDSCH which is included in capability signaling of the UE. In this way, a series of configuration procedures from the higher-layer configuration to the MAC CE configuration may be applied to a beamforming change command or a beamforming indication for at least one PDSCH in one TRP.

[Multi-DCI-based Multi-TRP]

According to an embodiment of the disclosure, a downlink control channel for NC-JT transmission may be configured based on multiple PDCCHs.

In NC-JT based on multiple PDCCHs, there may be a CORESET or a search space separated for each TRP when the DCI for scheduling the PDSCH of each TRP is transmitted. The CORESET or the search space for each TRP can be configured according to at least one of the following configuration cases.

* Higher-layer index configuration for each CORESET: CORESET configuration information configured via a higher layer may include an index value, and a TRP for PDCCH transmission in a corresponding CORESET may be distinguished by a configured index value for each CORESET. That is, in a set of CORESETs having the same higher-layer index value, it may be considered that the same TRP transmits the PDCCH or that the PDCCH for scheduling the PDSCH of the same TRP is transmitted. The index for each CORESET may be named CORESETPoolIndex, and it may be considered that the PDCCH is transmitted from the same TRP in CORESETs in which the same CORESETPoolIndex value is configured. In the case of a CORESET for which no CORESETPoolIndex value has been configured, it may be considered that a default value has been configured for CORESETPoolIndex, and the default value may be 0.

* Multiple-PDCCH-Config configuration: Multiple values of PDCCH-Config may be configured in one BWP, and each PDCCH-Config may include a PDCCH configuration for each TRP. That is, a list of CORESETs for each TRP and/or a list of search spaces for each TRP may be configured in one PDCCH-Config, and one or more CORESETs and one or more search spaces included in one PDCCH-Config may be considered or determined to correspond to a specific TRP.

* CORESET beam/beam group configuration: A TRP corresponding to a corresponding CORESET may be distinguished via a beam or beam group configured for each CORESET. For example, if the same TCI state is configured for multiple CORESETs, it may be considered or determined that the CORESETs are transmitted via the same TRP, or that a PDCCH for scheduling of a PDSCH of the same TRP is transmitted in the corresponding CORESET.

* Search space beam/beam group configuration: A beam or beam group may be configured for each search space, and a TRP for each search space may be distinguished based on the configured beam or beam group. For example, if the same beam/beam group or TCI state is configured in a plurality of search spaces, the same TRP may transmit the PDCCH in the corresponding search space or a PDCCH for scheduling a PDSCH of the same TRP may be transmitted in the corresponding search space.

As described above, by distinguishing between the CORESETs or search spaces according to TRPs, it may be possible to classify PDSCH and HARQ-ACK information for each TRP, and based on this, it may be possible to independently generate an HARQ-ACK codebook and independently use a PUCCH resource for each TRP.

The configuration may be independent for each cell or each BWP. For example, while two different CORESETPoolIndex values are configured for a PCell, a CORESETPoolIndex value may not be configured for a specific SCell. In this case, it may be considered or determined that NC-JT transmission has been configured for the PCell, whereas NC-JT transmission has not been configured for the SCell for which no CORESETPoolIndex value has been configured.

[Single-DCI-based multi-TRP]

According to another embodiment of the disclosure, a downlink beam for NC-JT transmission may be configured based on a single PDCCH.

In single-PDCCH-based NC-JT, PDSCHs transmitted by multiple TRPs may be scheduled via one piece of DCI. In this case, the number of TCI states may be used as a method for indicating the number of TRPs which transmit corresponding PDSCHs. That is, if the number of TCI states indicated in DCI for scheduling of a PDSCH is two, single-PDCCH-based NC-JT transmission may be considered, and if the number of TCI states is one, single-TRP transmission may be considered. The TCI states indicated by the DCI may correspond to one or two TCI states among TCI states activated by the MAC CE. If the TCI states of the DCI correspond to two TCI states activated by the MAC CE, a TCI codepoint indicated by the DCI is associated with the TCI states activated by the MAC CE, and this may correspond to a case in which the number of TCI states activated by the MAC CE, corresponding to the TCI codepoint, is 2.

The configuration may be independent for each cell or each BWP. For example, the number of activated TCI states corresponding to one TCI codepoint is a maximum of 2 in a PCell, but the number of activated TCI states corresponding to one TCI codepoint may be a maximum of 1 in a particular SCell. In this case, it may be considered that NC-JT is configured in the PCell, but NC-JT is not configured in the SCell.

Referring to the above-described descriptions related to PDCCH and beam configuration, in Rel-15 and Rel-16 NR, PDCCH repetition transmission is not supported, making it difficult to achieve required reliability in scenarios requiring high reliability, such as URLLC. Specifically, referring to the above-described descriptions related to PDCCH transmission/reception configuration and transmission beam configuration, in current Rel-15/16 NR, within a specific PDCCH monitoring interval, for a plurality of CORESETs that may be configured for a single cell or multiple cells, only CORESETs having the same QCL-TypeD characteristics as a CORESET determined according to the above-described rules could be received. In other words, within a specific PDCCH monitoring interval, reception using only one QCL-TypeD has been possible for a plurality of CORESETs overlapping in time.

Meanwhile, in Rel-17 further enhanced MIMO (FeMIMO), standardization is in progress for a method of improving PDCCH reception reliability through repeated transmission of a PDCCH. Representative methods for repeated transmission of a PDCCH may include a method in which CORESETs respectively associated with a plurality of search spaces explicitly linked through higher layer signaling are repeatedly transmitted through different TRPs by separating time or frequency resources, and a method in which a plurality of TCI states are configured for one CORESET and repeated transmission is performed using a single frequency network (SFN) scheme. As described above, in the case of PDCCH repetition transmission, repeated transmission is performed using a plurality of QCL-TypeDs from a plurality of TRPs within a specific time period. Therefore, in order to enable reception thereof, a constraint that currently allows reception of a plurality of CORESETs overlapping in time using only one QCL-TypeD characteristic needs to be relaxed.

The disclosure may improve the PDCCH reception reliability of a UE by providing a PDCCH repetitive transmission method through multiple transmission points (TRPs). The disclosure may enable a UE to receive PDCCH repetitive transmission by providing a method of determining priority of CORESET reception during PDCCH repetitive transmission considering multiple TRPs. Specific methods thereof will be described hereinafter through the embodiments below.

Hereinafter, embodiments of the disclosure will be described in detail in conjunction with the accompanying drawings. The contents of the disclosure may be applied to frequency division duplex (FDD), time division duplex (TDD), and cross division duplex (XDD) (or full duplex radio (FDR) or subband non-overlapping full duplex (SBFD)) systems. Hereinafter, in the disclosure, upper signaling (or higher layer signaling) refers to a method of signal transmission in which a signal is transmitted from the base station to the UE by using a downlink physical data channel of a physical layer or from the UE to the base station by using an uplink physical data channel of the physical layer, and the upper signaling may be referred to as RRC signaling, PDCP signaling, or a medium access control (MAC) control element (MAC CE).

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, for the sake of descriptive convenience, a cell, a transmission point, a panel, a beam, and/or a transmission direction which can be distinguished through a higher layer/L1 parameter, such as a TCI state or spatial relation information, a cell ID, a TRP ID, or a panel ID, may be described as a TRP, a beam, or a TCI state as a whole. Therefore, when actually applied, a TRP, a beam, or a TCI state may be appropriately replaced with one of the above terms.

In the following description, a base station is an entity that allocates resources to terminals, and may be at least one of a gNode B, a gNB, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function.

In the following description of embodiments of the disclosure, 5G systems are described by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD, TDD, and XDD (or FDR or SBFD) systems.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, higher layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

The names of information elements (IEs) as used here below are only an example, and the disclosure is not limited to specific IE names.

Hereinafter, the above examples may be described through several embodiments, but they are not independent of each other, and one or more embodiments may be applied simultaneously or in combination.

<First Embodiment: Multi-TRP-based PDCCH repetition transmission method>

In an embodiment of the disclosure, a PDCCH repetition transmission method considering multiple TRPs is described. When PDCCH repetition transmission is performed considering multiple TRPs, various methods may exist depending on a manner in which respective TCI states to be applied for PDCCH transmission at each TRP are applied to various parameters used for PDCCH transmission. For example, various parameters used for PDCCH transmission to which different TCI states are applied may include a CCE, PDCCH candidates, CORESETs, and search spaces. In PDCCH repetition transmission considering multiple TRPs, reception schemes of a UE may include a soft combining scheme, a selection scheme, and the like.

For PDCCH repetition transmission through multiple TRPs, the following five methods may exist, and a base station may configure at least one of the five methods for a UE through higher layer signaling, indicate the same through L1 signaling, or configure and indicate the same through a combination of higher layer signaling and L1 signaling.

[Method 1-1] Method for multiple PDCCH repetition transmissions having the same payload

Method 1-1 is a method of repeatedly transmitting multiple pieces of control information having the same DCI format and payload. Each of the above-described pieces of control information may indicate information for scheduling a PDSCH that is repeatedly transmitted, for example, {PDSCH#1, PDSCH#2, ..., PDSCH#Y} that is repeatedly transmitted over a plurality of slots. Having identical payloads for the repeatedly transmitted control information may be expressed as all PDSCH scheduling information included in each piece of control information being identical, the PDSCH scheduling information including, for example, a number of PDSCH repetition transmissions, time-domain PDSCH resource allocation information, i.e., a slot offset (K_0) between the control information and PDSCH#1 and a number of PDSCH symbols, frequency-domain PDSCH resource allocation information, DMRS port allocation information, PDSCH-to-HARQ-ACK timing, a PUCCH resource indicator, and the like. A UE may improve reception reliability of the control information by soft-combining repeatedly transmitted control information having the same payload.

In order to perform the above-described soft combining, the UE needs to know in advance a resource location of the control information to be repeatedly transmitted and the number of repetition transmissions. To this end, the base station may indicate in advance time-domain, frequency-domain, and spatial-domain resource configurations of the above-described repeatedly transmitted control information.

When control information is repeatedly transmitted in the time domain, the control information may be repeatedly transmitted across different CORESETs, may be repeatedly transmitted across different search space sets within one CORESET, or may be repeatedly transmitted across different PDCCH monitoring occasions within one CORESET and one search space set. A unit of a resource repeatedly transmitted in the time domain (e.g., a CORESET unit, a search space set unit, or a PDCCH monitoring occasion unit) and a location of a resource for repeated transmission (e.g., a PDCCH candidate index) may be indicated through higher layer configuration of the base station. At this time, the number of PDCCH repetition transmissions and/or a list of TRPs participating in the repetition transmission and a transmission pattern may be explicitly indicated, and as an explicit indication method, higher layer indication or MAC-CE/L1 signaling may be used. At this time, the list of TRPs may be indicated in the form of a TCI state or in the form of the above-described QCL assumption.

When control information is repeatedly transmitted in the frequency domain, the control information may be repeatedly transmitted across different CORESETs, may be repeatedly transmitted across different PDCCH candidates within one CORESET, or may be repeatedly transmitted for each CCE. A unit of a resource repeatedly transmitted in the frequency domain and a location of a resource for repeated transmission may be indicated through higher layer configuration of the base station. In addition, the number of repetition transmissions and/or a list of TRPs participating in the repetition transmission and a transmission pattern may be explicitly indicated, and as an explicit indication method, higher layer indication or MAC-CE/L1 signaling may be used. In this case, the list of TRPs may be indicated in the form of a TCI state or in the form of the above-described QCL assumption.

When control information is repeatedly transmitted in the spatial domain, the control information may be repeatedly transmitted across different CORESETs, or repeated transmission may be performed by configuring two or more TCI states in one CORESET.

[Method 1-2] Method of repeatedly transmitting multiple pieces of control information in which the DCI format and/or payload may differ

Method 1-2 is a method of repeatedly transmitting multiple pieces of control information (e.g., DCI) in which the DCI format and/or payload may differ. These pieces of control information are used to schedule PDSCH repetition transmissions, and the number of PDSCH repetition transmission indicated by each piece of control information may differ from one another. For example, PDCCH#1 may indicate information for scheduling {PDSCH#1, PDSCH#2, ..., PDSCH#Y}, PDCCH#2 may indicate information for scheduling {PDSCH#2, ..., PDSCH#Y}, and ..., PDCCH#X may indicate information for scheduling {PDSCH#Y}. Differently from Method 1-1, the above-described control information repetition transmission method has an advantage in that a total delay time required for control information and PDSCH repetition transmission may be reduced. On the other hand, since payloads of the repeatedly transmitted control information may differ from each other, soft combining of the repeatedly transmitted control information may not be possible, and thus reliability may be lower than that of Method 1-1.

In Method 1-2 described above, a UE may not need to know in advance resource locations and the number of repetitions of control information to be repeatedly transmitted, and the UE may independently decode and process each piece of repeatedly transmitted control information. If the UE decodes a plurality of repeatedly transmitted pieces of control information scheduling the same PDSCH, the UE may process only the first repeatedly transmitted control information and ignore the second and subsequent repeatedly transmitted control information. Alternatively, resource locations and the number of repetitions of control information to be repeatedly transmitted may be indicated in advance, and an indication method may be the same as the method described in Method 1.

[Method 1-3] Method of repeatedly transmitting multiple pieces of control information having different DCI formats and/or payloads, respectively

Method 1-3 is a method of repeatedly transmitting, respectively, multiple pieces of control information in which the DCI format and/or payload may differ. In this case, each piece of repeatedly transmitted control information has the same DCI format and payload. For example, a first DCI format having a first payload may be repeatedly transmitted, and a second DCI format having a second payload may also be repeatedly transmitted. In Method 1-2 described above, since soft combining is not possible for a plurality of pieces of control information, reliability may be lower than that of Method 1-1, whereas in Method 1-1, a total delay time required for control information and PDSCH repetition transmission may be increased. Method 1-3 utilizes advantages of Method 1-1 and Method 1-2, and may reduce the total delay time required for control information and PDSCH repetition transmission compared to Method 1-1, while transmitting control information with higher reliability compared to Method 1-2.

In Method 1-3, a UE may use soft combining of Method 1-1 and individual decoding of Method 1-2 to decode and soft combine the repeatedly transmitted control information. For example, the UE may decode, as in Method 1-2, a first transmitted piece of control information among repeated transmissions of a plurality of pieces of control information, each of which may have a different DCI format and/or payload, and may soft-combine repeated transmissions of the decoded control information as in Method 1-1.

Meanwhile, a base station may select and configure one of Method 1-1, Method 1-2, or Method 1-3 for control information repetition transmission. The control information repetition transmission scheme may be explicitly indicated to the UE by the base station through higher layer signaling. Alternatively, the control information repetition transmission scheme may be indicated in combination with other configuration information. For example, a higher layer configuration indicating a PDSCH repetition transmission scheme may be combined with an indication of the control information repetition transmission. When a PDSCH is indicated to be repeatedly transmitted using a frequency division multiplexing (FDM) scheme, the control information may be interpreted as being repeatedly transmitted only according to Method 1-1, because PDSCH repetition transmission using the FDM scheme does not provide a delay reduction effect achievable by Method 1-2. For a similar reason, when a PDSCH is indicated to be repeatedly transmitted using an intra-slot time division multiplexing (TDM) scheme, the control information may be interpreted as being repeatedly transmitted according to Method 1-1. On the other hand, when a PDSCH is indicated to be repeatedly transmitted using an inter-slot TDM scheme, one of Method 1-1, Method 1-2, or Method 1-3 for control information repetition transmission may be selected through higher layer signaling or L1 signaling.

Meanwhile, a base station may explicitly indicate a repeatedly transmitted unit of control information to a UE through higher layer configuration or the like. Alternatively, the repeatedly transmitted unit of control information may be indicated in combination with other configuration information. For example, a higher layer configuration indicating a PDSCH repetition transmission scheme may be combined with the repeatedly transmitted unit of control information. When a PDSCH is indicated to be repeatedly transmitted using an FDM scheme, the control information may be interpreted as being repeatedly transmitted using FDM or space division multiplexing (SDM), because if control information were repeatedly transmitted using an inter-slot TDM scheme, a delay reduction effect resulting from PDSCH repetition transmission using FDM would be lost. For a similar reason, when a PDSCH is indicated to be repeatedly transmitted using an intra-slot TDM scheme, the control information may be interpreted as being repeatedly transmitted using intra-slot TDM, FDM, or SDM. On the other hand, when a PDSCH is indicated to be repeatedly transmitted using an inter-slot TDM scheme, higher layer signaling or the like may be used to select a repetition scheme for control information, such as inter-slot TDM, intra-slot TDM, FDM, or SDM.

[Method 1-4] PDCCH transmission method in which respective TCI states are applied to different CCEs within the same PDCCH candidate group

Method 1-4 is a method in which, in order to improve reception performance of a PDCCH without PDCCH repetition transmission, different TCI states indicating transmissions from multiple TRPs are applied to different CCEs within a PDCCH candidate group for transmission. Although this method does not involve PDCCH repetition transmission, since different CCEs within the PDCCH candidate group are transmitted by applying different TCI states corresponding to transmissions from respective TRPs, the method may obtain spatial diversity within the PDCCH candidate group. Different CCEs to which different TCI states are applied may be separated in a time domain or a frequency domain, and the UE needs to know in advance resource location to which different TCI states are applied. The UE may receive different CCEs, to which different TCI states are applied, within the same PDCCH candidate group, and may decode the received CCEs independently or in a single operation.

[Method 1-5] PDCCH transmission method of applying multiple TCI States to all CCEs in the same PDCCH candidate group (SFN scheme)

Method 1-5 is a method in which, in order to improve PDCCH reception performance without PDCCH repetition transmission, multiple TCI states are applied to all CCEs within a PDCCH candidate group for transmission using an SFN scheme. Although this method does not involve PDCCH repetition transmission, the method may obtain spatial diversity through SFN transmission at the same CCE location within the PDCCH candidate group. The UE may receive CCEs at the same position, to which different TCI states are applied, within the same PDCCH candidate group, and may decode the received CCEs independently or in a single operation using some or all of the multiple TCI states.

<Second Embodiment: UE capability reporting related to soft combining during PDCCH repetition transmission>

A UE may report, to a base station, UE capability related to soft combining during PDCCH repetition transmission, and various methods may exist for reporting such UE capability. Specific methods may be as follows.

[UE capability reporting method 1] The UE may report, to the base station, UE capability information indicating only whether soft combining is possible or not during PDCCH repetition transmission. The UE capability report includes information indicating whether the UE is capable of performing soft combining for PDCCH repetition, and the base station may provide PDCCH repetition-related configuration to the UE, based on the information included in the UE capability and indicating whether the UE is capable of performing soft combining for PDCCH repetition.

For example, if the UE reports to the base station, through UE capabilities, information indicating that soft combining is possible during PDCCH repetition transmission, the base station may determine that the UE is capable of performing soft combining at a most flexible level (e.g., determining that the UE is capable of performing soft combining at a log likelihood ratio (LLR) level), and may notify the UE of PDCCH repetition transmission-related configuration in a most flexible manner when configuring PDCCH transmission. In this case, as an example of PDCCH repetition-related configuration, the base station may assume that the UE is capable of performing soft combining between CORESETs or search spaces having different configurations, soft combining between PDCCH candidates within the same aggregation level, or soft combining between PDCCH candidates across different aggregation levels, and may notify the UE of the corresponding configuration.

As another example, if the UE reports to the base station, through UE capabilities, that soft combining is possible during PDCCH repetition transmission, the base station may determine, in a most conservative manner, a level of soft combining that the UE is capable of performing (e.g., determining that the UE is capable of performing soft combining at an OFDM symbol level), and may notify the UE of a most restricted PDCCH repetition-related configuration when configuring PDCCH transmission. In this case, as an example of PDCCH repetition-related configuration, the base station may assume that the UE is capable of performing soft combining between multiple CORESETs having the same configuration, or between PDCCH candidates having the same aggregation level, and may notify the UE of the corresponding configuration.

[UE capability reporting method 2] Differently from UE capability reporting method 1 described above, in order to more specifically describe, through UE capabilities, soft combining operations that the UE is capable of performing, the UE may report, to the base station, UE capabilities according to classified levels reflecting the degrees by which soft combining is possible during PDCCH repetition transmission. That is, the UE may identify, among signal levels occurring during reception operations of the UE, signal levels to which soft combining is applicable for PDCCH repetition transmission, and may report such information to the base station as a UE capability.

For example, the UE may report that soft combining is possible at an OFDM symbol level, that is, a signal level to which soft combining is applicable, and/or may report that soft combining is possible at a modulation symbol level, and/or may report that soft combining is possible at an LLR level. Based on each signal level reported by the UE, the base station may notify the UE of an appropriate configuration so that the UE can perform soft combining according to the reported UE capability.

[UE capability reporting method 3] The UE may report, to the base station as a UE capability, constraints required for the UE to perform soft combining when PDCCH repetition transmission is performed. For example, the UE may report to the base station that configurations of respective CORESETs including two repeated PDCCHs should be the same. As another example, the UE may report to the base station that two repeated PDCCH candidates should have at least the same aggregation level. The base station having received the UE capability may configure and perform PDCCH repetition transmission to correspond to the necessary constraints identified based on the UE capability.

[UE capability reporting method 4] When receiving PDCCH repetition transmission from the base station, the UE may report, through a UE capability, a supported PDCCH repetition transmission scheme. For example, the UE may report, to the base station, support for Method 1-5 (SFN transmission scheme). As another example, the UE may report, to the base station, support for intra-slot TDM, inter-slot TDM, or FDM schemes among Method 1-1 (method for multiple PDCCH repetition transmissions having the same payload). In particular, in a case of TDM, the UE may report, to the base station. a maximum value of a time interval between two repeated PDCCHs. For example, when the UE reports the maximum value of the time interval between two repeated PDCCHs as four OFDM symbols, the base station may need to adjust the time interval between the two repeated PDCCHs to be four OFDM symbols or less when performing TDM-based PDCCH repetition transmission based on the reported information.

The above-described UE capability reporting methods may be configured as a combination of two or more methods in actual implementation. For example, the UE may report that soft combining is possible at an LLR level according to UE capability reporting method 2, may report, according to UE capability reporting method 3, that two repeated PDCCH candidates required to have at least the same aggregation level, and may report, according to UE capability reporting method 4, support for PDCCH repetition transmission subject to TDM while reporting a maximum value of a time interval between two repeated PDCCHs as four OFDM symbols.

In addition, the UE may report each of the UE capability reports described above separately according to a type of search space or a DCI format, or may include, within each UE capability, information corresponding to each search space. For example, the UE may report UE capabilities separately for a common search space and a UE-specific search space, such that PDCCH repetition transmission is not supported in the common search space, while PDCCH repetition transmission is supported in the UE-specific search space and soft combining is possible. As another example, the UE may report that PDCCH repetition transmission is supported and soft combining can be performed for a UE-specific DCI format, and may report that PDCCH repetition transmission is not supported for a common DCI format..

In addition, various applications based on combinations of various UE capability reporting methods may be possible, and in such cases, various embodiments of the disclosure may also be applied.

<Third Embodiment: PDCCH repetition transmission and explicit linkage-related configuration method>

In an embodiment of the disclosure, a PDCCH repetition transmission configuration method for enabling soft combining during PDCCH repetition transmission is described.

For example, when a base station performs PDCCH repetition transmission to a UE, based on Method 1-1 (method for multiple PDCCH repetition transmissions having the same payload) among various PDCCH repetition transmission methods of the disclosure, the base station may, in order to reduce the number of blind decodings by considering whether the UE is capable of performing soft combining, configure, via higher layer signaling, information indicating that explicit linkage (or association) is established between repeated PDCCH candidates, or indicate such information via L1 signaling, or configure and indicate such information through a combination of higher layer signaling and L1 signaling. More specifically, various explicit linkage methods may exist as described below.

Various methods for configuring PDCCH repetition transmission and explicit linkage through higher layer signaling may exist, as described below.

[PDCCH repetition configuration method 1] Case in which configuration information is included in PDCCH-config of higher layer signaling

In order to configure PDCCH repetition transmission and explicit linkage for the UE, the base station may configure PDCCH-repetition-config within PDCCH-config of higher layer signaling, and PDCCH-repetition-config may include at least one of the following pieces of information.

- PDCCH repetition transmission scheme: one of TDM, FDM, or SFN
- CORESET-search space combination(s) to be used for PDCCH repetition transmission
- CORESET index (or indices) - OPTIONAL
- Search space index (or indices) - OPTIONAL
- Aggregation level(s) for explicit linkage - OPTIONAL
- PDCCH candidate index (or indices) for explicit linkage - OPTIONAL
- Frequency resource for explicit linkage - OPTIONAL

Based on the above information, the base station may configure PDCCH repetition transmission for the UE through higher layer signaling.

For example, when a PDCCH repetition transmission scheme is configured using SFN, a CORESET index is configured as 1 as a CORESET-search space combination to be used for PDCCH repetition transmission, and when a search space index is not configured, the UE may expect that a PDCCH is repeatedly transmitted in a CORESET having an index of 1 through Method 1-5 (SFN transmission scheme). In this case, the UE may be configured with one or multiple different TCI states for the configured CORESET through higher layer signaling, may be indicated through L1 signaling or MAC-CE signaling, or may be configured and indicated through a combination of higher layer signaling and L1 signaling or MAC-CE signaling. In addition, when the PDCCH repetition transmission scheme is configured using SFN, the UE may not expect that a search space index is configured within a CORESET-search space combination used for PDCCH repetition transmission.

As another example, when the PDCCH repetition transmission scheme is configured as TDM or FDM, and two CORESET-search space combinations to be used for PDCCH repetition transmission are configured such that a first combination includes a CORESET index of 1 and a search space index of 1, and a second combination includes a CORESET index of 2 and a search space index of 2, the UE may expect that a PDCCH is repeatedly transmitted using the two CORESET-search space combinations through Method 1-1 in a TDM or FDM scheme. In this case, for each configured CORESET, multiple TCI states that are the same or different may be configured through higher layer signaling, or may be indicated through L1 signaling or MAC-CE signaling, or may be configured and indicated through a combination of higher layer signaling and L1 signaling or MAC-CE signaling. In addition, when the PDCCH repetition transmission scheme is configured as TDM or FDM, the UE may expect that up to two CORESET-search space combinations to be used for PDCCH repetition transmission are configured, and may expect that both a CORESET index and a search space index are configured for each combination.

Further, at least some of the information included in PDCCH-repetition-config may be updated based on a MAC-CE without RRC reconfiguration. If the base station does not configure PDCCH-repetition-config for the UE, the UE does not expect PDCCH repetition transmission and may expect only single transmission of the PDCCH. That is, when PDCCH-repetition-config is not configured, the UE does not expect PDCCH repetition transmission and may expect single transmission of the PDCCH. The aggregation level, PDCCH candidate index, and frequency resource for explicit linkage described above may not be configured at all, or at least one thereof may be configured, according to an explicit linkage method described below.

[PDCCH repetition configuration method 2] Case in which configuration information is included in higher layer signaling for a search space

The base station may notify the UE by adding higher layer signaling to searchSpace, which is higher layer signaling for a search space, for PDCCH repetition transmission. For example, an additional higher layer signaling parameter named *repetition* may be configured as on or off in searchSpace, which is higher layer signaling, thereby configuring whether or not the corresponding search space is used for repetition transmission. The number of search spaces for which *repetition* is configured as on may be one or two per bandwidth part.

For example, when searchSpaceId is configured as 1, controlResourceSetId is configured as 1, and repetition is configured as on in the higher layer signaling searchSpace corresponding to search space index 1, the UE may expect that PDCCH repetition transmission is performed in CORESET 1 associated with search space 1 according to Method 1-5 (SFN transmission method).

As another example, when searchSpaceId is configured as 1, controlResourceSetId is configured as 1, and repetition is configured as on within a searchSpace which is higher layer signaling for search space index 1, and when searchSpaceId is configured as 2, controlResourceSetId is configured as 2, and repetition is configured as on within a searchSpace which is higher layer signaling for search space index 2, the UE may know that PDCCH repetition transmission is performed between a combination of CORESET 1 and search space 1 and a combination of CORESET 2 and search space 2 by using Method 1-1 in a TDM or FDM manner. A distinction between TDM and FDM may be determined according to time-domain and frequency-domain configurations through higher layer signaling for CORESETs 1 and 2 and search spaces 1 and 2. In addition, within higher layer signaling for a searchSpace in which repetition is configured as on, aggregation level(s) or PDCCH candidate indices for explicit linkage described in [PDCCH repetition configuration method 1] may be configured, and/or, according to an explicit linkage method described below, both the aggregation level(s) and the PDCCH candidate indices may not be configured, only one thereof may be configured, or both thereof may be configured.

[PDCCH repetition configuration method 3] Case in which configuration information is included in in higher layer signaling for a search space

As a first method, configuration may be performed as shown in Table 26.

[Table 26]

```
PhysicalCellGroupConfig ::=         SEQUENCE {

        ...


twoQCLTypeDforPDCCHRepetition-r17 ENUMERATED {enabled}

OPTIONAL,    -- Need R
```

For example, PDCCH repetition may be configured. In this case, two repeated QCL-TypeDs may be activated in units of a cell or a cell group. That is, when the base station activates twoQCLTypeDforPDCCHRepetition for the UE, the UE may identify two QCL-TypeD attributes for multiple CORESETs that overlap during PDCCH repetition, and may determine whether to perform monitoring for the overlapping CORESETs and perform the monitoring accordingly. The twoQCLTypeDforPDCCHRepetition may be a configuration in which PDCCH repetition is configured and two QCL-TypeDs are activated (PDCCH monitoring is performed using two QCL-TypeDs). The number of configured or indicated QCL-TypeDs is not limited to two, and may be changed.

As a second method, configuration may be performed as shown in Table 27. "maxNrofSearchSpacesLinks-1" denotes a maximum number of search space links minus one, and may be, for example, 39.

[Table 27]

```
SearchSpaceExt-v1700 ::=                  SEQUENCE {

            ...


    searchSpaceLinkingId-r17          INTEGER (0..maxNrofSearchSpacesLinks-1-r1
7)                       OPTIONAL    -- Cond DedicatedOnly
```

For example, a parameter SearchSpaceLinkingId may be used to link two search spaces of the same type within the same BWP. When two search spaces have the same SearchSpaceLinkingId, the UE assumes that the search spaces having the same SearchSpaceLinkingId are linked for PDCCH repetition reference.

For example, when PDCCH repetition is monitored in two search space sets (linked search space sets), the UE does not expect a third monitored search space (SS) set to be linked with either of the two linked SS sets. For example, the two linked SS sets may have the same SS set type, specifically a UE-specific search space (USS) or a common search space (CSS). The two linked SS sets may have the same DCI format that can be monitored.

For example, in the case of intra-slot PDCCH repetition, two SS sets are required to have the same periodicity and offset (monitoringSlotPeriodicityAndOffset), and the same duration. For example, in order to link monitoring occasions (i.e., possible time intervals or instances) across two SS sets that exist in the same slot, the two SS sets have the same number of monitoring occasions within the slot, and an n-th monitoring occasion of one SS set is linked to an n-th monitoring occasion of the other SS set.

In addition, for PDCCH repetition, SS set 0, searchSpaceSIB1, searchSpaceOtherSystemInformation, paging-SearchSpace, ra-SearchSpace, searchSpaceMCCH, searchSpaceMTCH, peiSearchSpace, sdt-SearchSpace, and the like may not be linked with other SS sets. For example, an SS set configured by RecoverySearch-SpaceId cannot be associated with another SS set for PDCCH repetition.

For example, when a scheduled serving cell is configured to be cross-carrier scheduled by a scheduling serving cell, two PDCCH candidates (having the same AL and candidate index associated with the scheduled serving cell) are linked only when two corresponding SS sets in the scheduling serving cell are linked. For example, two SS sets in a scheduled serving cell having the same SS set ID may also be linked.

For example, the parameter SearchSpaceLinkingId is not applied to a search space configured by dci-FormatsSL for monitoring DCI format 3-0 or format 3-1, or for monitoring both DCI format 3-0 and DCI format 3-1.

The PDCCH configuration in which the same information as described above is repeatedly transmitted may be considered for at least one CORESETPoolIndex, and may be extended to be considered for multiple CORESETPoolIndexes. For example, when considering configuration of two CORESETPoolIndexes, the base station and the UE may consider a situation of multiple DCIs (multi-DCI, M-DCI). Specifically, the following options may be considered.

Option 1: The base station may configure the UE such that linked SSs are not associated across two CORESETPoolIndexes. (M-DCI)
Option 2: The base station may perform a PDCCH repetition transmission-related configuration for the UE such that a linked SS is associated with only one CORESETPoolIndex among a plurality of CORESETPoolIndexes. (M-DCI + PDCCH repetition with one CORESETPoolIndex)
Option 3: The base station may perform a PDCCH repetition transmission-related configuration for the UE such that a linked SS is associated across two CORESETPoolIndexes. (M-DCI + PDCCH repetition with two CORESETPoolIndex)

<Fourth Embodiment: Method for determining a priority upon reception of PDCCH repetition transmission from multiple TRPs based on single DCI>

In an embodiment of the disclosure, a method for determining a priority upon reception of PDCCH repetition transmission is described. Specifically, the base station and the UE may assume that, for the above-described PDCCH repetition transmission, transmission is performed from a plurality of TRPs based on single DCI.

As UE capabilities related to a method for determining a priority upon reception of PDCCH repetition transmission, the UE may report to the base station at least one of the following UE capabilities.

1) Whether a CORESET configured with a plurality of TCI states may be included among a plurality of CORESETs overlapping in time for a plurality of cells in a specific PDCCH monitoring interval

2) Whether CORESETs respectively associated with a plurality of search spaces explicitly linked can be included among a plurality of CORESETs overlapping in time for a plurality of cells in a specific PDCCH monitoring interval

3) A maximum number of reception beams that can be received among a plurality of CORESETs overlapping in time for a plurality of cells in a specific PDCCH monitoring interval, or a number of different TCI states or QCL-TypeD characteristics

4) A maximum number of different CORESETs that can be received, considering the UE capability described in 3), for all CORESETs associated with a common search space or a UE-specific search space among a plurality of CORESETs overlapping in time for a plurality of cells in a specific PDCCH monitoring interval

5) A maximum number of different CORESETs that can be received, considering the UE capability described in 3), for CORESETs associated with a common search space among a plurality of CORESETs overlapping in time for a plurality of cells in a specific PDCCH monitoring interval

6) A maximum number of different CORESETs that can be received, considering the UE capability described in 3), for CORESETs associated with a UE-specific search space among a plurality of CORESETs overlapping in time for a plurality of cells in a specific PDCCH monitoring interval

7) A maximum number of CORESETs configured with a plurality of TCI states among a plurality of CORESETs overlapping in time for a plurality of cells in a specific PDCCH monitoring interval

8) A maximum number of pairs of CORESETs respectively associated with a plurality of search spaces explicitly linked, among a plurality of CORESETs overlapping in time for a plurality of cells in a specific PDCCH monitoring interval

If the UE does not report 1) above or reports that 1) is not possible, the UE may not expect that a single CORESET in which multiple TCI states are configured is included among a plurality of CORESETs overlapping in time for a plurality of cells in a specific PDCCH monitoring interval, and may expect that, in the PDCCH monitoring interval of the CORESET in which multiple TCI states are configured, there is no other CORESET overlapping in time across the plurality of cells.

Similarly, if the UE does not report the UE capability 2) above or reports that 2) is not possible, the UE may not expect that CORESETs respectively associated with a plurality of search spaces explicitly linked are included among a plurality of CORESETs overlapping in time for a plurality of cells in a specific PDCCH monitoring interval. Further, when CORESETs respectively associated with a plurality of search spaces explicitly linked are repeatedly transmitted through FDM, the UE may expect that, in the PDCCH monitoring interval of the CORESETs, there is no other CORESET overlapping in time across the plurality of cells.

If the UE reports 2 for the UE capability 7) above (i.e., reports that the maximum number in the UE capability 7) is 2), the UE may expect that, among a plurality of CORESETs overlapping in time for a plurality of cells in a specific PDCCH monitoring interval, up to two CORESETs configured with a plurality of TCI states exists across the plurality of cells within the corresponding PDCCH monitoring interval. That is, in the corresponding PDCCH monitoring interval, up to two CORESETs may be associated with a plurality of TCI states.

If the UE reports 3 for the UE capability 8) above (i.e., reports that a maximum number in the UE capability 8) is 3), the UE may expect that, among a plurality of CORESETs overlapping in time for a plurality of cells in a specific PDCCH monitoring interval, up to three pairs of CORESETs respectively associated with a plurality of search spaces explicitly linked exists across the plurality of cells within the corresponding PDCCH monitoring interval. That is, in the corresponding PDCCH monitoring interval, up to three pairs of CORESETs may be respectively associated with three pairs of a plurality of search spaces explicitly linked.

In addition, information that the UE is to report to the base station through the eight UE capabilities described above is that the UE is capable of simultaneously receiving some of a plurality of CORESETs overlapping in time by using a plurality of different QCL-TypeD characteristics. Therefore, since the eight UE capabilities are information about whether a plurality of PDCCHs can be received, a reporting method may be provided to enable simultaneous reception using a plurality of QCL-TypeD characteristics at a predetermined arbitrary time point.

As a more generalized method for reporting UE capabilities to the base station, the above-described UE capabilities may be replaced with a UE capability regarding simultaneous reception based on a plurality of QCL-TypeD characteristics of a CORESET. Instead of the above-described eight UE capabilities, the UE capability regarding simultaneous reception based on a plurality of QCL-TypeD characteristics of a CORESET may be reported. In this case, the UE having reported the corresponding UE capability may allow the base station to know that the UE is capable of performing simultaneous reception using a plurality of QCL-TypeD characteristics overlapping in time at a predetermined time point for downlink signals (e.g., SSB, CSI-RS, CSI interference measurement (CSI-IM), positioning reference signal (PRS), DMRS, phase tracking reference signal (PTRS), PDSCH, PDCCH, and the like). In addition, when reporting the capability, the UE may allow the base station to know that the UE is capable of performing simultaneous reception using a plurality of QCL-TypeD characteristics overlapping in time at a predetermined time point for some combinations among the above-listed examples of downlink signals.

Hereinafter, as specific embodiments considering PDCCH repetition transmission, a detailed description will be provided for a method of determining a priority when the UE receives a PDCCH, by considering PDCCH repetition transmission using a single CORESET in which a plurality of TCI states are configured, or PDCCH repetition transmission using CORESETs respectively associated with a plurality of search spaces explicitly linked.

<Embodiment 4-1: Method for determining a priority for a UE upon reception of PDCCH repetition transmission using CORESETs respectively associated with multiple explicitly linked search spaces>

The UE may be configured to operate in a single-cell operation or carrier aggregation in the same frequency band. In addition, the UE may monitor PDCCH candidates in an overlapping PDCCH monitoring situation across multiple CORESETs in which qcl-Types configured with a "typeD" attribute are the same or different in active DL BWP(s) of one or more cells.

The UE configured as described above monitors a PDCCH in only one CORESET, and monitors other CORESETs among multiple CORESETs configured with a qcl-Type having the same "typeD" attribute as that CORESET in the active DL BWP of one or more cells.

Here, the CORESET monitored by the UE corresponds, when a CSS is configured, to the CSS having the lowest index in the cell having the lowest index among cells including a CSS. Otherwise, when the CSS is not configured, the CORESET corresponds to a USS having the lowest index in the cell having the lowest index.

The lowest USS set index may be determined across all USS sets having at least one PDCCH candidate in an overlapping PDCCH monitoring situation.

The above description may assume, as a basis premise, that PDCCH repetition transmission is performed from multiple TRPs based on single DCI.

<Embodiment 4-2: Method for determining a priority upon reception of PDCCH repetition transmission using CORESETs respectively associated with multiple explicitly linked search spaces>

The UE may be configured to operate in a single-cell operation or carrier aggregation in the same frequency band. In addition, the UE may monitor PDCCH candidates in an overlapping PDCCH monitoring situation across multiple CORESETs in which qcl-Types configured with a "typeD" attribute are the same or different in active DL BWP(s) of one or more cells. In addition, the UE may have twoQCLTypeDforPDCCHRepetition configured by higher-layer signaling, as described above.

The UE configured as described above monitors a PDCCH only in a first CORESET in which the qcl-Type is configured with a first "typeD" attribute, and monitors PDCCHs in multiple CORESETs having a second CORESET for which the qcl-Type is configured with a second "typeD" attribute different from the first "typeD" attribute. The qcl-Type configured with the first "typeD" attribute or the second "typeD" attribute may be determined as follows.

The first CORESET corresponds, when a CSS is configured, to a CSS set having the lowest index in a cell having the lowest index among cells including a CSS set. Otherwise, when the CSS is not configured, the first CORESET corresponds to a USS set having the lowest index in the cell having the lowest index.

Excluding the CSS set and the USS set associated with the CORESET having the qcl-Type configured with the first "typeD" attribute, the second CORESET corresponds, when a CSS is configured, to a CSS set having the lowest index in the cell having the lowest index, and otherwise (when no CSS is configured), corresponds to a USS set having the lowest index in the cell. Here, the CSS set or the USS set includes a lowest indexed-set among predetermined CSS sets having the same searchSpaceLinkingId value or predetermined USS sets associated with a CORESET having a qcl-Type configured with the first "typeD" attribute.

Here, the lowest USS set index is determined across all USS sets having at least one PDCCH candidate in an overlapping PDCCH monitoring situation.

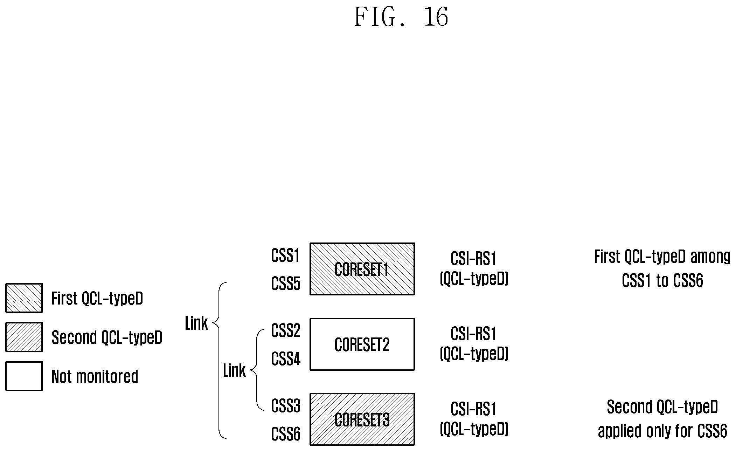

FIG. 16 illustrates a method for determining a priority upon reception of PDCCH repetition transmission according to an embodiment of the disclosure.

For example, referring to FIG. 16, a base station may configure, for a UE, three CORESETs (CORESET 1, CORESET 2, and CORESET 3), and six CSSs (CSS1, CSS2, CSS3, CSS4, CSS5, CSS6). In addition, the base station may configure the six CSSs such that at least some or all of the resources thereof overlap in the time domain. In addition, the base station may configure CSS5 to be linked to CSS6 for PDCCH repetition transmission (e.g., searchSpaceLinkingId=0), and may configure CSS2 to be linked to CSS3 for PDCCH repetition transmission (e.g., searchSpaceLinkingId=1). In addition, the base station may configure a QCL type-D by referencing CSI-RS1 in CORESET 1, may configure a QCL-TypeD by referencing CSI-RS2 in CORESET 2, and may configure a QCL-TypeD by referencing CSI-RS3 in CORESET 3. That is, a reference signal for QCL-TypeD may be configured differently in each CORESET.

Here, when a UE capability report indicating that the UE is capable of receiving two QCL-TypeDs has been transmitted and received between the base station and the UE, the UE may determine to first monitor CSS1 corresponding to a CSS set having the lowest index in a cell having the lowest index among cells including a CSS set. In addition, the UE may also monitor CSS5 configured with the same QCL-TypeD as CSS1. After determining that CSS1 is to be monitored, the UE may determine CSS6, which is configured with the same value of searchSpaceLinkingId configured as 0, as a second monitoring target. That is, the UE may monitor CSS6 by using a second QCL-TypeD, and may also monitor CSS3 configured with the same QCL-TypeD. Finally, after two different QCL-TypeDs have been determined, the UE may not perform monitoring for the remaining CSS2 and CSS4 for CORESET 2. That is, monitoring is not performed for CSS2 and CSS4..

Although the above-described example has been described by considering only the CSS, it is apparent that the example may be extended to various embodiments including the CSS and/or a USS according to the described rules.

<Fifth Embodiment: Method for determining a priority upon reception of PDCCH repetition transmission from multiple TRPs based on multiple DCI>

In an embodiment of the disclosure, a method for determining a priority upon reception of PDCCH repetition transmission is described. Specifically, transmission from a multi-DCI-based multi-TRP may be assumed for PDCCH repetition transmission described above.

In order to receive a repeatedly transmitted PDDCH, the UE may report, to the base station, at least one of the UE capabilities listed below as a UE capability related to a priority determination method.

1) Whether a CORESET in which multiple TCI states are configured can be included among multiple CORESETs overlapping in time for multiple cells in a specific PDCCH monitoring interval in a first CORESET and a second CORESET

2) Whether CORESETs respectively associated with multiple search spaces explicitly linked can be included among multiple CORESETs overlapping in time for multiple cells in a specific PDCCH monitoring interval in the first CORESET and the second CORESET

3) A maximum number of reception beams that can be received among multiple CORESETs overlapping in time for multiple cells in a specific PDCCH monitoring interval in the first CORESET and the second CORESET, or a number of different TCI states or QCL-TypeD characteristics

4) A maximum number of different CORESETs that can be received, considering the UE capability 3) above, for all CORESETs associated with a common search space or a UE-specific search space among multiple CORESETs overlapping in time for multiple cells in a specific PDCCH monitoring interval in the first CORESET and the second CORESET

5) A maximum number of different CORESETs that can be received, considering the UE capability 3) above, for a CORESET associated with a common search space among multiple CORESETs overlapping in time for multiple cells in a specific PDCCH monitoring interval in the first CORESET and the second CORESET

6) A maximum number of different CORESETs that can be received, considering the UE capability 3) above, for a CORESET associated with a UE-specific search space among multiple CORESETs overlapping in time for multiple cells in a specific PDCCH monitoring interval in the first CORESET and the second CORESET

7) A maximum number of CORESETs in which multiple TCI states are configured among multiple CORESETs overlapping in time for multiple cells in a specific PDCCH monitoring interval in the first CORESET and the second CORESET

8) A maximum number of pairs of CORESETs respectively associated with multiple search spaces explicitly linked, among multiple CORESETs overlapping in time for multiple cells in a specific PDCCH monitoring interval in the first CORESET and the second CORESET

If the UE does not report the UE capability 1) above or reports 1) as not possible, the UE may not expect that a single CORESET in which multiple TCI states are configured is included among multiple CORESETs overlapping in time for multiple cells in a specific PDCCH monitoring interval in the first CORESET and the second CORESET, and may expect that, in the PDCCH monitoring interval of the CORESET in which multiple TCI states are configured, there is no other CORESET overlapping in time across the multiple cells.

Similarly, if the UE does not report the UE capability 2) above or reports 2) as not possible, the UE may not expect that CORESETs respectively associated with multiple search spaces explicitly linked are included among multiple CORESETs overlapping in time for multiple cells in a specific PDCCH monitoring interval in the first CORESET and the second CORESET. Further, when CORESETs respectively associated with multiple search spaces explicitly linked are repeatedly transmitted through FDM, the UE may expect that, in the PDCCH monitoring interval of the CORESETs, there is no other CORESET overlapping in time across the multiple cells.

If the UE reports 2 for the UE capability 7) above (i.e., reports that a maximum number in the UE capability 7) is 2), the UE may expect that, among multiple CORESETs overlapping in time for multiple cells in a specific PDCCH monitoring interval in the first CORESET and the second CORESET, the number of CORESETs in which multiple TCI states are configured is up to two across the multiple cells within the corresponding PDCCH monitoring interval. That is, in the corresponding PDCCH monitoring interval, up to two CORESETs may be associated with multiple TCI states.

If the UE reports 3 for the UE capability 8) above (i.e., reports that a maximum number in the UE capability 8) is 3), the UE may expect that, among multiple CORESETs overlapping in time for multiple cells in a specific PDCCH monitoring interval in the first CORESET and the second CORESET, the number of pairs of CORESETs respectively associated with multiple search spaces explicitly linked is up to three across the multiple cells within the corresponding PDCCH monitoring interval. That is, in the corresponding PDCCH monitoring interval, up to three pairs of CORESETs may be respectively associated with three pairs of multiple search spaces explicitly linked.

In addition, information that the UE is to report to the base station through the eight UE capabilities described above is that the UE is capable of simultaneously receiving some of multiple CORESETs overlapping in time by using different multiple QCL-TypeD characteristics. Therefore, since the eight UE capabilities are information focused on whether reception of multiple PDCCHs is possible, there may be a reporting method for enabling simultaneous reception using multiple QCL-TypeD characteristics at a predetermined time point.

As a more generalized method for reporting UE capabilities to the base station, the UE capabilities may be replaced with a UE capability regarding simultaneous reception based on multiple QCL-TypeD characteristics of a CORESET. Instead of the above-described eight UE capabilities, the UE capability regarding simultaneous reception based on multiple QCL-TypeD characteristics of a CORESET may be reported. In this case, the UE having reported the corresponding UE capability may allow the base station to know that the UE is capable of performing simultaneous reception using multiple QCL-TypeD characteristics overlapping in time at a predetermined time point for downlink signals (e.g., SSB, CSI-RS, CSI-IM, PRS, DMRS, PTRS, PDSCH, PDCCH, and the like). In addition, when reporting the capability, the UE may allow the base station to know that the UE is capable of performing simultaneous reception using multiple QCL-TypeD characteristics overlapping in time at a predetermined time point only for some combinations among the above-listed examples of downlink signals.

In a multi-DCI-based multi-TRP, when there is no separate configuration for PDCCH repetition transmission, a QCL-TypeD priority for PDCCH monitoring is described first.

The base station may configure the UE to operate in a single-cell operation or carrier aggregation in the same frequency band. In addition, the UE may monitor PDCCH candidates in an overlapping PDCCH monitoring situation in multiple CORESETs having the same or different qcl-Types configured with a "typeD" attribute in active DL BWP(s) of one or more cells.

For a multiple-TRP configuration, CORESETPoolIndex may not be configured for a first CORESET, or CORESETPoolIndex value of 0 may be configured for the first CORESET and CORESETPoolIndex value of 1 may be configured for a second CORESET for the UE. In addition, in a multi-DCI-based multi-TRP configuration, a parameter (e.g., twoQCLTypeDforMulti-DCI) indicating whether activation of two QCL type-D configurations for multiple DCI transmissions is enabled may be configured. When a CORESETPoolIndex is not configured for a particular CORESET, CORESETPoolIndex of the particular CORESET is assumed to be 0. Accordingly, an embodiment of the disclosure may be applied both to a case in which CORESETPoolIndex values of 0 and 1 are configured for the first and second CORESETs, respectively, and to a case in which a CORESETPoolIndex is not configured for the first CORESET and aCORESETPoolIndex value of 1 is configured for the second CORESET. Hereinafter, unless otherwise specified, a configuration in which CORESETPoolIndex values of 0 and 1 are configured may be replaced with a configuration in which a CORESETPoolIndex is not configured for a particular CORESET and CORESETPoolIndex value of 1 is configured for another CORESET. In addition, a configuration in which a CORESETPoolIndex value of 0 is configured may be replaced with a configuration in which CORESETPoolIndex is not configured.

The UE configured as described above may independently perform QCL-related monitoring operations across the first CORESET and the second CORESET.

For example, the UE may monitor at least one PDCCH in a specific CORESET within a first CORESET configured with a specific CORESETPoolIndex value (e.g., CORESETPoolIndex 0), and may monitor another CORESET among a plurality of CORESETs in which qcl-Types are configured with the same "typeD" attribute as the specific CORESET within the first CORESET, in an active DL BWP for one or more cells. Here, the specific CORESET to be monitored corresponds, when a CSS is configured, to a CSS having a lowest index in a cell having a lowest index among cells including a CSS, and otherwise corresponds to a USS having a lowest index in a cell having a lowest index. The lowest USS set index may be determined across all USS sets having at least one PDCCH candidate in an overlapping PDCCH monitoring situation.

As another example, the UE may monitor at least one PDCCH in a specific CORESET within a second CORESET configured with a specific CORESETPoolIndex value (e.g., CORESETPoolIndex 1), and may monitor another CORESET among a plurality of CORESETs in which qcl-Types are configured with the same "typeD" attribute as the specific CORESET within the second CORESET, in an active DL BWP for one or more cells. Here, the specific CORESET to be monitored corresponds, when a CSS is configured, to a CSS having a lowest index in a cell having a lowest index among cells including a CSS, and otherwise corresponds to a USS having a lowest index in a cell having a lowest index. The lowest USS set index may be determined across all USS sets having at least one PDCCH candidate in an overlapping PDCCH monitoring situation.

As described above, for PDCCH monitoring without a separate configuration for PDCCH repetition transmission in a multi-DCI-based multi-TRP, the number of QCL-TypeDs supported by the UE may be determined as a UE capability as described below, and may be transmitted and received between the base station and the UE. The number of QCL-TypeDs is merely an example, and the disclosure is not limited thereto.

- Support up to two per CORESETPoolIndex
- Support one per CORESETPoolIndex
- Support two, three, or four for all CORESETPoolIndexes

As specific embodiments of a multi-DCI-based multi-TRP considering PDCCH repetition transmission, a method for determining a priority upon reception of a PDCCH will be described in detail, by considering PDCCH repetition transmission using a single CORESET in which a plurality of TCI states are configured, or PDCCH repetition transmission using CORESETs respectively associated with a plurality of explicitly linked search spaces.

<Embodiment 5-1: Method for determining a priority upon reception of PDCCH repetition transmission using CORESETs respectively associated with multiple search spaces explicitly linked>

A UE may be configured to operate in single-cell operation or carrier aggregation in the same frequency band. In addition, the UE may monitor a PDCCH candidate in an overlapping PDCCH monitoring situation in multiple CORESETs in which qcl-Types configured with a "typeD" attribute are the same as or different from each other in active downlink DL BWP(s) of one or more cells.

For the UE, a CORESETPoolIndex for a first CORESET may not be configured, or a CORESETPoolIndex value of 0 may be configured for the first CORESET(s) and a CORESETPoolIndex value of 1 may be configured for a second CORESET, and a parameter (e.g., twoQCLTypeDforMulti-DCI) indicating whether two QCL type-D configurations for multiple DCI transmissions are activated may be configured. In addition, the UE may be configured, at a higher layer, with twoQCLTypeDforPDCCHRepetition described above.

The UE configured as described above may monitor a PDCCH only in a first CORESET for which a qcl-Type is configured with a first "typeD" attribute for at least one CORESETPoolIndex, and may monitor a PDCCH in multiple CORESETs having a second CORESET for which the qcl-Type is configured with a second "typeD" attribute different from the first "typeD" attribute. A qcl-Type configured with the first "typeD" attribute or the second "typeD" attribute may be determined as follows.

A first CORESET corresponds to a CSS set having a lowest index in a cell having a lowest index among cells including a CSS set when a CSS is configured, and otherwise (when no CSS is configured), corresponds to a USS set having a lowest index in the cell having the lowest index.

Except for a CSS set and a USS set associated with the CORESET having the qcl-Type configured with the first "typeD" attribute, a second CORESET corresponds, when a CSS is configured, to a CSS set having a lowest index in a cell having a lowest index among cells including a CSS set, and otherwise (when no CSS is configured), corresponds to a USS set having a lowest index in the cell. Here, the CSS set or the USS set includes a lowest-indexed set among predetermined CSS sets having the same searchSpaceLinkingId value or predetermined USS sets associated with a CORESET having a qcl-Type configured with the first "typeD" attribute.

Here, the lowest USS set index is determined across all USS sets having at least one PDCCH candidate in an overlapping PDCCH monitoring situation.

In other words, the above-described embodiment 4-2 may be extended such that the same is independently repeated for each CORESETpoolIndex. A difference from the above-described embodiments or additional items may be that, for monitoring PDCCHs overlapping in a time domain, it may be additionally determined according to which criterion and up to how many QCL-TypeDs are applied by the base station and the UE. An embodiment of the disclosure therefor is described below.

Alt1-1) When the UE reports to the base station that the UE supports up to two QCL-TypeDs (maximum value of QCL-TypeD=2 (maximum number of QCL-TypeD=2)), the base station may determine that the UE supports up to two QCL-TypeDs in all time domains. When the base station configures CORESETPoolIndex value of 0 and 1 for the UE, the UE does not expect that more than two different QCL-TypeDs are configured. That is, the UE expects that a number of QCL-TypeDs configured for the configured multiple CORESETs is two or less. Here, the multiple CORESETs correspond to CORESETPoolIndex value of 0 and 1.

In this embodiment, it may be assumed that linked SSs within a CORESET for which CORESETpoolIndex is configured as 0 or linked SSs within a CORESET for which CORESETpoolIndex is configured as 1 are not configured to overlap on a per-CORESETpoolIndex basis, and that only linked SSs within a single CORESETpoolIndex value overlap each other. Accordingly, the UE may identify, for each CORESETpoolIndex, an SS configured for repetition transmission and apply the above-described embodiment 4-2.

Alt1-2) When the UE reports to the base station that the UE supports up to four QCL-TypeDs (maximum value of QCL-TypeD=4 (maximum number of QCL-TypeD=4)), the base station may determine that the UE supports up to two QCL-TypeDs for each CORESETPoolIndex. When the base station configures CORESETPoolIndex value of 0 and 1 for the UE, the UE does not expect that more than two different QCL-TypeDs are configured for each CORESETPoolIndex. That is, the UE expects that a number of QCL-TypeDs configured for CORESETs corresponding to CORESETPoolIndex value of 0 among the configured multiple CORESETs is two or less, and also expects that a number of QCL-TypeDs configured for CORESETs corresponding to CORESETPoolIndex value of 1 among the configured multiple CORESETs is two or less. In this embodiment, linked SSs in a CORESET for which CORESETpoolIndex is configured as 0 or linked SSs in a CORESET for which CORESETpoolIndex is configured as 1 may be configured to overlap per-CORESETpoolIndex basis, and it may be assumed that only SSs linked within one CORESETpoolIndex value overlap each other. Accordingly, the UE may identify an SS configured for repetition transmission for each CORESETpoolIndex and extend the above-described embodiment 4-2 to apply two QCL-TypeDs for each CORESETpoolIndex.

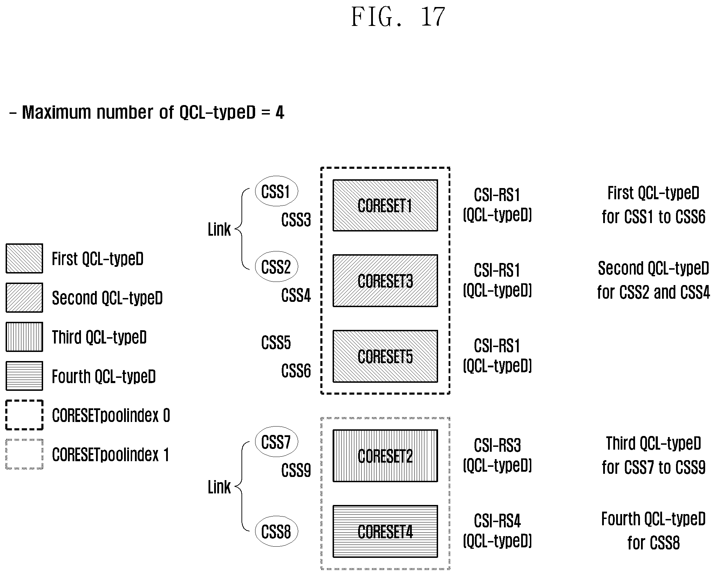

FIG. 17 illustrates a method for determining a priority upon reception of PDCCH repetition transmission according to an embodiment of the disclosure.

For example, referring to FIG. 17, the base station may configure five CORESETs (CORESET 1, CORESET 2, and CORESET 3, CORESET 4, and CORESET 5) and nine CSSs (CSS1, CSS2, CSS3, CSS4, CSS5, CSS6, CSS7, CSS8, and CSS9) for the UE. Specifically, the base station may configure two CORESETpoolIndexes. For example, the base station may configure CORESETs 1, 3, and 5 including CORESETpoolIndex 0, and may configure CORESETs 2 and 4 including CORESETpoolIndex 1.

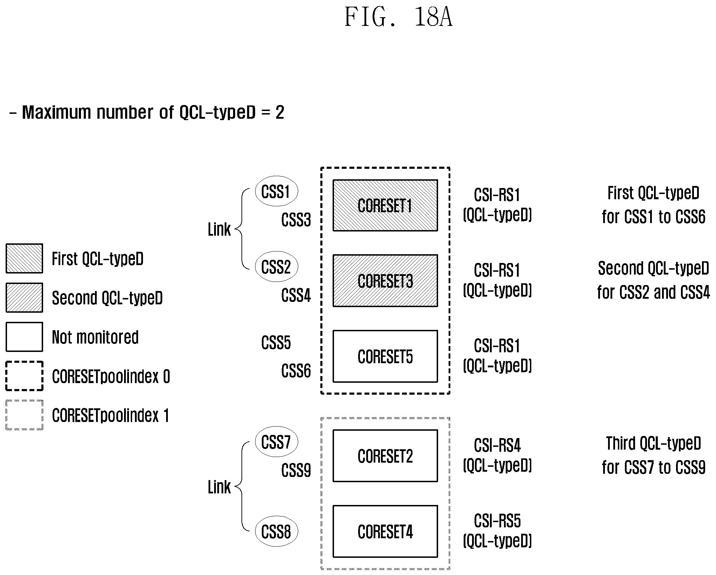

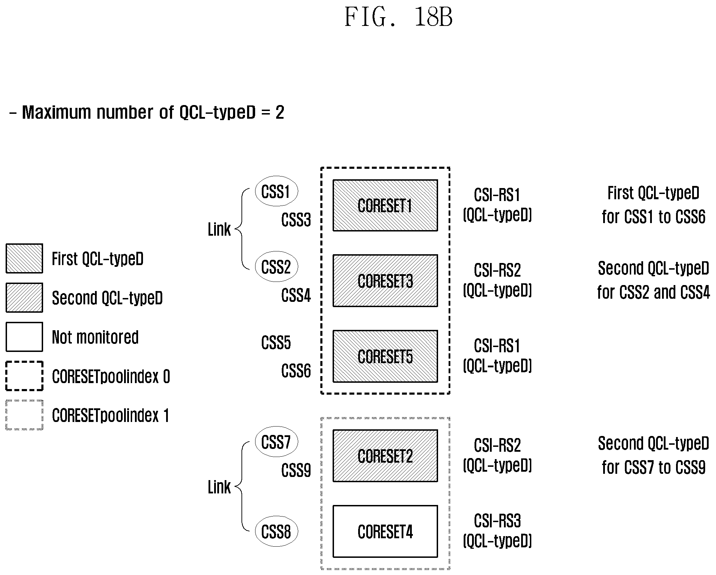

A configuration relationship between CORESET 1 to CORESET 5 and CSS1 to CSS9 is illustrated in FIG. 17. That is, CSS1 and CSS3 may be configured in CORESET 1 corresponding to CORESETpoolIndex 0, CSS2 and CSS4 may be configured in CORESET 3, and CSS5 and CSS6 may be configured in CORESET 5. In addition, CSS7 and CSS9 may be configured in CORESET 2 corresponding to CORESETpoolIndex 1, and CSS8 may be configured in CORESET 4. The same applies to the examples in FIGS. 18 to 21 described below.

Here, the base station may additionally configure, for the UE, (CSS1, CSS2) and (CSS7, CSS8) linked for a repeatedly transmitted PDCCH. As described above, the base station may configure, in consideration of the capability of the UE, up to four QCL-TypeDs according to each CORESETpoolIndex. For example, the base station may perform, at a higher layer, a configuration (e.g., searchSpaceLinkingId=0) such that CSS1 is linked to CSS2 for PDCCH repetition transmission, and may perform a configuration (e.g., searchSpaceLinkingId=1) such that CSS7 is linked to CSS8 for PDCCH repetition transmission. In addition, the base station may configure a QCL-TypeD with reference to CSI-RS1 in CORESET 1 and CORESET 5, may configure a QCL-TypeD with reference to CSI-RS2 in CORESET 3, may configure a QCL-TypeD with reference to CSI-RS3 in CORESET 2, and may configure a QCL-TypeD with reference to CSI-RS4 in CORESET 4.

Here, when a UE capability indicating that the UE is capable of receiving two QCL-TypeDs for each CORESETpoolIndex is reported between the base station and the UE, or when it is reported that the UE is capable of simultaneously receiving all four QCL-TypeDs, a CSS monitoring priority determined by the UE may be as follows: for CORESETpoolIndex 0, CSS1 in CORESET 1 has a highest priority and CSS2 linked thereto is determined next, and for CORESETpoolIndex 1, CSS7 has a highest priority and CSS8 linked thereto is determined next. Accordingly, in the example of FIG. 17, the UE may perform monitoring and reception for all repeatedly-transmitted PDCCHs configured by the base station even when at least some resources overlap.

Although the above-described example has been described by considering only the CSS, it is apparent that the example may be extended to various embodiments including the CSS and/or the USS according to the described rules.

Alt2) In case that the UE reports to the base station that the UE supports a maximum of two, three, or four QCL-TypeDs (maximum value of QCL-TypeD=2/3/4 (maximum number of QCL-TypeD=2/3/4)), if the base station configures monitoring occasions for the UE to receive a repeatedly transmitted PDCCH to overlap in the time domain, the UE may perform monitoring in an order considering a specific CORESETPoolIndex.

For example, when PDCCHs repeatedly transmitted over two CORESETpoolIndex overlaps, the UE may preferentially monitor a lowest CORESETpoolIndex, or CORESETpoolIndex 0, within a limit allowed by the UE capability. That is, within a range that does not exceed the UE capability for simultaneous reception of QCL-TypeDs, the UE may perform monitoring for CSSs and/or USSs configured for CORESETpoolIndex 0 or 1, and may determine not to perform monitoring for a subsequent CORESETpoolIndex (e.g., CORESETpoolIndex 1) with respect to QCL-TypeDs exceeding the capability.

FIG. 18 illustrates a method for determining a priority upon reception of PDCCH repetition transmission according to an embodiment of the disclosure.

For example, referring to FIG. 18A, the base station may configure five CORESETs (CORESET 1, CORESET 2, CORESET 3, CORESET 4, and CORESET 5) and nine CSSs (CSS1, CSS2, CSS3, CSS4, CSS5, CSS6, CSS7, CSS8, and CSS9) for the UE. Specifically, the base station may configure two CORESETPoolIndex values. For example, the base station may configure CORESETs 1, 3, and 5 including CORESETPoolIndex 0, and may configure CORESETs 2 and 4 including CORESETPoolIndex 1. The configuration relationship between CORESETs 1 to 5 and CSS1 to CSS9 is exemplified in FIG. 18A. Here, the base station may additionally configure, for the UE, (CSS1, CSS2) and (CSS7, CSS8) linked for a repeatedly transmitted PDCCH. In this manner, the base station may configure up to two QCL-typeDs for each CORESETPoolIndex, in consideration of the UE capability.

For example, the base station may configure CSS1 to be linked to CSS2 for PDCCH repetition (e.g., searchSpaceLinkingId=0), and may configure CSS7 to be linked to CSS8 for PDCCH repetition (e.g., searchSpaceLinkingId=1). In addition, the base station may configure QCL-typeD with reference to CSI-RS1 in CORESETs 1 and 5, configure QCL-typeD with reference to CSI-RS2 in CORESET 3, configure QCL-typeD with reference to CSI-RS4 in CORESET 2, and configure QCL-typeD with reference to CSI-RS5 in CORESET 4.

In this case, when a UE capability indicating that the UE is capable of receiving a maximum of two QCL-TypeDs simultaneously has been reported between the base station and the UE, the UE may determine a CSS monitoring priority such that, for CORESETPoolIndex 0, CSS1 in CORESET 1 has the highest priority, and CSS2 linked thereto has the next highest priority. Here, since the UE has already determined two different QCL-typeDs, the UE may not perform monitoring for other CORESETs (e.g., CORESETs 2, 4, and 5) or CSSs (e.g., CSS5 to CSS9) configured with other QCL-typeDs thereafter.

Although the above-described example has been described in consideration of only the CSS, it will be apparent that the example may be extended to various embodiments including a CSS and/or a USS according to the described rules.

As another example, referring to FIG. 18B, the base station may configure five CORESETs (CORESET 1, CORESET 2, CORESET 3, CORESET 4, and CORESET 5) and nine CSSs (CSS1, CSS2, CSS3, CSS4, CSS5, CSS6, CSS7, CSS8, and CSS9) for the UE. Specifically, the base station may configure two CORESETpoolIndex values. For example, the base station may configure CORESETs 1, 3, and 5 including CORESETpoolIndex 0, and may configure CORESETs 2 and 4 including CORESETpoolIndex 1. The configuration relationship between CORESETs 1 to 5 and CSS1 to CSS9 is illustrated in FIG. 18B. Here, the base station may additionally configure, for the UE, (CSS1, CSS2) and (CSS7, CSS8) linked for a repeatedly transmitted PDCCH. Thus, the base station may configure a maximum of two QCL-typeDs for each CORESETpoolIndex, in consideration of the UE capability.

For example, the base station may configure CSS1 to be linked to CSS2 for PDCCH repetition (e.g., searchSpaceLinkingId=0), and may configure CSS7 to be linked to CSS8 for PDCCH repetition (e.g., searchSpaceLinkingId=1). In addition, the base station may configure QCL-typeD with reference to CSI-RS1 in CORESETs 1 and 5, configure QCL-typeD with reference to CSI-RS2 in CORESETs 2 and 3, configure QCL-typeD with reference to CSI-RS2 in CORESET 2, and configure QCL-typeD with reference to CSI-RS3 in CORESET 4.

In this case, when a UE capability indicating that the UE is capable of receiving a maximum of two QCL-TypeDs simultaneously has been reported between the base station and the UE, the UE may determine a CSS monitoring priority such that, for CORESETPoolIndex value of 0, CSS1 in CORESET 1 has the highest priority, and CSS2 linked thereto has the next highest priority. Here, although the UE has already determined two different QCL-typeDs, since CORESETs 2 and 3 have the same QCL-typeD, the UE may include CSS7 and CSS8 associated with CORESETPoolIndex value of 1 in a monitoring occasion. However, even though CSS8 is linked to CSS7, since CSS8 is configured with a different QCL-TypeD, the UE cannot perform monitoring. That is, monitoring may not be performed for a CORESET (e.g., CORESET 4) or a CSS (e.g., CSS8) configured with a different QCL-TypeD.

As another example, the UE may determine that the UE does not perform monitoring for both CSS7 and CSS8 for a repeatedly transmitted PDCCH. This may be determined by a standard, or may be determined by the UE's selection in a commercial implementation.

Although the above-described example has been described in consideration of only the CSS, it is apparent that the same may be extended to various embodiments including a CSS and/or a USS according to the described rules.

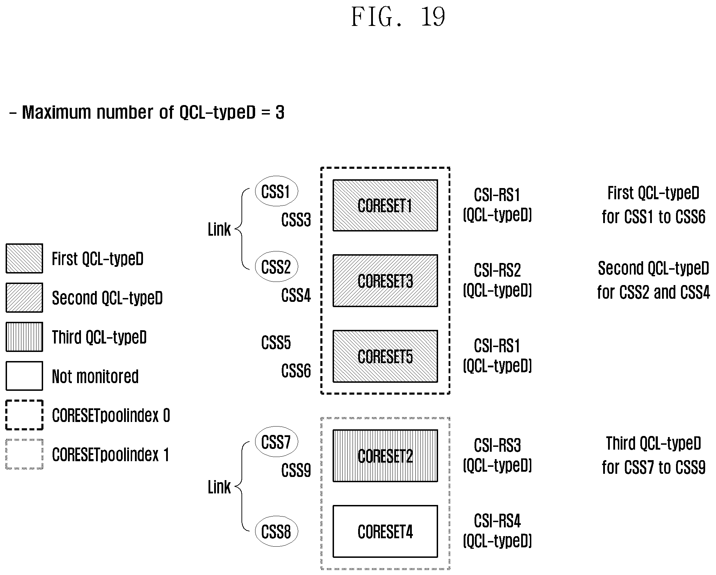

FIG. 19 illustrates a method for determining a priority upon reception of PDCCH repetition transmission according to an embodiment of the disclosure.

Referring to FIG. 19, a base station may configure five CORESETs (CORESET 1, CORESET 2, CORESET 3, CORESET 4, and CORESET 5) and nine CSSs (CSS1, CSS2, CSS3, CSS4, CSS5, CSS6, CSS7, CSS8, and CSS9) for the UE. Specifically, the base station may configure two CORESETpoolindex values. For example, the base station may configure CORESETs 1, 3, and 5 including CORESETpoolindex 0, and may configure CORESETs 2 and 4 including CORESETpoolindex 1. The relationship between the configurations of CORESET 1 to CORESET 5 and CSS1 to CSS9 is illustrated in FIG. 19. Here, the base station may additionally configure, for the UE, (CSS1, CSS2) and (CSS7, CSS8) linked for a repeatedly transmitted PDCCH. As such, the base station may configure a maximum of three QCL-typeDs for each CORESETpoolindex, in consideration of the UE capability.

For example, the base station may configure CSS1 to be linked to CSS2 for PDCCH repetition transmission (e.g., searchSpaceLinkingId=0), and may configure CSS7 to be linked to CSS8 for PDCCH repetition transmission (e.g., searchSpaceLinkingId=1). In addition, the base station may configure QCL-typeD with reference to CSI-RS1 in CORESETs 1 and 5, configure QCL-typeD with reference to CSI-RS2 in CORESET 3, configure QCL-typeD with reference to CSI-RS3 in CORESET 2, and configure QCL-typeD with reference to CSI-RS4 in CORESET 4.

In this case, when a UE capability indicating that the UE is capable of receiving up to three QCL-TypeDs simultaneously has been reported between the base station and the UE, the UE may determine a CSS monitoring priority such that, for CORESETpoolindex 0, CSS1 in CORESET 1 has the highest priority, and CSS2 linked thereto has the next highest priority. Here, for CORESETpoolindex 0, two different QCL-typeDs have already been determined, and since one additional QCL-typeD is still available, for CORESETpoolindex 1, the UE may include CSS7 and CSS9 corresponding to CORESET 2 having a higher priority among CORESET 2 and 4 in a monitoring occasion. However, even though CSS8 is linked to CSS7, since CSS8 is configured with a different QCL-TypeD, the UE may not perform monitoring. That is, monitoring may not be performed for a CORESET (e.g., CORESET 4) or CSS (e.g., CSS8) configured with a different QCL-TypeD.

As another example, the UE may determine not to perform monitoring for both CSS7 and CSS8 for a repeatedly transmitted PDCCH. This may be determined by a standard, or may be selected and determined by the UE in a commercial implementation.

Although the above-described examples have been described in consideration of only the CSS, it is apparent that the same may be extended to various embodiments including the CSS and/or the USS according to the described rules.

Alt3) In case that the UE reports to the base station that the UE supports a maximum of two, three, or four QCL-typeDs (maximum value of QCL-typeD = 2/3/4), if the base station configures monitoring occasions for reception of a repeatedly transmitted PDCCH to overlap in the time domain, the UE may perform monitoring lowest CORESETPoolIndex (Alt3-1) or lowest QCL-typeD within each CORESETPoolIndex (searchSpaceLinkingId, Alt3-2) according to a principle agreed with the base station (a predefined rule between the UE and the base station).

Alt3-1) Priority order: CORESETPoolIndex 0 - 1st QCL-TypeD > CORESETPoolIndex 0 - 2nd QCL-TypeD > CORESETPoolIndex 1 - 1st QCL-TypeD > CORESETPoolIndex 1 - 2nd QCL-TypeD (i.e., ID > 1st QCL-typeD, where CORESETPoolIndex is considered first, and then QCL-typeD may be considered).

According to the above priority order, higher priority items may be considered first in monitoring. The embodiment of Alt3-1 is similar to Alt2 described above, and thus a detailed description may be made with reference to the description of Alt2.

Alt3-2) Priority order: CORESETPoolIndex 0 - 1st QCL-TypeD > CORESETPoolIndex 1 - 1st QCL-TypeD > CORESETPoolIndex 0 - 2nd QCL-TypeD > CORESETPoolIndex 1 - 2nd QCL-TypeD (i.e., ID < 1st QCL-typeD, where QCL-typeD is considered first, and then CORESETPoolIndex may be considered).

According to the above priority order, higher priority items may be prioritized first in monitoring.

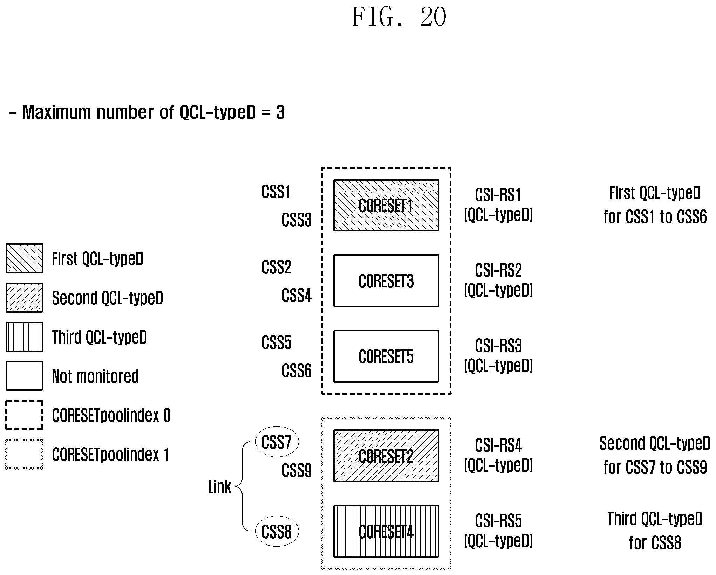

FIG. 20 illustrates a method for determining a priority upon reception of PDCCH repetition transmission according to an embodiment of the disclosure.

Referring to FIG. 20, the gNB may configure five CORESETs and nine CSSs for the UE. Specifically, the base station may configure two CORESETpoolindexes. For example, the base station may configure CORESETs 1, 3, and 5 including CORESETpoolindex 0, and may configure CORESETs 2 and 4 including CORESETpoolindex 1. The relationship between the configurations of CORESETs 1 to 5 and the configurations of CSSs 1 to 9 is illustrated in FIG. 20. Here, the base station may configure, for the UE, CSS7 and CSS8 which are linked for a repeatedly transmitted PDCCH. As such, the base station may configure up to three QCL-typeDs over the entire CORESETpoolindex in consideration of the UE capability. For example, the base station may configure CSS7 to be linked to CSS8 for PDCCH repetition transmission (e.g., searchSpaceLinkingId = 0). In addition, the base station may configure QCL-typeD by referring to CSI-RSs 1 to 5, respectively, in CORESETs 1 to 5.

If, between two CORESETpoolindexes, PDCCHs repeatedly transmitted over a CORESETpoolindex (e.g., CORESETpoolindex 1) overlap according to a principle agreed between the base station and the UE (a predefined rule), the UE may preferentially monitor a first QCL-TypeD of CORESET 1 in CORESETpoolindex 0, within a limit allowed by the UE capability. Thereafter, as long as a capability of the UE for simultaneous reception of QCL-TypeDs is not exceeded, when a first QCL-TypeD is configured in CORESET 2 of CORESETpoolindex 1, the UE may next perform monitoring of a QCL-TypeD of CSS 8 (CSS 8 linked to CSS 7) for PDCCHs repeatedly transmitted in CSSs 7 and 9 corresponding to CORESET 2 configured in CORESETpoolindex 1. This is because the UE has not yet satisfied a maximum number of QCL-TypeDs for CORESETpoolindex 0 and thus continuously performs monitoring for CORESETpoolindex 0, and because, for monitoring PDCCH repetition transmission for CORESETpoolindex 1, the maximum number of QCL-TypeDs (e.g., 3) is satisfied, so that monitoring can be performed for CSSs 7 to 9 of CORESETs 2 and 4. Finally, the UE may stop performing monitoring for CSSs 2, 4, 5, and 6 of the remaining CORESETs 3 and 5.

Alt4) In case that the UE reports to the base station that the UE supports a maximum of 2, 3, or 4 QCL-typeDs (maximum value of QCL-typeD = 2/3/4 (maximum number of QCL-typeDs = 2/3/4)), if the base station configures monitoring occasions for the UE to receive a repeatedly transmitted PDCCH to overlap in the time domain, the UE may perform monitoring by preferentially considering a specific CORESETpoolindex or a specific searchSpaceLinkingId configured by the base station in a higher layer (e.g., RRC configuration and/or a MAC-CE message), and may give up monitoring for QCL-typeDs exceeding a capability of the UE.

Alt4-1). The gNB may configure a high-priority CORESETpoolindex (e.g., CORESETPoolIndex value of 0 or 1) for the UE through RRC.

Alt4-2). The gNB may configure a high-priority searchSpaceLinkingId (e.g., searchSpaceLinkingId 0 or 1) for the UE through RRC.

The following various examples will be described under the assumption that the UE has reported to the base station that the UE supports up to three QCL-typeDs (maximum value of QCL-typeD = 3 (maximum number of QCL-typeDs = 3)).

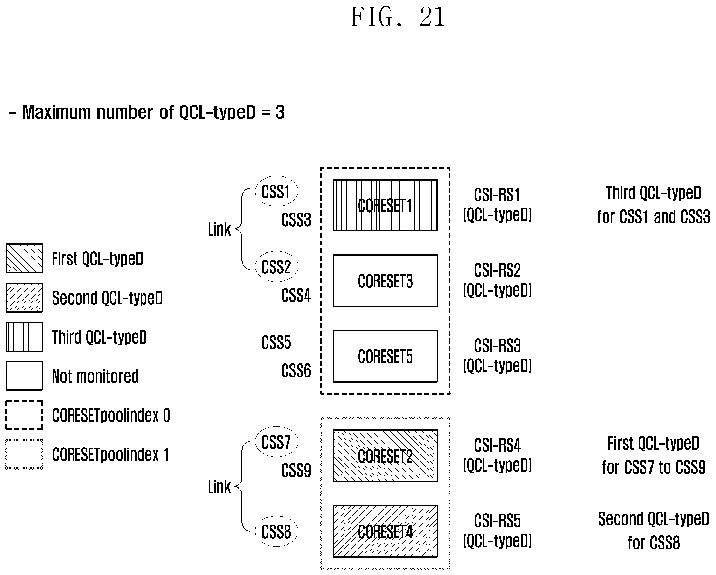

FIG. 21 illustrates a method for determining a priority upon reception of PDCCH repetition transmission according to an embodiment of the disclosure.

For example, as shown in FIG. 21, a base station may configure five CORESETs (CORESET 1, CORESET 2, CORESET 3, CORESET 4, and CORESET 5) and nine CSSs (CSS1, CSS2, CSS3, CSS4, CSS5, CSS6, CSS7, CSS8, and CSS9) for a UE. Specifically, the base station may configure two CORESETpoolIndex values. For example, the base station may configure CORESETs 1, 3, and 5 including CORESETpoolIndex 0, and CORESETs 2 and 4 including CORESETpoolIndex 1. The configuration relationship between CORESETs 1 to 5 and CSSs 1 to 9 is illustrated in FIG. 21. Here, the base station may configure, for the UE, (CSS1, CSS2) and (CSS7, CSS8) to be linked for a repeatedly transmitted PDCCH. As such, the base station may configure up to three QCL-typeDs across the entire CORESETpoolIndex, in consideration of the UE capability. For example, the base station may configure CSS1 to be linked to CSS2 for PDCCH repetition transmission (e.g., searchSpaceLinkingId = 0), and may configure CSS7 to be linked to CSS8 for PDCCH repetition transmission (e.g., searchSpaceLinkingId = 1). In addition, the base station may configure QCL-typeD by referencing CSI-RS1 to CSI-RS5 for CORESETs 1 to 5, respectively.

If, between two CORESETpoolIndexes, PDCCHs repeatedly transmitted over a CORESETpoolIndex configured by the base station (e.g., CORESETpoolIndex 1 or searchSpaceLinkingId 1) overlaps, the UE may preferentially monitor the CORESETpoolIndex or the searchSpaceLinkingId configured by the base station, within the capability of the UE. That is, as long as a simultaneous reception capability of the UE for QCL-typeD is not exceeded, when CORESETPoolIndex value of 1 or searchSpaceLinkingId 1 is configured, the UE may preferentially monitor QCL-typeDs of CSS7 and CSS9 for a repeatedly transmitted PDCCH among CSS7 to CSS9 corresponding to CORESETs 2 and 4 configured with CORESETPoolIndex 1 or searchSpaceLinkingId 1, and may subsequently monitor a QCL-typeD of CSS8.

Since the UE is still capable of additionally monitoring one QCL-typeD among the maximum number of supported QCL-typeDs, the UE may continue monitoring for the next CORESETpoolIndex (e.g., CORESETpoolIndex 0) or searchSpaceLinkingId (e.g., searchSpaceLinkingId 0). From CORESETpoolIndex 0, the UE may select CSS1 and CSS3 of CORESET 1 as having the highest priority and perform monitoring. As a result, the UE may stop performing monitoring for the remaining CORESETs 3 and 5.

Although the above embodiments have been described with respect to CORESETpoolIndex or searchSpaceLinkingId, embodiments considering both simultaneously are also possible and are not excluded from the scope of the disclosure.

In addition, the various embodiments of the disclosure described above may be applied individually and/or in combination with each other. An example of a combined embodiment will be described below as Alt5.

Alt5) If the UE reports to the base station that the UE supports a maximum of 2, 3, or 4 QCL-typeDs (maximum value of QCL-typeD = 2/3/4 (maximum number of QCL-typeD = 2/3/4)), and the base station configures monitoring occasions for reception of a repeatedly transmitted PDCCH to overlap in the time domain, the UE may determine a priority of CORESETpoolIndex according to the principle of an embodiment of the disclosure described in Alts 1 to 4, and additionally performs monitoring by preferentially considering a CSS or USS in which a searchSpaceLinkingId configured by the base station in a higher layer (e.g., RRC configuration and/or a MAC-CE message) is identical to a CORESETpoolIndex, and may give up performing monitoring for QCL-typeDs exceeding a capability of the UE.

That is, in Alt5, a QCL priority rule may be applied according to a configuration in which a CSS set or a USS set includes a searchSpaceLinkingId having the same value as a predetermined CSS set, or includes a predetermined USS set associated with a CORESET having a qcl-Type configured with a first "typeD" attribute in a CORESETpoolIndex having a higher priority.

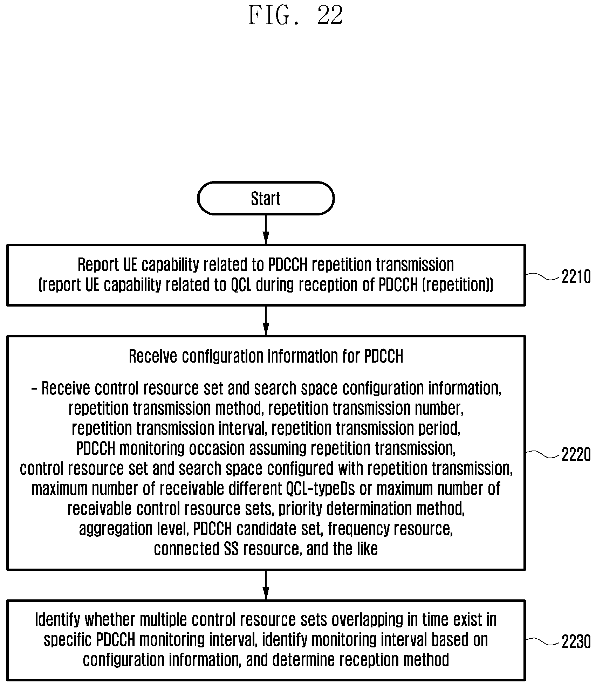

FIG. 22 is a flowchart illustrating an operation of a UE for receiving a repeatedly transmitted PDCCH according to an embodiment of the disclosure. Various changes may be made to the method illustrated in the flowchart of FIG. 22. For example, although illustrated as a series of operations, various operations may overlap, occur in parallel, occur in a different order, or occur multiple times. In another example, an operation may be omitted or replaced with another operation. FIG. 22 may be specifically applied to the various embodiments of FIGS. 16 to 21, and the order of operations may be changed depending on the situation.

In operation 2210, the UE may perform UE capability reporting related to PDCCH repetition transmission to the base station. For example, the reported information may include information related to a QCL-related UE capability during reception of PDCCH (repetition).

In operation 2220, the UE may receive various pieces of configuration information for the PDCCH in a higher-layer configuration. For example, the received configuration information may include at least one of configuration information of a CORESET and a search space (SS), a repetition transmission method, a number of repetition transmissions, a repetition transmission interval, a repetition transmission periodicity, a PDCCH monitoring occasion in which repetition transmission is assumed, a CORESET and a search space in which repetition transmission is configured, a maximum number of different QCL-typeDs or CORESETs that can be received, a priority determination scheme, an aggregation level, a PDCCH candidate set, frequency resources, and linked SS resources.

In operation 2230, the UE may identify that a plurality of CORESETs overlap in time in a specific PDCCH monitoring interval, and may determine a reception method by identifying the monitoring interval based on the configuration information.

The following describes UE capabilities in consideration of combinations of whether multiple TRPs are supported, whether multiple DCIs are supported, and whether PDCCH repetition is supported.

Specifically, Table 28 below summarizes UE capabilities regarding support for multi-DCI multi-TRP (MDCI MTRP), support for PDCCH repetition (repeated transmission of the same downlink control channel information), simultaneous support for two functions for multi-DCI multi-TRP (MDCI MTRP) and PDCCH repetition, simultaneous support for two functions for PDCCH repetition and simultaneous reception of different QCL-TypeDs, and support for simultaneous reception of different QCL-TypeDs when MDCI MTRP is supported.

Specifically, the UE capability describes functional characteristics based on a feature, index, or feature group, and describes, in a categorized manner, whether implementation of a function is mandatory or optional, a mandatory feature group, whether the gNB needs to know whether the function is supported, a result when the UE does not support the function, and whether, in UE functions, a type is defined per: 1) UE, or 2) band, or 3) band combination, or 4) feature set (FS), or 5) feature set per component-carrier (FSPC), and further specifies whether distinction between FDD and TDD is required, whether distinction between frequency range (FR)1 and FR2 is required, and shows specific functions based on combinations of FDD/TDD and/or FR1/FR2.

[Table 28]

| Feature | Index | Feature Group | Components | Note | Mandatory/Optional |
|---|---|---|---|---|---|
| 16. NR_eMIMO | 16-2a | Multi-DCI based multi-TRP | 1. The maximum number of CORESETs configured per BWP per cell in addition to CORESET 0 for multi-DCI based multi-TRP PDS CH/PUSCH operation<br>2. The maximum number of CORESETs configured per CORESETPoolIndex ( if CORESETPoolIndex is not configured, it is assumed CORESETPoolIndex = 0) per BWP per cell in addition to CORESET 0 for multi-DCI based multi-TRP PDSCH/PUSCH operation<br>3. Support fully/partially over lapping PDSCHs in time and non-overlapping in frequency<br>4. Maximum number of unic ast PDSCHs per CORESE TPoolIndex per slot | Note: A UE may assume that its maximum receive timing difference between the DL transmissions from two TRPs is within a CP<br>Note: Processing capability 2 is not supported in any CC if at least one CC is configured with two values of CORESETPoolIndex<br><br>Component 1: Candidate values {2,3,4,5}<br>Note: 1. If UE reports value N1 for component 1, that means UE supports up to min (N1÷1, 5) CORESETs in total (including CORESET#0) if there is CORESET#0, and supports maximal N1 CORESETs if there is no CORESET#0.<br>Component 2: Candidate values {1,2,3}<br><br>Note: If UE reports value N2 for component 2, that means UE supports up to min (N2+1, 3) CO RESETs in total (including CORESET#0) for a T RP if there is CORESET#0, and supports maximal N2 CORESETs for another TRP if there is no CORESET#0.<br>Component 4: Candidate values {1,2,3,4,7}<br>Note: per SCS, similar with Rel-15<br>For the multi-DCI based multi-TRP PUSCH oper ation, the maximum number of unicast PUSCHs that UE can support per slot is based on Rel-15 FG5-12/12a/12b, and it is counted across both CORLSETPoolIndex of TRPs. | Optional with capability signaling |

(continued)

| Feature | Index | Feature Group | Components | Note | Mandatory/Optional |
|---------|-------|---------------|------------|------|--------------------|
| 23. *NR_FeMIMO* | 23-2-1 | PDCCH repetition | 1. Support of intra-slot PDC CH repetition based on two linked SS sets associate d with corresponding COR ESETs including PDCCH repetition for Type 3 CSS 2. Required number of BDs for the two PDCCH candid ates 3 Support max number of overlaps when one of the linked PDCCH candidates uses the same set of CCEs as an individual (unlinked) PDCCH candidate per se heduled component carrier per slot | Component 2 candidate values: 2 or 3 Component 3 candidate values: {1.2,3, 5, 10, 2 0, 40} Note: UE supports PDCCH repetition for the following (basic) PDCCH monitoring capability: For type 1 CSS with dedicated RRC configuration, type 3 CSS, and UE-SS, the monitoring occasion is within the first 3 OFDM symbols of a slot Note: for component 3, each unique pair of overlaps is counted as one. Note: This FG does not include supporting Two QCL-TypeD in time-domain overlapping CO RESETs in FR2. | Optional with capability signalling |
| 23. *NR_FeMIMO* | 23-2-4 | Simult aneous contigu ration of PD CCH repetition and multi-DCI based multi-TR P | Support of simultaneous configuration of PDCCH repetition and multi-DCI based multi-TRP | Note: Two linked PDCCH candidates are not expected to be associated with different CORESETPoolIndex values | Optional with capability signalling |
| 23. *NR_FeMIMO* | 23-2-2 | Two QCL Ty peD for COR ESET | Support of determining two QCL-TypeD for time-do main overlapping CORESE Ts in the same CC or tor intra-band CA when UE is | | Optional with capability signalling |
| | | monito ring in PDCC H repe tition | configured with PDCCH repetition | | |
| 55. *TEI-18* | 55-7 | Two Q CL Ty peD for COR ESET monito ring in multi-DCI based m ulti-TR P | Support of determining two QCL-TypeD for time-do main overlapping CORESE Ts in the same CC or for intra-band CA associated with corcsetPoolIndex value 0 and 1 | | Optinalwith capability signalling |

| Feature | Prereq uisite f eature groups | Need for the gNB to know if the feature is supported | Consequence if the feature is not supported by the UE | Type (the 'type' definition from UE features should be based on the granularity of 1) Per UE or 2) Per B and or 3) Per BC or 4) Per FS or 5) Per FSPC) | Need of FDD/TD D differe ntiation | Need of F R1/F R2 differe ntiation | Capability int erpretation for mixture of FDD/TDD and/or FR1/F R2 |
|---|---|---|---|---|---|---|---|
| 16. NR _eMI MO | | Yes | | Per FSPC | No | No | |
| 23. NR_FeM IMO | | Yes | PDCCH repetition is not supported | Per FS | n/a | n/a | n/a |
| 23. NR_FeM IMO | 23-2-1, 16-2a | Yes | Simultaneous configuration of PDCCH repetition and multi-DCI based multi-TRP is not supported | Per FS | n/a | n/a | n/a |
| 23. NR_FeM IMO | 23-2-1 | Yes | Two QCL TypeD for CORES ET monitoring in PDCCH re petition is not supported | Per band | n/a | F R 2 only | n/a |
| 55. TEI-18 | 16-2a | Yes | | Per FSPC | N/A | F R2 only | N/A |

The various embodiments described above may be operated in association with UE capability reporting based on Table 28 described above, and may be summarized into five items as shown in Table 29 below. For detailed characteristics of each detailed feature group (FG), reference may be made to the descriptions of the components and notes in Table 28.

[Table 29]

```
1. FG 16-2a: Support MDCI MTRP
2. FG 23-2-1: Support PDCCH repetition
3. FG 23-2-4: Simultaneous support MDCI and PDCCH repetition
4. FG 23-2-2: Support QCL prioritization for PDCCH repetition
5. FG 55-7: Support QCL prioritization for MDCI MTRP
```

The UE may report, to the base station, whether the above-described five features (groups) are supported, based on an identifier corresponding to at least one of a feature, an index, and a feature group in Table 28. The report may include whether at least one of the functions of the five features (groups) is supported.

For example, when the UE reports that the UE simultaneously supports MDCI and reception of a repeatedly transmitted PDCCH, as in item 3 (FG 23-2-4), the UE may mandatorily include support for MDCI-based MTRP reception capability of item 1 (FG 16-2a) and/or support for reception capability of a repeatedly transmitted PDCCH of item 2 (FG 23-2-1). That is, in a capability report, the UE may define the functions of items 1 (FG 16-2a) and 2 (FG 23-2-1) as "pre-requisites" for the function of item 3 (FG 23-2-4).

As another example, when the UE reports that the UE supports two QCL-TypeDs for a time-domain overlapping CORESET within the same component carrier (CC) or for intra-band carrier aggregation (CA) when PDCCH repetition is configured, as in item 4, the UE may mandatorily include support for reception capability of a repeatedly transmitted PDCCH of item 2. That is, in the capability report, the UE may define the function of item 2 (FG 23-2-1) as a "pre-requisite" for the function of item 4 (FG 23-2-2).

As another example, when the UE reports that the UE supports two QCL-TypeDs for a time-domain overlapping CORESET within the same CC or for intra-band CA associated with CORESETpoolIndex values 0 and 1, as in item 5 (FG 55-7), the UE may mandatorily include support for MDCI-based MTRP reception capability of item 1 (FG 16-2a). That is, in the capability report, the UE may define the function of item 1 (FG 16-2a) as a "pre-requisite" for the function of item 5 (FG 55-7).

As another example, when the UE reports one or more of the above five UE capabilities, the UE may report only specific combinations thereof. That is, in reporting the above five UE capabilities, certain constraints may exist such that, when a specific UE capability is reported, another specific UE capability also needs to be reported, or may not be reported.

The above-described embodiments have been described in a simplified manner by combining some cases. Hereinafter, representative methods are classified and described again. The following description refers to Table 29.

[Alt 6-0]

When the UE reports at least one of UE capability features 1 to 5 to the base station, additional pre-requisite items other than previously determined pre-requisites may not be required. That is, when the UE selects and reports at least one of items 1 to 3 to the base station, reporting of UE capabilities of items 4 and 5 is not restricted.

For example, when the UE selects and reports all capabilities of items 1 to 3 to the base station, reporting of UE capabilities of items 4 and 5 may be omitted. This means that, when reporting the capabilities of items 1 to 3, the capability information of items 4 and 5 is neither included therein nor separately reported thereafter. As another example, when the UE selects and reports all capabilities of items 1 to 3 to the base station, capability information of at least one of item 4 and/or item 5 may be reported. This means that, when reporting the capabilities of items 1 to 3, the capability information of at least one of item 4 and/or item 5 may be included therein, or may be reported separately thereafter.

As another example, after the UE reports all capabilities related to items 3, 4, and 5 to the base station, if the base station configures, for the UE, information for reception of a repeatedly transmitted PDCCH (PDCCH repetition) corresponding to item 4 capability, and configures a multi-DCI-based multi-TRP corresponding to item 5 capability, the UE may receive PDCCHs corresponding to multiple different QCL-TypeDs by applying a QCL-TypeD prioritization rule, as described in the various embodiments such as Alt 1 to Alt 5.

[Alt 6-1]

When the UE reports to the base station that simultaneous configuration for reception of signals from multiple TRPs and reception of a repeatedly transmitted PDCCH based on multiple DCIs is possible, as in item 3 capability, the UE may not support reporting both item 4 capability and item 5 capability. That is, the UE may select and report only one of item 4 capability and item 5 capability.

By allowing only one combination of either item 3 capability and item 4 capability or item 3 capability and item 5 capability to be reported in this manner, the base station may determine that, even when the UE supports item 3 capability, a case in which the UE receives different QCL-TypeDs in a PDCCH repetition situation as in item 4 capability and a case in which the UE receives different QCL-TypeDs as in item 5 capability do not occur simultaneously in a multi-DCI-based multi-TRP scenario. That is, based on the capability reported by the UE, the base station may instruct the UE, by using RRC configuration and/or a MAC-CE message, to receive a control channel based on two QCL-TypeDs in CORESETs overlapping in a time domain in a multi-DCI-based multi-TRP scenario, or to receive a control channel based on two QCL-TypeDs in a single DCI-based PDCCH repetition.

[Alt 6-2]

When the UE reports to the base station that simultaneous configuration for reception of signals of a multi-DCI-based multi-TRP and reception of a repeatedly transmitted PDCCH is possible, as in item 3 capability, the base station and/or the UE may assume that item 4 capability is not reported, regardless of whether item 5 capability is reported.

That is, when the UE reports that it is capable of performing simultaneous reception of signals of a multi-DCI-based multi-TRP and reception of a repeatedly transmitted PDCCH, the UE may assume a state in which a PDCCH repeatedly transmitted from a single TRP can be simultaneously received, since the UE may receive PDCCH repetition using a CORESET configured with the same CORESETPoolIndex. Accordingly, by omitting reporting of item 4 capability, which indicates a capability of receiving different QCL-Type Ds during PDCCH repetition, the UE may reduce a data size or reduce a reporting delay when capabilities are reported sequentially.

[Alt 6-3]

When the UE reports to the base station that simultaneous configuration for reception of signals of a multi-DCI-based multi-TRP and reception of a repeatedly transmitted PDCCH is possible, as in item 3 capability, the base station and/or the UE may assume that neither item 4 capability nor item 5 capability is reported.

That is, when the UE reports information related to item 3 capability as described above, by not reporting any information related to item 4 capability and item 5 capability, the UE may determine and control not to add complexity caused by supporting simultaneous reception of different QCL-TypeDs to a level of complexity incurred due to supporting item 3 capability.

[Alt 6-4]

When the UE does not report to the base station that simultaneous configuration for reception of signals of a multi-DCI-based multi-TRP and reception of a repeatedly transmitted PDCCH is possible, as in item 3 capability, the base station and/or the UE may directly report information related to item 4 capability and/or item 5 capability. That is, reporting of item 3 capability may not be required as a pre-requisite for reporting item 4 capability and/or item 5 capability.

In other words, since a case in which information related to reception of signals of a multi-DCI-based multi-TRP and information related to reception of a repeatedly transmitted PDCCH are configured simultaneously does not occur, the base station and the UE may assume that a case in which different QCL-Type Ds are received in a multi-DCI-based multi-TRP scenario and a case in which different QCL-Type Ds are received in a PDCCH repetition situation do not occur simultaneously.

Therefore, the UE may report all information related to item 4 capability and/or item 5 capability without reporting item 3 capability as a pre-requisite, such that the base station may selectively receive and configure information related to reception of signals of a multi-DCI-based multi-TRP and/or reception of a repeatedly transmitted PDCCH.

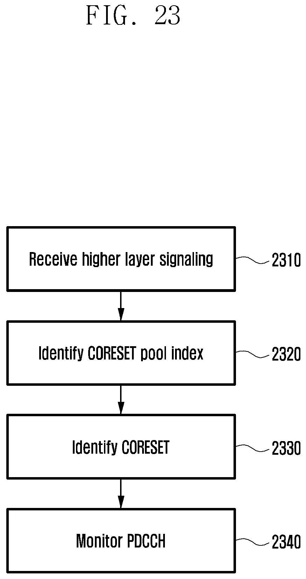

FIG. 23 illustrates an example of an operation of a UE according to an embodiment of the disclosure. Various modifications may be made to the method illustrated in the flowchart of FIG. 23. For example, although illustrated as a series of operations, the various operations may overlap, occur in parallel, occur in a different order, or occur multiple times. In another example, an operation may be omitted or replaced with another operation.

In operation 2310, the UE may receive, via a higher layer signaling, (i) a configuration for physical downlink control channel (PDCCH) repetition and (ii) a configuration for multiple control resource sets (CORESETs).

In operation 2320, when a CORESET pool index corresponding to some CORESETs among the multiple CORESETs is configured as 1, the UE may identify one or more CORESETs for PDCCH monitoring among the multiple CORESETs, based on quasi co-location (QCL) type-D configurations corresponding to the multiple CORESETs. According to an embodiment, based on a predefined QCL priority, one or more CORESETs for PDCCH monitoring may be identified from among the multiple CORESETs so that a number of QCL type-D configurations for PDCCH monitoring is equal to or less than a maximum number of QCL type-D configurations supported by the UE.

In operation 2330, the UE may receive PDCCH repetition, based on PDCCH monitoring for the one or more CORESETs.

More specific details of the UE operations described above may be referred to in the descriptions of the various embodiments of the disclosure described above.

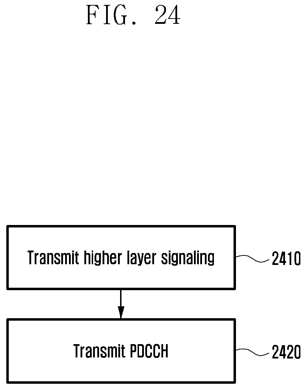

FIG. 24 illustrates an example of operations of a base station according to an embodiment of the disclosure. Various modifications may be made to the method illustrated in the flowchart of FIG. 24. For example, although illustrated as a series of operations, the various operations may overlap, occur in parallel, occur in a different order, or occur multiple times. In another example, an operation may be omitted or replaced with another operation.

In operation 2410, the base station may transmit, to a UE, via higher-layer signaling, (i) a configuration for physical downlink control channel (PDCCH) repetition and (ii) a configuration for multiple control resource sets (CORESETs).

In operation 2420, the base station may transmit PDCCH repetition to the UE, based on one or more CORESETs among the multiple CORESETs.

According to an embodiment, when a CORESET pool index corresponding to some of the multiple CORESETs is configured as 1, the one or more CORESETs may be determined based on quasi co-location (QCL) type-D configurations corresponding to the multiple CORESETs and a predefined QCL priority.

According to an embodiment, the number of QCL type-D configurations corresponding to the one or more CORESETs may be equal to or less than a maximum number of QCL type-D configurations for PDCCH monitoring supported by the UE.

More specific details of the base station operations described above may be referred to in the descriptions of the various embodiments of the disclosure described above.

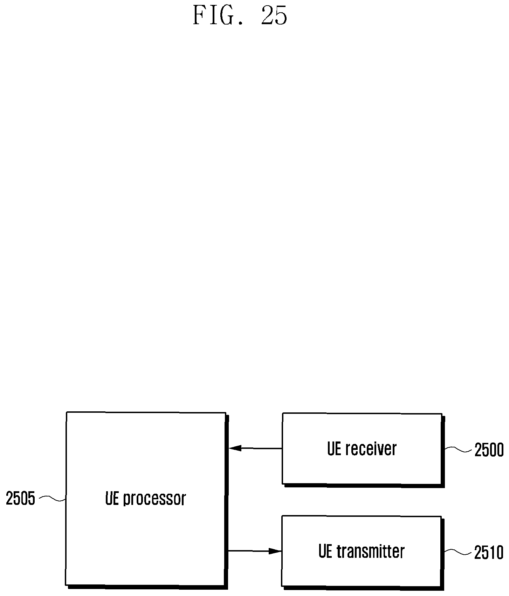

FIG. 25 illustrates a structure of a UE in a wireless communication system according to an embodiment of the disclosure.

Referring to FIG. 25, the UE may include a transceiver, which refers to a UE receiver 2500 and a UE transmitter 2510 as a whole, a memory (not illustrated), and a UE processor 2505 (or UE controller or processor). The UE transceiver 2500 and 2510, the memory, and the UE processor 2505 of the UE may operate according to the above-described communication methods of the UE. However, components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes so that the UE can operate according to the above-described embodiments. For example, the processor may control components of the UE to receive DCI configured in two layers so as to simultaneously receive multiple PDSCHs. The processor may include multiple processors, and the processor may perform operations of controlling the components of the UE by executing programs stored in the memory.

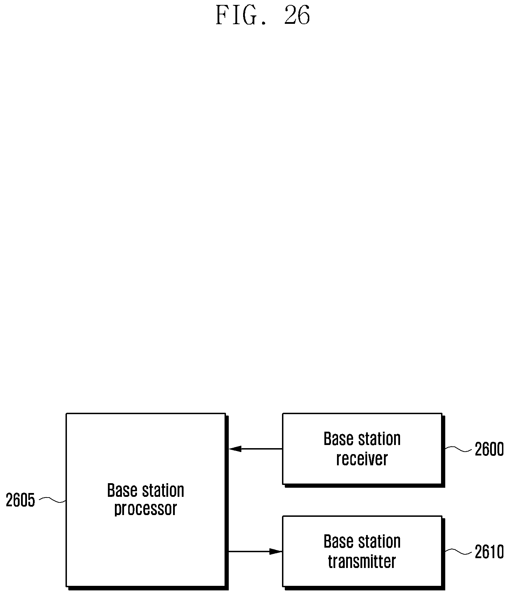

FIG. 26 illustrates a structure of a base station in a wireless communication system according to an embodiment of the disclosure.

Referring to FIG. 26, the base station may include a transceiver, which refers to a base station receiver 2600 and a base station transmitter 2610 as a whole, a memory (not illustrated), and a base station processor 2605 (or base station controller or processor). The base station transceiver 2600 and 2610, the memory, and the base station processor 2605 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes so that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing an embodiment of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a communication system, the method comprising:

   receiving, through higher layer signaling, (i) a configuration for physical downlink control channel (PDCCH) repetition and (ii) a configuration for a plurality of control resource sets (CORESETs);
   in case that CORESET pool indices corresponding to some CORESETs among the plurality of CORESETs are configured as 1, identifying, based on quasi co-location (QCL) type-D configurations corresponding to the plurality of CORESETs and a predefined QCL priority, one or more CORESETs for PDCCH monitoring among the plurality of CORESETs such that a number of QCL type-D configurations for PDCCH monitoring is equal to or less than a maximum number of QCL type-D configurations supported by the terminal; and
   receiving the PDCCH repetition, based on PDCCH monitoring for the one or more CORESETs.

2. The method of claim 1, wherein CORESET pool indices corresponding to the remaining CORESETs other than the some CORESETs among the plurality of CORESETs are not configured or configured as 0,

   wherein, in case that the maximum number is defined for each CORESET pool index, the identifying of the one or more CORESETs such that the number of QCL type-D configurations is equal to or less than the maximum number is applied to each of the some CORESETs and the remaining CORESETs, and
   wherein, in case that the maximum number is defined for all CORESET pool indices, the identifying of the one or more CORESETs such that the number of QCL type-D configurations is equal to or less than the maximum number is applied to the plurality of CORESETs.

3. The method of claim 1, wherein the plurality of CORESETs overlap in a time domain,

 wherein the plurality of CORESETs include a plurality of search spaces (SSs), and
 wherein, in identifying the QCL priority, the CORESET pool indices are considered in ascending order, indices of the plurality of CORESETs are considered in ascending order, and then indices of the plurality of SSs are considered in ascending order.

4. The method of claim 3, wherein, in case that the plurality of SSs comprise two SSs having the same linking identifier, and a CORESET including a first SS among the two SSs is identified as being for the PDCCH monitoring, a CORESET including a second SS among the two SSs is identified as being for the PDCCH monitoring.

5. The method of claim 3, wherein, in case that a first CORESET corresponding to a first CORESET pool index among the CORESET pool indices is identified as being for the PDCCH monitoring, a second CORESET corresponding to a second CORESET pool index among the CORESET pool indices and having the same QCL type-D configuration as a QCL type-D configuration of the first CORESET is identified as being for the PDCCH monitoring.

6. The method of claim 3, wherein an SS having a lowest index among SSs included in a CORESET having a lowest index among CORESETs corresponding to a lowest CORESET pool index among the CORESET pool indices is most preferentially considered in identifying the QCL priority.

7. The method of claim 3, wherein, in case that information for configuring a high priority for a specific CORESET pool index is received, the specific CORESET pool index configured with the high priority is preferentially considered in identifying the QCL priority, instead of considering the CORESET pool indices in ascending order, and
 wherein, in case that information for configuring a high priority for a specific linking identifier is received, two SSs having the specific linking identifier are preferentially considered in identifying the QCL priority.

8. The method of claim 1, further comprising transmitting a terminal capability report including information on the maximum number,
 wherein the terminal capability report further comprises information corresponding to at least one feature group (FG) identified according to a predefined rule among a plurality of predefined FGs with regard to whether the terminal supports the identifying of the one or more CORESETs for PDCCH monitoring, based on the QCL priority.

9. A terminal in a communication system, comprising:

 a transceiver; and
 a processor connected to the transceiver,
 wherein the processor is configured to:

 receive, through higher layer signaling, (i) a configuration for physical downlink control channel (PDCCH) repetition and (ii) a configuration for a plurality of control resource sets (CORESETs); and
 in case that CORESET pool indices corresponding to some CORESETSs among the plurality of CORESETs are configured as 1, identify, based on quasi co-location (QCL) type-D configurations corresponding to the plurality of CORESETs and a predefined QCL priority, one or more CORESETs for PDCCH monitoring among the plurality of CORESETs such that a number of QCL type-D configurations for PDCCH monitoring is equal to or less than a maximum number of QCL type-D configurations supported by the terminal; and
 receive the PDCCH repetition based on PDCCH monitoring with respect to the one or more CORESETs.

10. The terminal of claim 9, wherein CORESET pool indices corresponding to the remaining CORESETs other than the some CORESETs among the plurality of CORESETs are not configured or configured as 0,

 wherein, in case that the maximum number is defined for each CORESET pool index, the identifying of the one or more CORESETs such that the number of QCL type-D configurations is equal to or less than the maximum number is applied to the some CORESETs and the remaining CORESETs, and
 wherein, in case that the maximum number is defined for all CORESET pool indices, the identifying of the one or more CORESETs such that the number of QCL type-D configurations is equal to or less than the maximum number is applied to the plurality of CORESETs.

11. The terminal of claim 9, wherein the plurality of CORESETs overlap in a time domain,

   wherein the plurality of CORESETs include a plurality of search spaces (SSs), and
   wherein, in identifying the QCL priority, the CORESET pool indices are considered in ascending order, indices of the plurality of CORESETs are considered in ascending order, and then indices of the plurality of SSs are considered in ascending order.

12. The terminal of claim 11, wherein one or more of the followings are satisfied:

   in case that the plurality of SSs comprise two SSs having a same linking identifier, and a CORESET including a first SS among the two SSs is identified as being for the PDCCH monitoring, a CORESET including a second SS among the two SSs is identified as being for the PDCCH monitoring;
   in case that a first CORESET corresponding to a first CORESET pool index among the CORESET pool indices is identified as being for the PDCCH monitoring, a second CORESET corresponding to a second CORESET pool index among the CORESET pool indices and having the same QCL type-D configuration as a QCL type-D configuration of the first CORESET is identified as being for the PDCCH monitoring;
   an SS having a lowest index among SSs included in a CORESET having a lowest index among CORESETs corresponding to a lowest CORESET pool index among the CORESET pool indices is most preferentially considered in identifying the QCL priority;
   in case that information for configuring a high priority for a specific CORESET pool index is received, the specific CORESET pool index configured with the high priority is preferentially considered in identifying the QCL priority, instead of considering the CORESET pool indices in ascending order; or
   in case that information for configuring a high priority for a specific linking identifier is received, two SSs having the specific linking identifier are preferentially considered in identifying the QCL priority.

13. The terminal of claim 9, wherein the processor is configured to transmit a terminal capability report including information on the maximum number, and
   wherein the terminal capability report further comprises information corresponding to at least one feature group (FG) identified according to a predefined rule among a plurality of predefined FGs with regard to whether the terminal supports the identification of the one or more CORESETs for the PDCCH monitoring, based on the QCL priority.

14. A method performed by a base station in a communication system, the method comprising:

   transmitting, to a terminal through higher layer signaling, (i) a configuration for physical downlink control channel (PDCCH) repetition and (ii) a configuration for a plurality of control resource sets (CORESETs); and
   transmitting the PDCCH repetition to the terminal, based on one or more CORESETs among the plurality of CORESETs,
   wherein, in case that CORESET pool indices corresponding to some CORESETs among the plurality of CORESETs are 1, the one or more CORESETs are based on quasi co-location (QCL) type-D configurations corresponding to the plurality of CORESETs and a predefined QCL priority, and
   wherein a number of QCL type-D configurations corresponding to the one or more CORESETs is equal to or less than a maximum number of QCL type-D configurations supported by the terminal.

15. A base station in a communication system, comprising:

   a transceiver; and
   a processor connected to the transceiver,
   wherein the processor is configured to:

      transmit, to a terminal through higher layer signaling, (i) a configuration for physical downlink control channel (PDCCH) repetition and (ii) a configuration for a plurality of control resource sets (CORESETs); and
      transmit the PDCCH repetition to the terminal, based on one or more CORESETs among the plurality of CORESETs,
      wherein, in case that CORESET pool indices corresponding to some CORESETs among the plurality of CORESETs are 1, the one or more CORESETs are based on quasi co-location (QCL) type-D configurations corresponding to the plurality of CORESETs and a predefined QCL priority, and
      wherein a number of QCL type-D configurations corresponding to the one or more CORESETs is equal to or less than a maximum number of QCL type-D configurations supported by the terminal.

FIG. 1

One subframe (110)

$N_{symb}^{subframe,\mu}$ OFDM symbol

1 OFDM symbol (102)

1 subcarrier (103)

$K = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

$K = 0$

$\bar{l} = 0$

$\bar{l} = 14 \cdot 2^{\mu} - 1$

Frequency

Time

# FIG. 2

One frame (200)

One subframe (201)

| μ=0 (204) | 0 | 1 | 2 | 3 | 4 | 5 | 6 | 7 | 8 | 9 |

Slot (202)

| μ=1 (205) | 0 | 1 | 2 | 3 | 4 | 5 | 6 | 7 | 8 | 9 | 10 | 11 | 12 | 13 | 14 | 15 | 16 | 17 | 18 | 19 |

Slot (203)

# FIG. 3

# FIG. 4

Interval (404)

Frequency resource (403)

UE bandwidth (410)

Frequency

Time

Slot (420)

Control resource set #1 (401)

control resource set#2 (402)

# FIG. 5A

1 symbol
(501)

1 PRB
(502)

DMRS
(505)

REG
(503)

CCE
(504)

# FIG. 5B

One slot = 14 OFDM symbols

| 0 | 1 | 2 | 3 | 4 | 5 | 6 | 7 | 8 | 9 | 10 | 11 | 12 | 13 |

Search space 1
Search space 2
Search space 3

[5b-00]

[X,Y] = [7,3]

X=7
Y=3
Y=3

[5b-05]

[X,Y] = [4,3]

X=4
X'=5>X
X'=5>X
Y=3
Y=3
Y=3

[5b-10]

[X,Y] = [2,2]

X=2  X=2  X=2  X=2  X=2  X=2  X=2
Y=2  Y=2  Y=2  Y=2  Y=2  Y=2  Y=2

EP 4 770 243 A1

# FIG. 6

Reception of PDCCH indicating new uplink transmission or downlink transmission (630)

drx-onDurationTimer (615)

Start or restart of drx-InactivityTimer (620)

drx-LongCycle (625)

Active time (605)

EP 4 770 243 A1

FIG. 7

TCI state #0
(700)

TCI state #1
(705)

TCI state #2
(710)

# FIG. 8

RRC-configured TCI state (800)

| TCI #0 (805) | TCI #1 (810) | TCI #2 (815) | . . . | TCI #N (820) |

List of TCI state for CORESET (825)

| TCI #a (830) | TCI #b (835) | . . . | TCI #n (840) |

TCI indication via MAC CE
(845)

FIG. 9

| Serving cell ID (915) | | CORESET ID (920) | Octet 1 (900) |
|---|---|---|---|
| CORESET ID | TCI state ID (925) | | Octet 2 (905) |

FIG. 10

CORESET #1
(1000)

TCI state #1
(beam #1)
(1005)

Search space #1
(1010)

Search space #2
(1015)

Search space #3
(1020)

Time

FIG. 11

Period (1105)

Rate-matching resource (1102)

Frequency-domain allocation (1104)

Time-domain allocation (1103)

Frequency

Slot #0

Slot #1

Slot #2

Time

PDSCH (1101)

## FIG. 12A

1200

BWP #1 of
cell #1
(active)

CSS#1

CSS#2

USS#1

CORESET#1
(Ref: CSI-RS#1/Cell#1/BWP#1
with QCL-TypeD) — 1215

1205

BWP #1 of
cell #2
(active)

CSS#1

USS#2

USS#2

CORESET#1
(Ref: CSI-RS#1/Cell#1/BWP#1
with QCL-TypeD) — 1220

CORESET#2
(Ref: CSI-RS#1/Cell#2/BWP#1
with QCL-TypeD) — 1225

PDCCH monitoring occasion — 1210

# FIG. 12B

CORESET#1
(Ref: CSI-RS#1/Cell#1/BWP#1 with QCL-TypeD) — 1245

CORESET#2
(Ref: CSI-RS#1/Cell#1/BWP#1 with QCL-TypeD) — 1250

CORESET#1
(Ref: CSI-RS#1/Cell#2/BWP#1 with QCL-TypeD) — 1255

CORESET#2
(Ref: CSI-RS#2/Cell#2/BWP#1 with QCL-TypeD) — 1260

USS#1
USS#2
USS#3

1230
BWP #1 of cell #1 (active)

USS#1
USS#2
USS#3

1235
BWP #1 of cell #2 (active)

PDCCH monitoring occasion — 1240

# FIG. 13

## Single-cell LTE/NR (S00)

**gNB**

SDAP (S25)

PDCP (S30)

RLC (S35)

MAC (S40)

PHY (S45)

**UE**

PHY (S50)

MAC (S55)

RLC (S60)

PDCP (S65)

SDAP (S70)

## Carrier aggregation (S10)

**gNB**

SDAP

PDCP

RLC

MAC

PHY ... PHY

**UE**

RLC ... PHY

MAC

RLC

PDCP

SDAP

## Dual linkage (S20)

**MgNB**

SDAP

PDCP

RLC

MAC

PHY

**SgNB**

RLC

MAC

PHY

**UE**

PHY

MAC

RLC

PDCP

SDAP

PHY

MAC

RLC

EP 4 770 243 A1

FIG. 14

EP 4 770 243 A1

# FIG. 15

| | |
|---|---|
| Control information for TRP #0 | DCI #0 |
| Control information for TRP #1 | DCI #1 |
| ⋮ | ⋮ |
| Control information for TRP #(N-1) | DCI #(N-1) |

Case #1 [N100]

| | |
|---|---|
| Control information for TRP #0 | DCI #0 |
| Control information for TRP #1 | sDCI #0 |
| ⋮ | ⋮ |
| Control information for TRP #(N-1) | sDCI #(N-2) |

Case #2 [N105]

| | |
|---|---|
| Control information for TRP #0 | DCI |
| Control information for TRP #1 | sDCI |
| ⋮ | |
| Control information for TRP #(N-1) | |

Case #3 [N110]

| | |
|---|---|
| Control information for TRP #0 | |
| Control information for TRP #1 | Long DCI |
| ⋮ | ⋮ |
| Control information for TRP #(N-1) | |

Case #4 [N115]

EP 4 770 243 A1

FIG. 16

# FIG. 17

**- Maximum number of QCL-typeD = 4**

First QCL-typeD

Second QCL-typeD

Third QCL-typeD

Fourth QCL-typeD

CORESETpoolindex 0

CORESETpoolindex 1

Link {
CSS1
CSS3

CORESET1 — CSI-RS1 (QCL-typeD) — First QCL-typeD for CSS1 to CSS6

CSS2
CSS4

CORESET3 — CSI-RS1 (QCL-typeD) — Second QCL-typeD for CSS2 and CSS4

CSS5
CSS6

CORESET5 — CSI-RS1 (QCL-typeD)

Link {
CSS7
CSS9

CORESET2 — CSI-RS3 (QCL-typeD) — Third QCL-typeD for CSS7 to CSS9

CSS8

CORESET4 — CSI-RS4 (QCL-typeD) — Fourth QCL-typeD for CSS8

EP 4 770 243 A1

FIG. 18A

– Maximum number of QCL-typeD = 2

| | | | | |
|---|---|---|---|---|
| Link | CSS1 CSS3 | CORESET1 (First QCL-typeD) | CSI-RS1 (QCL-typeD) | First QCL-typeD for CSS1 to CSS6 |
| Link | CSS2 CSS4 | CORESET3 (Second QCL-typeD) | CSI-RS1 (QCL-typeD) | Second QCL-typeD for CSS2 and CSS4 |
| | CSS5 CSS6 | CORESET5 (Not monitored) | CSI-RS1 (QCL-typeD) | |
| Link | CSS7 CSS9 | CORESET2 | CSI-RS4 (QCL-typeD) | Third QCL-typeD for CSS7 to CSS9 |
| | CSS8 | CORESET4 | CSI-RS5 (QCL-typeD) | |

Legend:
- First QCL-typeD
- Second QCL-typeD
- Not monitored
- CORESETpoolindex 0
- CORESETpoolindex 1

# FIG. 18B

EP 4 770 243 A1

− Maximum number of QCL-typeD = 2

Legend:
- First QCL-typeD
- Second QCL-typeD
- Not monitored
- CORESETpoolindex 0
- CORESETpoolindex 1

**CORESETpoolindex 0:**

Link {
- CSS1
- CSS3

CORESET1 — CSI-RS1 (QCL-typeD) — First QCL-typeD for CSS1 to CSS6

Link {
- CSS2
- CSS4

CORESET3 — CSI-RS2 (QCL-typeD) — Second QCL-typeD for CSS2 and CSS4

- CSS5
- CSS6

CORESET5 — CSI-RS1 (QCL-typeD)

**CORESETpoolindex 1:**

Link {
- CSS7
- CSS9

CORESET2 — CSI-RS2 (QCL-typeD) — Second QCL-typeD for CSS7 to CSS9

- CSS8

CORESET4 — CSI-RS3 (QCL-typeD)

# FIG. 19

- Maximum number of QCL-typeD = 3

Legend:
- First QCL-typeD
- Second QCL-typeD
- Third QCL-typeD
- Not monitored
- CORESETpoolindex 0
- CORESETpoolindex 1

Link { CSS1, CSS3 } — CORESET1 — CSI-RS1 (QCL-typeD) — First QCL-typeD for CSS1 to CSS6

{ CSS2, CSS4 } — CORESET3 — CSI-RS2 (QCL-typeD) — Second QCL-typeD for CSS2 and CSS4

CSS5, CSS6 — CORESET5 — CSI-RS1 (QCL-typeD)

Link { CSS7, CSS9 } — CORESET2 — CSI-RS3 (QCL-typeD) — Third QCL-typeD for CSS7 to CSS9

{ CSS8 } — CORESET4 — CSI-RS4 (QCL-typeD)

EP 4 770 243 A1

**FIG. 20**

- Maximum number of QCL-typeD = 3

# FIG. 21

– Maximum number of QCL-typeD = 3

First QCL-typeD

Second QCL-typeD

Third QCL-typeD

Not monitored

CORESETpoolindex 0

CORESETpoolindex 1

Link { CSS1, CSS3 } — CORESET1 — CSI-RS1 (QCL-typeD) — Third QCL-typeD for CSS1 and CSS3

CSS2, CSS4 — CORESET3 — CSI-RS2 (QCL-typeD)

CSS5, CSS6 — CORESET5 — CSI-RS3 (QCL-typeD)

Link { CSS7, CSS9 } — CORESET2 — CSI-RS4 (QCL-typeD) — First QCL-typeD for CSS7 to CSS9

CSS8 — CORESET4 — CSI-RS5 (QCL-typeD) — Second QCL-typeD for CSS8

EP 4 770 243 A1

# FIG. 22

```
            ┌─────────────┐
            │    Start    │
            └─────────────┘
                   │
                   ▼
┌─────────────────────────────────────────────────┐
│  Report UE capability related to PDCCH repetition │      2210
│  transmission                                     │ ~
│  (report UE capability related to QCL during      │
│  reception of PDCCH (repetition))                 │
└─────────────────────────────────────────────────┘
                   │
                   ▼
┌─────────────────────────────────────────────────┐
│      Receive configuration information for PDCCH  │
│                                                   │
│  - Receive control resource set and search space  │
│    configuration information,                     │
│    repetition transmission method, repetition     │
│    transmission number,                           │
│    repetition transmission interval, repetition   │
│    transmission period,                           │
│    PDCCH monitoring occasion assuming repetition  │      2220
│    transmission,                                  │ ~
│  control resource set and search space configured │
│  with repetition transmission,                    │
│  maximum number of receivable different QCL-typeDs │
│  or maximum number of                             │
│  receivable control resource sets, priority       │
│  determination method,                            │
│  aggregation level, PDCCH candidate set, frequency │
│  resource,                                        │
│  connected SS resource, and the like              │
└─────────────────────────────────────────────────┘
                   │
                   ▼
┌─────────────────────────────────────────────────┐
│  Identify whether multiple control resource sets  │
│  overlapping in time exist in                     │      2230
│  specific PDCCH monitoring interval, identify     │ ~
│  monitoring interval based on                     │
│  configuration information, and determine         │
│  reception method                                 │
└─────────────────────────────────────────────────┘
```

FIG. 23

Receive higher layer signaling — 2310

Identify CORESET pool index — 2320

Identify CORESET — 2330

Monitor PDCCH — 2340

FIG. 24

```
┌─────────────────────────────────┐
│                                 │
│  Transmit higher layer signaling│ ⌐ 2410
│                                 │
└─────────────────────────────────┘
                │
                ▼
┌─────────────────────────────────┐
│                                 │
│         Transmit PDCCH          │ ⌐ 2420
│                                 │
└─────────────────────────────────┘
```

# FIG. 25

2505 ⌇ UE processor

UE receiver ⌇ 2500

UE transmitter ⌇ 2510

# FIG. 26

# EP 4 770 243 A1

<table>
<tr><th colspan="2">INTERNATIONAL SEARCH REPORT</th><th>International application No.</th></tr>
<tr><td colspan="2"></td><td>**PCT/KR2024/014184**</td></tr>
</table>

**A. CLASSIFICATION OF SUBJECT MATTER**

**H04W 72/23**(2023.01)i; **H04W 72/56**(2023.01)i; **H04W 8/24**(2009.01)i; **H04L 1/08**(2006.01)i; **H04L 5/00**(2006.01)i; **H04W 24/08**(2009.01)i; **H04B 7/06**(2006.01)i

According to International Patent Classification (IPC) or to both national classification and IPC

**B. FIELDS SEARCHED**

Minimum documentation searched (classification system followed by classification symbols)

H04W 72/23(2023.01); H04L 5/00(2006.01); H04W 72/04(2009.01); H04W 72/06(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PDCCH repetition configuration, CORESET configuration, CORESET pool index, QCL type D priority, max number of QCL type D, PDCCH, reception

**C. DOCUMENTS CONSIDERED TO BE RELEVANT**

| Category* | Citation of document, with indication, where appropriate, of the relevant passages | Relevant to claim No. |
|---|---|---|
| Y | KR 10-2022-0128247 A (SAMSUNG ELECTRONICS CO., LTD.) 20 September 2022 (2022-09-20)<br>See paragraphs [0553]-[0769]; and figures 21-23. | 1,8-9,13-15 |
| A | | 2-7,10-12 |
| Y | QUALCOMM INCORPORATED. Rel-18 TEI proposals. R1-2307958. 3GPP TSG RAN WG1 Meeting #114. Toulouse, France. 11 August 2023.<br>See sections 2-2.2. | 1,8-9,13-15 |
| A | MODERATOR (NTT DOCOMO, INC.). Summary #3 on Rel-18 TEIs. R1-2308553. 3GPP TSG RAN WG1 Meeting #114. Toulouse, France. 25 August 2023.<br>See section 2.3. | 1-15 |
| A | US 2023-0042071 A1 (NOKIA TECHNOLOGIES OY) 09 February 2023 (2023-02-09)<br>See paragraphs [0151]-[0152]; and figure 5. | 1-15 |
| A | US 2022-0174681 A1 (HUAWEI TECHNOLOGIES CO., LTD.) 02 June 2022 (2022-06-02)<br>See paragraphs [0130]-[0167]; and figures 4-5. | 1-15 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 December 2024** | **24 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/014184**

| Patent document cited in search report | | | Publication date (day/month/year) | Patent family member(s) | | | Publication date (day/month/year) |
|---|---|---|---|---|---|---|---|
| KR | 10-2022-0128247 | A | 20 September 2022 | CN | 117016035 | A | 07 November 2023 |
| | | | | EP | 4289211 | A1 | 13 December 2023 |
| | | | | US | 2022-0295457 | A1 | 15 September 2022 |
| | | | | WO | 2022-191672 | A1 | 15 September 2022 |
| US | 2023-0042071 | A1 | 09 February 2023 | AR | 126712 | A1 | 08 November 2023 |
| | | | | CN | 115942382 | A | 07 April 2023 |
| | | | | EP | 4381663 | A1 | 12 June 2024 |
| | | | | JP | 2024-528267 | A | 26 July 2024 |
| | | | | KR | 10-2024-0045257 | A | 05 April 2024 |
| | | | | TW | 202312759 | A | 16 March 2023 |
| | | | | WO | 2023-011869 | A1 | 09 February 2023 |
| US | 2022-0174681 | A1 | 02 June 2022 | CN | 112399584 | A | 23 February 2021 |
| | | | | CN | 112399584 | B | 19 August 2022 |
| | | | | EP | 4013156 | A1 | 15 June 2022 |
| | | | | US | 12063679 | B2 | 13 August 2024 |
| | | | | WO | 2021-031666 | A1 | 25 February 2021 |

Form PCT/ISA/210 (patent family annex) (July 2022)